# EUROPEAN PATENT APPLICATION

(11) **EP 4 845 088 A1**
(43) Date of publication of application: **25.11.2026**
(21) Application number: 25744496.8
(22) Date of filing: 15.01.2025
(51) Int. Cl.: H04L 9/00

(54) **DATA PROCESSING METHOD AND APPARATUS**

(30) Priority: 23.01.2024 CN 202410098988
(71) Applicant: Huawei Technologies Co., Ltd., Shenzhen, Guangdong 518129 (CN); Institute of Information Engineering, Chinese Academy of Sciences, Beijing 100084 (CN)
(72) Inventor: LU, Xianhui, Beijing 100084 (CN); LIU, Ying, Beijing 100084 (CN); WANG, Wenhui, Shenzhen, Guangdong 518129 (CN); LIU, Fei, Shenzhen, Guangdong 518129 (CN)
(74) Representative: Körber, Martin Hans
(86) International application number: PCT/CN2025/072569
(87) International publication number: WO 2025/157054

(57) **Abstract**

Embodiments of this application provide a data processing method and apparatus. The method includes: A first apparatus determines a ciphertext modulus of homomorphic encryption, where the ciphertext modulus is a prime number obtained by accumulating, over *n* terms, products of different powers of 2 and coefficients, and *n* is an integer greater than or equal to 2 and less than or equal to 5; and then performs homomorphic processing based on the ciphertext modulus, where the homomorphic processing may include at least one of homomorphic encryption, homomorphic decryption, and homomorphic computation. Generally, operations such as the homomorphic encryption, the homomorphic decryption, and the homomorphic computation each involve modulo processing or a modulo operation. In embodiments of this application, a modulus is designed, so that the modulo processing or the modulo operation is more convenient and efficient, thereby improving processing efficiency of the homomorphic encryption, the homomorphic decryption, the homomorphic computation, and the like that include the modulo processing/modulo operation.

## Description

### CROSS-REFERENCE TO RELATED APPLICATIONS

This application claims priority to Chinese Patent Application No. 202410098988.3, filed with the China National Intellectual Property Administration on January 23, 2024 and entitled "DATA PROCESSING METHOD AND APPARATUS", which is incorporated herein by reference in its entirety.

### TECHNICAL FIELD

This application relates to the field of communication technologies, and in particular, to a data processing method and apparatus.

### BACKGROUND

To protect user data privacy, the homomorphic encryption (homomorphic encryption, FHE) technology is proposed. Its basic principle lies in utilizing a special encryption algorithm such as to make a result obtained by performing a mathematical operation in a ciphertext state consistent with a result obtained by performing the same operation in a plaintext state. Homomorphic encryption consists of four processes: key generation, homomorphic encryption, homomorphic computation (or referred to as homomorphic evaluation), and homomorphic decryption. In the key generation, a key generation party generates a homomorphic encryption key, a homomorphic decryption key, and a homomorphic computation key. In the homomorphic encryption, an encryption party uses the homomorphic encryption key to encrypt a plaintext message into a ciphertext. In the homomorphic computation, a computation party performs homomorphic computation based on the ciphertext and the homomorphic computation key, to obtain a homomorphically computed ciphertext. In the homomorphic decryption, a decryption party restores the ciphertext into the plaintext message by using the homomorphic decryption key.

To support arbitrary encryption and/or multiplication operations on ciphertexts, fully homomorphic encryption (fully homomorphic encryption, FHE) is further proposed based on homomorphic encryption. The existing fully homomorphic encryption process injects a small random "noise" component to improve the security of ciphertexts. However, when homomorphic computation is performed on ciphertexts injected with "noise", the noise in homomorphically computed ciphertexts is accumulated and amplified as a quantity of times of homomorphic computation increases or homomorphic computation complexity increases. When the noise in the ciphertexts exceeds a critical value, the original ciphertexts are damaged or even overwritten, resulting in a failure in homomorphic decryption. To resolve this problem, the FHE scheme introduces a bootstrapping (bootstrapping) process, through which a ciphertext with noise approaching or exceeding the critical value may be "refreshed" (processed) into a new ciphertext with very low noise.

When algorithms corresponding to the homomorphic encryption, the homomorphic computation (including the bootstrapping process), and the homomorphic decryption are implemented by a computer, not only operations such as addition and/or multiplication are involved, but also a modulo operation is involved. Computations like addition and multiplication are typically easy for a computer to execute, whereas the modulo operation is difficult to execute and has a very low computational efficiency. The efficiency of the modulo operation affects overall execution efficiency of homomorphic processing (such as the homomorphic encryption, the homomorphic computation, and the homomorphic decryption) in which the modulo operation resides. For example, a number theoretic transform (number theoretic transform, NTT)-based blind rotation processing method has been proposed currently to improve the execution efficiency of the bootstrapping process. However, the number theoretic transform NTT-based blind rotation processing includes NTT processing. In the NTT processing, to improve data correctness, it is required to frequently perform modulo operations on resultant data after multiplication, addition, and subtraction, which degrades the overall execution efficiency of the bootstrapping process.

### SUMMARY

This application provides a data processing method and apparatus. The method can effectively improve efficiency of homomorphic processing.

According to a first aspect, an embodiment of this application provides a data processing method. The method may include: A first apparatus determines a ciphertext modulus of homomorphic encryption, where the ciphertext modulus is a prime number obtained by accumulating, over *n* terms, products of different powers of 2 and coefficients, and *n* is an integer greater than or equal to 2 and less than or equal to 5; and then the first apparatus performs homomorphic processing based on the ciphertext modulus. The homomorphic processing may include but is not limited to at least one of homomorphic encryption, homomorphic decryption, and homomorphic computation.

In this embodiment of this application, if the first apparatus performs homomorphic encryption based on the ciphertext modulus, the first apparatus may be a homomorphic encryption party device, the first apparatus may be a component (for example, a module or a chip) corresponding to the homomorphic encryption party device, or the first apparatus may be an apparatus used in conjunction with the homomorphic encryption party device. If the first apparatus performs homomorphic decryption based on the ciphertext modulus, the first apparatus may be a homomorphic decryption party device, the first apparatus may be a component (for example, a module or a chip) corresponding to the homomorphic decryption party device, or the first apparatus may be an apparatus used in conjunction with the homomorphic decryption party device. If the first apparatus performs homomorphic computation (or homomorphic evaluation) based on the ciphertext modulus, the first apparatus may be a homomorphic computation party device, the first apparatus may be a component (a module, a chip, or the like) corresponding to the homomorphic computation party device, or the first apparatus may be an apparatus used in conjunction with the homomorphic computation party.

Generally, operations such as the homomorphic encryption, the homomorphic decryption, and the homomorphic computation each involve modulo processing or a modulo operation. Common modulo processing or a common modulo operation may be directly performing long division to obtain a result. However, when a divisor and a dividend of a modulo operation are large, it is obviously difficult to obtain a result through long division. In view of this, a modulus is designed in the solutions of this application. The modulus is a prime number obtained by accumulating, over *n* terms, products of different powers of 2 and coefficients. Based on such the modulus, the modulo processing or the modulo operation becomes more convenient and efficient, improving processing efficiency of the homomorphic encryption, the homomorphic decryption, the homomorphic computation, and the like that include the modulo processing/modulo operation.

In a possible implementation, the ciphertext modulus may satisfy the following form: $Q = {a}_{1} ∗ {2}^{{k}_{1}} + ⋯ + {a}_{i} ∗ {2}^{{k}_{i}} + {a}_{n} ∗ {2}^{{k}_{n}}$

*Q* represents the ciphertext modulus, exponents *kᵢ* of different powers of 2 in first *n-*1 terms are integers greater than 0 and less than or equal to m (m ≥ *k*₁ *> ··· kᵢ > k*_{*n-*1} > 0), an exponent *kₙ* of a power of 2 in an n^{th} term is equal to 0 (*kₙ* = 0), m represents a bit width of the ciphertext modulus Q, the coefficient *aᵢ* is +1 or -1, and *i* is an integer greater than or equal to 1 and less than or equal to *n.*

For example, when n is 2, the ciphertext modulus satisfies the following form: 2^{*k*1} ± 2⁰, and *k*₁ is an integer greater than 0 and less than or equal to m; or when *n* is 3, the ciphertext modulus satisfies the following form: 2^{*k*1} ± 2^{*k*2} ± 2⁰, and both *k*₁ and *k*₂ are integers greater than 0 and less than or equal to m.

In a possible implementation, the homomorphic encryption, the homomorphic decryption, and the homomorphic computation each include modulo processing; and that the first apparatus performs homomorphic processing based on the ciphertext modulus may include: performing modulo processing based on the ciphertext modulus, where the modulo processing includes shift processing and/or logical operation processing, a quantity of bits in the shift processing is related to exponents of *n* powers of 2 in the ciphertext modulus, and a quantity of times of the logical operation processing is related to a value of n.

In a possible implementation, the method may further include: The first apparatus performs number theoretic transform NTT based on the modulo processing.

In a possible implementation, one NTT includes M butterfly operations, and M is an integer greater than or equal to 3; and that the first apparatus performs number theoretic transform NTT based on the modulo processing may specifically include: performing the modulo processing once after every three butterfly operations; and performing a modulo operation on each multiplication result in each butterfly operation by using a modular exponentiation algorithm.

According to a second aspect, an embodiment of this application further provides a data processing method. The method may include: A first apparatus determines a ciphertext modulus of homomorphic encryption, where the ciphertext modulus is a composite number obtained as a product of *d* different prime numbers, each prime number is obtained by accumulating, over *n* terms, products of different powers of 2 and coefficients, *n* is an integer greater than or equal to 2 and less than or equal to 5, and d is an integer greater than 1; and performs homomorphic processing based on the ciphertext modulus. In this embodiment of this application, the homomorphic processing may include but is not limited to at least one of homomorphic encryption, homomorphic decryption, and homomorphic computation.

In this embodiment of this application, if the first apparatus performs homomorphic encryption based on the ciphertext modulus, the first apparatus may be a homomorphic encryption party device, the first apparatus may be a component (for example, a module or a chip) corresponding to the homomorphic encryption party device, or the first apparatus may be an apparatus used in conjunction with the homomorphic encryption party device. If the first apparatus performs homomorphic decryption based on the ciphertext modulus, the first apparatus may be a homomorphic decryption party device, the first apparatus may be a component (for example, a module or a chip) corresponding to the homomorphic decryption party device, or the first apparatus may be an apparatus used in conjunction with the homomorphic decryption party device. If the first apparatus performs homomorphic computation (or homomorphic evaluation) based on the ciphertext modulus, the first apparatus may be a homomorphic computation party device, the first apparatus may be a component (a module, a chip, or the like) corresponding to the homomorphic computation party device, or the first apparatus may be an apparatus used in conjunction with the homomorphic computation party.

Generally, operations such as the homomorphic encryption, the homomorphic decryption, and the homomorphic computation each involve modulo processing or a modulo operation. Common modulo processing or a common modulo operation may be directly performing long division to obtain a result. However, when a divisor and a dividend of the modulo operation are large, it is obviously difficult to obtain a result through long division. In view of this, a modulus is designed in the solutions of this application. The modulus is a composite number obtained as a product of the *d* different prime numbers, and each prime number is obtained by accumulating products of *n* different powers of 2 and coefficients, where *n* is an integer greater than or equal to 2 and less than or equal to 5. In application, a modulus of the composite number may be first decomposed to obtain moduli of the d different prime numbers, and then the modulo processing/modulo operation is performed based on the moduli of the *d* different prime numbers. Similar to the foregoing method, modular efficiency is higher, thereby improving processing efficiency of the homomorphic encryption, the homomorphic decryption, the homomorphic computation, and the like that include the modulo processing/modulo operation.

In a possible implementation, the ciphertext modulus may satisfy the following form: $Q = {\prod }_{j = 1}^{d} {Q}_{j}$

*Q* represents the ciphertext modulus, *d* represents a quantity of prime numbers Qⱼ multiplied to obtain the ciphertext modulus, and the prime number *Qⱼ* satisfies the following form: ${Q}_{j} = {a}_{j 1} ∗ {2}^{{k}_{j 1}} + ⋯ + {a}_{ji} ∗ {2}^{{k}_{ji}} + {a}_{jn} ∗ {2}^{{k}_{jn}}$

An exponent *kⱼᵢ* of a power of 2 in the prime number *Qⱼ* is an integer greater than 0 and less than or equal to *mⱼ* (*mⱼ* ≥ *k*_{*j*1} *>* ··· *kⱼᵢ > k*_{*j*(*n-*1)} *> kⱼₙ =* 0), *mⱼ* represents a bit width of *Qⱼ,* and a coefficient *aᵢ* is +1 or -1.

In a possible implementation, when the first apparatus performs homomorphic encryption based on a ciphertext modulus, the method includes: performing homomorphic encryption on a 2^{nd} ciphertext component of an initial input ciphertext based on the ciphertext modulus, to obtain a first ciphertext, where the first ciphertext is an RLWE ciphertext, the initial input ciphertext includes a first ciphertext component and the second ciphertext component, the first ciphertext component includes N items, and N is an integer greater than 1; and performing blind rotation processing on the first ciphertext based on optimized number theoretic transform NTT processing and a decomposition method, to obtain a second ciphertext.

For example, the initial input ciphertext is represented as $c = \left(a, b\right) ∈ {LWE}_{s , q}^{n + 1} \left(m\right)$*,* and the 2^{nd} ciphertext component of the initial input ciphertext is represented as -*b*. The first ciphertext is represented as ${RLWE}_{sk , Q}^{N} \left({X}^{- b}\right)$, and the second ciphertext is represented as ${RLWE}_{sk , Q}^{N} \left({X}^{- b + {\sum }_{i = 0}^{n - 1} {a}_{i} ⋅ {s}_{i}}\right)$*.*

In this embodiment of this application, that the first apparatus performs blind rotation processing on the first ciphertext based on the optimized number theoretic transform NTT processing and the decomposition algorithm, to obtain the second ciphertext may include but is not limited to the following implementations:

**Implementation 1:** The first apparatus iteratively performs N blind rotation sub-operations based on the optimized number theoretic transform NTT processing, the decomposition method, and the first ciphertext, to obtain the second ciphertext, where N is an integer greater than 1, and each blind rotation sub-operation is performed based on a result or an output ciphertext of a previous blind rotation sub-operation.

An i^{th} blind rotation sub-operation is performed, where i ∈ [1, N], and that the i^{th} blind rotation sub-operation is associated with or corresponds to an i^{th} item *aᵢ* of the first ciphertext component of the initial input ciphertext and an i^{th} key component *sᵢ* of the initial input ciphertext may include the following:

First, a current ciphertext is decomposed based on the decomposition method to obtain *d* third ciphertexts, where moduli of the *d* third ciphertexts are in one-to-one correspondence with the *d* different prime numbers, a *j*^{th} third ciphertext includes a ciphertext component obtained through decomposition based on a modulus *Qⱼ* and a ciphertext component obtained through decomposition based on another modulus *Qₖ, Qₖ* ≠ *Qⱼ, j, k* ∈ *[1, d],* and the current ciphertext is the initial input ciphertext (namely, the first ciphertext) or an output ciphertext of a previous blind rotation sub-operation.

Then, the *d* third ciphertexts are used as initial values of *d* accumulators; and optimized number theoretic transform NTT processing is separately performed on the initial values of the *d* accumulators to obtain transfer values of the *d* accumulators, where the optimized number theoretic transform NTT includes modulo processing, and the modulo processing may include shift processing and/or logical operation processing, where for the modulo processing included in the NTT processing on an initial value of a *j*^{th} accumulator, a quantity of bits shifted in the shift processing is related to exponents of *n* powers of 2 in a corresponding *j*^{th} prime modulus *Qⱼ,* and a quantity of times of the logical operation processing is related to a value of the terms n of the powers of 2 in the *j*^{th} prime modulus *Qⱼ.*

Corresponding external product and accumulation processing are separately performed based on the transfer values of the *d* accumulators, to obtain external product values of the d accumulators.

Further, INTT processing is separately performed on the external product values of the *d* accumulators, to obtain updated values of the *d* accumulators.

The updated values of the *d* accumulators are processed through inverse transform in the decomposition method, to obtain an output ciphertext, where the output ciphertext is used for a next blind rotation sub-operation.

After the N blind rotation sub-operations are performed, an output ciphertext of a last blind rotation sub-operation is used as the second ciphertext.

For example, for Implementation 1, that the first apparatus iteratively performs the N blind rotation sub-operations based on the optimized number theoretic transform NTT processing, the decomposition method, and the first ciphertext, to obtain the second ciphertext includes the following steps:
Step 1: Decompose the first ciphertext based on the decomposition method, to obtain the *d* third ciphertexts, where the moduli of the d third ciphertexts are in one-to-one correspondence with the *d* prime numbers. The *j*^{th} third ciphertext includes the ciphertext component obtained through decomposition based on the modulus *Qⱼ* and the ciphertext component obtained through decomposition based on the another modulus *Qₖ* · *Qₖ # Qⱼ,* and *j, kε*[1, *d*] (where *j and k* are integers, and *j and k* range from 1 to d, including 1 and *d).*
   For example, the decomposition method may be residue number system RNS decomposition, digit decomposition, gadget decomposition, or the like.
Step 2: Separately perform optimized number theoretic transform NTT processing on the d third ciphertexts, to obtain d transformed fourth ciphertexts.
   In this embodiment of this application, the optimized number theoretic transform NTT processing includes modulo processing, and the modulo processing may include shift processing and/or logical operation processing, where for the modulo processing included in the NTT processing on the *j*^{th} third ciphertext, a quantity of bits shifted in the shift processing is related to exponents of *n* powers of 2 in a corresponding *j*^{th} prime modulus *Qⱼ*, and a quantity of times of the logical operation processing is related to a value of the terms *n* of the powers of 2 in the *j*^{th} prime modulus *Qⱼ*.
Step 3: Separately perform corresponding processing such as external product and accumulation based on the *d* transformed fourth ciphertexts, to obtain *d* fifth ciphertexts.
   In a possible implementation, the first apparatus obtains *d* first bootstrapping keys, where the *d* first bootstrapping keys each meet an RGSW ciphertext form; the d first bootstrapping keys are key components corresponding to *d* bootstrapping keys; and moduli of the d bootstrapping ciphertexts are in one-to-one correspondence with the *d* different prime numbers. When step 3 is performed, the method may include: performing external product and accumulation processing based on the *d* transformed fourth ciphertexts and the *d* first bootstrapping keys, to obtain the d fifth ciphertexts.
Step 4: Separately perform inverse number theoretic transform INTT processing on the *d* fifth ciphertexts, to obtain *d* sixth ciphertexts.
Step 5: Process the *d* sixth ciphertexts through inverse transform (for example, ICRT) in the decomposition method, to obtain a seventh ciphertext.
   Step 1 to step 5 may be used as a procedure of one blind rotation sub-operation (which may be referred to as an *i*^{th} blind rotation sub-operation, where i=1). If the initial input ciphertext is represented as $c , c = \left(a, b\right) ∈ {LWE}_{s , q}^{n + 1} \left(m\right)$*,* the *i*^{th} blind rotation sub-operation is associated with or corresponds to the i^{th} item *aᵢ* of the first ciphertext component *a* of the initial input ciphertext and the i^{th} key component *sᵢ* of the initial input ciphertext.
Step 6: Use the seventh ciphertext as a new input ciphertext (equivalent to the first ciphertext) of step 1 in a next blind rotation sub-operation; and iteratively perform steps 1 to 5 N-1 times, where N is an integer greater than 1. A seventh ciphertext obtained in step 5 of a last blind rotation sub-operation (or referred to as an *i*^{th} blind rotation sub-operation, where i=N) is used as the second ciphertext.

**Implementation** 2: The first apparatus decomposes the current first ciphertext based on the decomposition method, to obtain d third ciphertexts, where moduli of the d third ciphertexts are in one-to-one correspondence with d different prime numbers, a *j*^{th} third ciphertext includes a ciphertext component obtained through decomposition based on a modulus *Qⱼ* and a ciphertext component obtained through decomposition based on another modulus *Qₖ, Qₖ* # *Qⱼ*, and *j, k E [1, d] ;* separately perform optimized NTT processing on the *d* third ciphertexts, to obtain *d* fourth ciphertexts; use the *d* fourth ciphertexts as initial values of *d* accumulators; perform N-1 times of CMUX gate processing and ciphertext combination processing based on the initial values of the *d* accumulators, to obtain updated values of the *d* accumulators, where N is an integer greater than 1, and each time of CMUX gate processing and ciphertext combination processing is performed based on a result or an output ciphertext of a previous time of CMUX gate processing and ciphertext combination processing; perform both CMUX gate processing and inverse number theoretic transform INTT processing once on each of the updated values of the *d* accumulators, to obtain *d* target ciphertexts; and finally, obtain the second ciphertext based on the *d* target ciphertexts according to an inverse method of the decomposition method.

In a possible implementation, that the first apparatus performs N-1 times of CMUX gate processing and ciphertext combination processing based on the initial values of the *d* accumulators, to obtain the updated values of the d accumulators includes:
performing an i^{th} time of CMUX gate processing and ciphertext combination processing, where the i^{th} time of CMUX gate processing and ciphertext combination processing is associated with or corresponds to an i^{th} item *aᵢ* of the first ciphertext component of the initial input ciphertext and an i^{th} key component *sᵢ* of the initial input ciphertext, where i ∈ [1, N - 1], and may include the following:
separately performing corresponding external product and accumulation processing based on the current initial values of the d accumulators, to obtain external product values of the d accumulators; and
determining *d* combination ciphertexts based on the current external product values of the *d* accumulators, where determining a j^{th} combination ciphertext based on an external product value of a j^{th} accumulator (any one of the *d* accumulators) includes: re-permuting and combining the external product value of the j^{th} accumulator and a ciphertext component of a *k*^{th} accumulator to obtain the j^{th} combination ciphertext, where the ciphertext component of the *k*^{th} accumulator is obtained by performing INTT processing under a modulus *Qₖ* and NTT processing under a modulus *Qⱼ* based on an external product value of the *k*^{th} accumulator, *k* ≠ *j,* and the *d* combination ciphertexts are used for a next time of CMUX gate processing and ciphertext combination processing.

For example, for Implementation 2, that the first apparatus performs blind rotation processing on the first ciphertext based on the optimized NTT processing and the decomposition algorithm, to obtain the second ciphertext may include the following steps:
Step 1: The first apparatus decomposes the first ciphertext based on the decomposition method, to obtain the d third ciphertexts, where the moduli of the *d* third ciphertexts are in one-to-one correspondence with the d different prime numbers. The *j*^{th} third ciphertext includes the ciphertext component obtained through decomposition based on the modulus *Qⱼ* and the ciphertext component obtained through decomposition based on the another modulus *Qₖ* ≠ *Qⱼ* other than *Qⱼ*, and *j, kε*[1*, d]* (where *j and k* are integers, and *j and k* range from 1 to *d,* including 1 and *d).*
Step 2: The first apparatus separately performs optimized number theoretic transform NTT processing on the d third ciphertexts, to obtain *d* transformed fourth ciphertexts.
   In this embodiment of this application, the optimized number theoretic transform NTT processing includes modulo processing, and the modulo processing may include shift processing and/or logical operation processing, where for the modulo processing included in the NTT processing on the *j*^{th} third ciphertext, a quantity of bits shifted in the shift processing is related to exponents of *n* powers of 2 in a corresponding *j*^{th} prime modulus *Qⱼ*, and a quantity of times of the logical operation processing is related to a value of the terms *n* of the powers of 2 in the *j*^{th} prime modulus *Qⱼ*.
Step 3: The first apparatus separately performs corresponding processing such as external product and accumulation based on the *d* transformed fourth ciphertexts, to obtain *d* fifth ciphertexts (equivalent to the external product values of the *d* accumulators).
   In a possible implementation, the first apparatus obtains *d* first bootstrapping keys, where the *d* first bootstrapping keys each meet an RGSW ciphertext form; the *d* first bootstrapping keys are key components corresponding to *d* bootstrapping keys; and moduli of the *d* bootstrapping ciphertexts are in one-to-one correspondence with the *d* different prime numbers. When step 3 is performed, the method may include: performing external product and accumulation processing based on the *d* transformed fourth ciphertexts and the *d* first bootstrapping keys, to obtain the *d* fifth ciphertexts.
Step 4: The first apparatus obtains d corresponding sixth ciphertexts (equivalent to the d combination ciphertexts) based on the d fifth ciphertexts (equivalent to the external product values of the d accumulators).

In a possible implementation, in step 4, obtaining a corresponding *j*^{th} sixth ciphertext for a *j*^{th} fifth ciphertext may include: performing, based on the *k (k* ≠ *j)* fifth ciphertext, INTT under the modulus *Qₖ* and NTT under the modulus *Qⱼ,* to obtain a corresponding first ciphertext component; and re-permuting and combining the *j*^{th} fifth ciphertext and the first ciphertext component, to obtain the *j*^{th} sixth ciphertext.

Further, the *d* sixth ciphertexts are used as new input ciphertexts (equivalent to the fourth ciphertexts in step 3), and steps 3 and 4 above are iteratively performed N-2 times, to obtain the updated values of the *d* accumulators, where N is an integer greater than 1.

Step 5: Perform both CMUX gate processing and inverse number theoretic transform INTT processing once on each of the updated values of the *d* accumulators, to obtain the *d* target ciphertexts.

Step 6: The first apparatus obtains the second ciphertext based on the d target ciphertexts through inverse transform (for example, ICRT) in the decomposition method.

Compared with Implementation 1, in Implementation 2, the sixth ciphertexts are obtained without performing a complete decomposition operation, but the fifth ciphertexts with the modulus *Qⱼ* in step 3 are directly stored, and a first ciphertext component corresponding to the another modulus and the fifth ciphertexts are re-permuted and combined, to obtain the corresponding sixth ciphertexts. Therefore, for the d sixth ciphertexts, d * 2 times of NTT or INTT computation may be reduced in total. In a process of obtaining the first ciphertext component, two or more consecutive NTT or INTT transforms may alternatively be implemented by using a combined single function.

According to a third aspect, this application provides a data processing apparatus. The apparatus can implement a function in the first aspect. For example, the data processing apparatus includes a corresponding module, unit, or means (means) for performing an operation in the first aspect. The module, unit, or means may be implemented by software, or implemented by hardware, or implemented by hardware executing corresponding software.

In a possible design, the data processing apparatus includes a communication unit and a processing unit. The communication unit may be configured to send and receive data and/or information, to implement communication between the data processing apparatus and another apparatus. The processing unit may be configured to perform some internal operations of the communication apparatus. Functions performed by the processing unit and the communication unit may correspond to the operations in the first aspect.

According to a fourth aspect, this application provides a data processing apparatus. The apparatus can implement a function in the first aspect. For example, the data processing apparatus includes a corresponding module, unit, or means (means) for performing an operation in the second aspect. The module, unit, or means may be implemented by software, or implemented by hardware, or implemented by hardware executing corresponding software.

In a possible design, the data processing apparatus includes a communication unit and a processing unit. The communication unit may be configured to send and receive data and/or information, to implement communication between the data processing apparatus and another apparatus. The processing unit may be configured to perform some internal operations of the communication apparatus. Functions performed by the processing unit and the communication unit may correspond to the operations in the second aspect.

According to a fifth aspect, an embodiment of this application provides a data processing apparatus. The apparatus includes at least one processor and a communication interface. The communication interface is configured to communicate with another apparatus. The processor is configured to run a group of programs, to cause the data processing apparatus to implement the method provided in the first aspect or any possible implementation of the first aspect.

According to a sixth aspect, an embodiment of this application provides a data processing apparatus. The apparatus includes at least one processor and a communication interface. The communication interface is configured to communicate with another apparatus. The processor is configured to run a group of programs, to cause the data processing apparatus to implement the method provided in the second aspect or any possible implementation of the second aspect.

According to a seventh aspect, this application provides a computer-readable storage medium. The computer-readable storage medium stores computer-readable instructions; and when a computer reads and executes the computer-readable instructions, the computer is caused to perform the method provided in the first aspect or any possible implementation of the first aspect, or the computer is caused to perform the method provided in the second aspect or any possible implementation of the second aspect.

According to an eighth aspect, this application provides a computer program product. When a computer reads and executes the computer program product, the computer is caused to perform the method provided in the first aspect or any possible implementation of the first aspect, or the computer is caused to perform the method provided in the first aspect or any possible implementation of the first aspect.

According to a ninth aspect, this application provides a chip. The chip includes a processor, and the processor is coupled to a memory, and is configured to read and execute a software program stored in the memory, to implement the method provided in the first aspect or any possible implementation of the first aspect, or implement the method provided in the second aspect or any possible implementation of the second aspect

In a possible implementation, the chip may include the memory. Optionally, the processor and the memory may be integrated together.

In a possible implementation, the memory may be a memory outside the chip.

According to a tenth aspect, this application provides a communication system. The communication system includes at least one of a homomorphic encryption party, a homomorphic computation party, or a homomorphic decryption party. The homomorphic encryption party, the homomorphic computation party, or the homomorphic decryption party is configured to perform the method provided in the first aspect or any possible implementation of the first aspect, or the homomorphic encryption party, the homomorphic computation party, or the homomorphic decryption party is configured to perform the method provided in the second aspect or any possible implementation of the second aspect.

It should be noted that, for technical effect that can be achieved in the third aspect to the tenth aspect or any possible implementation of the third aspect to the tenth aspect, correspondingly refer to descriptions of technical effect that can be achieved in the first aspect and the second aspect or any possible implementation of the first aspect and the second aspect. Details are not described herein again.

### BRIEF DESCRIPTION OF DRAWINGS

FIG. 1 is a diagram of plaintext and ciphertext forms corresponding to LWE, RLWE, and RGSW;
FIG. 2A is a schematic flowchart of a sample extraction algorithm;
FIG. 2B is a diagram of a structure of sample extraction;
FIG. 3A is a diagram of a process in which a homomorphic key generation party generates keys;
FIG. 3B is a diagram of a process in which a homomorphic encryption party performs encryption;
FIG. 3C is a diagram of a process in which a homomorphic decryption party performs decryption;
FIG. 3D is a diagram of a process in which a homomorphic computation party performs homomorphic computation;
FIG. 3E is a diagram of homomorphic encryption;
FIG. 3F is a diagram of a bootstrapping process;
FIG. 4A is a diagram of a structure of functional bootstrapping;
FIG. 4B is a diagram of an entire blind rotation process;
FIG. 4C is a schematic flowchart of GINX blind rotation in a CMux Gate form;
FIG. 4D is a diagram of a GINX blind rotation algorithm based on gadget decomposition;
FIG. 4E is a schematic flowchart of a functional bootstrapping algorithm for TFHE;
FIG. 4F is a diagram of a Montgomery modulo algorithm;
FIG. 5 is a diagram of a communication system to which a method according to an embodiment of this application may be applied;
FIG. 6A is a schematic flowchart of a data processing method according to an embodiment of this application;
FIG. 6B is a schematic flowchart of another data processing method according to an embodiment of this application;
FIG. 7A is a schematic flowchart of an MV-FBS algorithm without sample extraction according to an embodiment of this application;
FIG. 7B is a schematic flowchart of an MV-FBS algorithm without sample extraction according to an embodiment of this application;
FIG. 8A is a schematic flowchart of a bootstrapping determining procedure for fully homomorphic encryption according to an embodiment of this application;
FIG. 8B is a schematic flowchart of a determining procedure for fully homomorphic encryption according to an embodiment of this application;
FIG. 8C is a diagram of a GINX blind rotation algorithm based on RNS decomposition according to an embodiment of this application;
FIG. 8D is a diagram of direct RNS decomposition and blind rotation processing according to an embodiment of this application;
FIG. 8E is a diagram of RNS decomposition and blind rotation processing without NTT and INTT according to an embodiment of this application;
FIG. 9 is a diagram of a homomorphic computation scenario to which a method according to an embodiment of this application may be applied;
FIG. 10 is a diagram of a structure of a data processing apparatus according to an embodiment of this application;
FIG. 11 is a diagram of a structure of another data processing apparatus according to an embodiment of this application; and
FIG. 12 is a diagram of a structure of a chip apparatus according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" means one, two, or more; and "and/or" describes an association relationship between associated objects, and indicates that three relationships may exist, for example, A and/or B may indicate a case in which only A exists, both A and B exist, and only B exists, where A and B may be singular or plural. The character "/" usually indicates an "or" relationship between the associated objects.

The terms "include", "contain", "have", and variants thereof in embodiments of this application all mean "include but are not limited to", unless otherwise specifically emphasized in another manner. The term like "example" or "for example" are used to represent giving an example, an illustration, or a description. Any embodiment or design scheme described with "example" or "for example" should not be explained as being more preferred or having more advantages than another embodiment or design scheme. The term like "example" or "for example" is used to present a related concept in a specific manner for ease of understanding.

"A plurality of" in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

This application provides a data processing method. To better understand the solutions in embodiments of this application, the following first describes symbols, algorithms, and related technical features in embodiments of this application. It should be noted that, these explanations are intended to make embodiments of this application easier to understand, but should not be construed as a limitation on the protection scope claimed in this application.

### I. Description of symbols in embodiments of this application

Vector: A lowercase bold letter represents a vector. For example, a vector **a** of n elements is described as **a** = (*a*₁, ··· , *aₙ*). **〈a, b〉** is an inner product of two vectors.

Matrix: An uppercase bold letter represents a matrix.

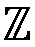 represents a set of integers.

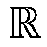 represents a set of real numbers. 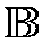 represents a binary set {0, 1}.${ℤ}_{q}$ represents a ring (ring) $ℤ / qℤ$*,* where a range of ${ℤ}_{q}$ is [-q/2, $\left.q/2\right) ∩ ℤ$. ${ℤ}_{q}$ represents a ciphertext modulus q.

r represents a real number, and $r ∈ ℝ$.

The symbols └ ┘, ┌ ┐, and └ ┐ respectively represent a rounding down floor function, a rounding down ceiling function, and a round round function.$R = {ℤ}_{N} \left[X\right] = ℤ \left[X\right] / \left({X}^{N}+1\right)$, representing a *2N*-th cyclotomic ring *(2N-th* cyclotomic ring), is an integer polynomial obtained by performing a modulo operation on *X^{N} +* 1, where N represents a power of 2.${R}_{Q} = {ℤ}_{Q} \left[X\right] / \left({X}^{N}+1\right)$ represents a quotient ring (quotient ring) with coefficients in ${ℤ}_{Q}$.${B}_{N} \left[X\right]$ represents a polynomial with binary coefficients in ${ℤ}_{N} \left[X\right]$*.*

A real torus (torus) $T = ℝ / ℤ$ is a set of real numbers modulo 1.${T}_{N} \left[X\right]$ represents a torus polynomial (torus polynomial), that is, $ℝ \left[X\right] / \left({X}^{N}+1\right) mod 1$ , where *N* represents a power of 2.

For the polynomial, m ∈ R, and a coefficient vector may be expressed as *ϕ*(*m*) *=* (*m*₀, ··· , *m*_{*N-*1})*.*

*x* ← *D* indicates that *x* is sampled based on distribution *D.*

For a random variable $a ∈ {ℤ}_{Q}$, Var(a) represents a variance of a, and stddev(a) represents a standard deviation of a.

For a vector $a ∈ {ℤ}^{n} , {\left‖a\right‖}_{2} = \sqrt{{\sum }_{i = 1}^{n} {\left|{a}_{i}\right|}^{2}}$ indicates that 2-norm (2-norm) of a polynomial is calculated using a coefficient vector.

Semicolon (semicolon): The semicolon indicates vertical concatenation of vectors or matrices, for example, **[A;B].**

### II. Description of algorithms in embodiments of this application

### 1. Decomposition technology

Gadget decomposition includes a plurality of methods such as digit decomposition (digit decomposition) and residue number system (residue number system, RNS) decomposition. Digit decomposition utilizes a radix to decompose a large number into a plurality of independent small numbers. RNS decomposition utilizes a Chinese remainder theorem (Chinese remainder theorem, CRT) technique to decompose a large modulus of a polynomial into a set of coprime integer moduli.

Several decomposition technologies in embodiments of this application are described below.

RNS decomposition (RNS Decomposition) technique:

RNS decomposition is a common technique in FHE for decomposing multi-precision integers. When a bit length of a modulus Q in a ring *R_{Q}* exceeds 64 bits, arithmetic operations on this ring cannot be performed using native types of most CPUs. To resolve this problem, the RNS decomposition technique may be used to decompose the modulus Q into several small coprime integers *Q*₁,*...,Q_{d},* and each *Qᵢ* may be stored using a 32-bit or 64-bit native integer.

RNS and NTT are usually used together to improve computational efficiency. Because NTT is essentially the CRT, this representation that utilizes RNS to store data in an NTT form is referred to as double CRT (Double CRT).

For a polynomial *a*(*x*) ∈ *R_{Q},* a coefficient vector of a result polynomial obtained through RNS decomposition is ${g}^{- 1} \left(a\right) = \left({a}_{1}, ⋯, {a}_{d}\right) ∈ {R}_{Q}^{d}$*.*

*aᵢ*(*x*) *= a*(*x*) *(mod Qᵢ*), where a coefficient vector *aᵢ* = (*a*_{*i*,0}, *a*_{*i,*1}*,*··*, **a***_{*i,N*-1}) , whose NTT form is represented as NTT*_{Qi}*(*aᵢ*). Therefore, for two polynomials *a*(*x*)*, b(x)* ∈ *R_{Q},* multiplication calculation represented using RNS decomposition may be expressed as: (NTT_{*Q*1}(*a*₁),···, NTT*_{Qd}*(*a_{d}*)) ⊙ (NTT_{*Q*1}(*b*₁),···, NTT*_{Qd}*(*b_{d}*)).

A result obtained through decomposition and calculation may be restored by using inverse CRT, so as to obtain a result on *R_{Q}.* For example, a gadget vector is $g = {Q}_{1}^{′} ⋅ {\hat{Q}}_{1} ⋯ {Q}_{d}^{′} ⋅ {\hat{Q}}_{d}$ *,* where ${Q}_{i}^{′} = Q / {Q}_{i} , {\hat{Q}}_{i} = {Q}_{i}^{′ - 1} mod {Q}_{i}$*, and i* = 1, ··· , *d.*

Digit decomposition (digit decomposition) technique:

Digit decomposition is usually used to decompose ciphertexts in FHE, to control noise in homomorphic multiplication. In the digital decomposition technique, three positive integers need to be considered: a ciphertext modulus Q, a decomposition base B, and a decomposition block quantity $d = \left⌈{log}_{B} Q\right⌉$*.* It is assumed that g represents a d-dimensional column vector as *g =* (*B*⁰, *B*¹,····, *B*^{*d-*1})*^{T}.*

Given an integer *a* ∈ *Z_{Q},* a decomposition function *g*⁻¹ may be used to decompose *a* into d terms in *Z_{B}.* For a decomposition function (decomposition function) *g*⁻¹ or *h*⁻¹ using B as a base, the decomposition function *g*⁻¹ or *h*⁻¹ is used to divide ciphertexts by the decomposition base one by one. For example, the decomposition function is represented by *g*⁻¹*,* and decomposition on *a* according to the decomposition function *g*⁻¹ satisfies the following Formula (1): ${g}^{- 1} \left(a\right) = \left({\left[a\right]}_{B},{\left[\frac{a}{B}\right]}_{B},…,{\left[\frac{a}{{B}^{d - 1}}\right]}_{B}\right) ∈ {Z}_{B}^{d}$ (1)

An expansion function (expansion function) h or *g* is used to multiply ciphertexts by a base one by one. For example, the expansion function is represented by g, and decomposition on *a* according to the expansion function g satisfies the following Formula (2): $g \left(a\right) = \left({\left[a\right]}_{Q},{\left[a⋅B\right]}_{Q},…,{\left[a⋅{B}^{d - 1}\right]}_{Q}\right) ∈ {Z}_{Q}^{d}$ (2)

*g*⁻¹(*a*) and *g*(*a*) satisfy 〈*g*⁻¹(*a*),*g*〉 *= a*(*mod Q).*

The decomposition function g⁻¹ is applied to each coefficient. Similarly, decomposition of an integer may be extended to decomposition of a polynomial. For example, for a polynomial *a*(*x*) ∈ *R_{Q}*, the decomposition function satisfies the following Formula (3):

*aᵢ* is an i^{th} coefficient of ***a**(x)*, _{└}^{┐} represents a rounding symbol, Σ represents a summation symbol, and mod represents a modulo operator. Then, the decomposition function g⁻¹ is used to decompose one polynomial in *R_{Q}* into d polynomials in *R_{B}.* Similarly, the polynomial may be restored by using *g*⁻¹ (***a***(*x*)) *· g = **a**(x).*

This decomposition may be used for an RLWE ciphertext (a,b), where $\left(a, b\right) ∈ {R}_{Q}^{2}$, and 〈*g*⁻¹(*a*), *g(b))* ≡ *a · b mod Q.*

It is assumed that ***I***₂ is a 2×2 identity matrix, and ⊗ represents a tensor product (tensor product). $G = {I}_{2} ⊗ g ∈ {R}_{Q}^{2 d \times 2}$ is a gadget matrix, which may be used for B-based digit decomposition to ensure ciphertext restoration after multiplication. A decomposition function of $\left(a, b\right) ∈ {R}_{Q}^{2}$ is given by Formula (4): ${g}^{- 1} \left(a, b\right) = {\sum }_{i = 0}^{N - 1} {g}^{- 1} \left({a}_{i}, {b}_{i}\right) ⋅ {X}^{i} ∈ {R}_{B}^{2 d}$ (4)

The function satisfies *g*⁻¹ (***a, b***) · *G =* (***a***, *b).* A ciphertext ct in a matrix form may be decomposed by row. Therefore, a decomposition function for $ct ∈ {R}_{Q}^{2 d \times 2} , {g}^{- 1} \left(ct\right) ∈ {R}_{B}^{2 d \times 2 d}$*.*

In an external product operation in existing technologies, a homomorphic message ciphertext (for example, an RLWE ciphertext) is decomposed into a small value through gadget decomposition, that is, *g*⁻¹(). Similarly, a gadget expansion function g() is correspondingly used for an expression structure of a bootstrapping key that conforms to an RGSW ciphertext form. In this way, during external product calculation, *g*() and *g*⁻¹ can be balanced off, which preserving correctness of a calculation result while reducing noise.

Approximate gadget decomposition (approximate gadget decomposition) technique:

An approximate factor (approximate factor) P needs to be introduced for approximate gadget decomposition (approximate gadget decomposition). P satisfies $P ⋅ {B}_{g}^{d} < Q$. Specifically, given a *l*-bit modulus Q, an approximate factor (approximate factor) P and a decomposition base (decomposition base) *B_{g}* that satisfy *l* = *log*₂ *P + d_{g}* · *log*₂ *B_{g}* may be selected. A decomposition block quantity is ${d}_{g} = \left⌊{log}_{{B}_{g}}Q\right⌋ + 1$. Correspondingly, a gadget vector is ${g}_{P} = \left({PB}_{g}^{0}, {PB}_{g}^{1}, ⋯, {PB}_{g}^{{d}_{g} - 1}\right) ∈ {Z}_{Q}^{{d}_{g}}$*.* For a polynomial *a* ∈ , a decomposition function therefor may be denoted as ${g}_{P}^{- 1}$, and ${g}_{P}^{- 1}$ satisfies the following Formula (5): ${g}_{P}^{- 1} \left(a\right) = \left({a}_{i},…,{a}_{{d}_{g} - 1}\right) = \left({\left[\left⌊\frac{a}{{PB}_{g}^{0}}\right⌋\right]}_{{B}_{g}},…,{\left[\left⌊\frac{a}{{PB}_{g}^{{d}_{g} - 1}}\right⌋\right]}_{{B}_{g}}\right) ϵ {R}_{{B}_{g}}^{{d}_{g}}$ (5)

Therefore, one polynomial *a* ∈ *R_{Q}* may be decomposed into *d_{g}* polynomials *a*₀,· · *, a*_{*dg*-1} by using a decomposition technology, and such the decomposition technology can minimize a decomposition error (decomposition error), that is, ${\left‖a-{\sum }_{i = 0}^{{d}_{g} - 1} {a}_{i} ⋅ P ⋅ {B}_{g}^{i}\right‖}_{∞}$.

For example, when approximate gadget decomposition is performed on an external product of the RLWE ciphertext and the RGSW ciphertext, a gadget matrix **G**_{P} may be represented as ${I}_{2} ⊗ {g}_{P}^{T} ∈ {Z}_{Q}^{2 {d}_{g} \times 2}$. An RGSW ciphertext of a message m is *RGSW*_{sk,Q(*m*)} *=* $\left(\begin{matrix}{ct}_{0} \\ ⋮ \\ {ct}_{2 {d}_{g - 1}}\end{matrix}\right) + m ⋅ \left(\begin{matrix}{g}_{P}^{T} & 0 \\ 0 & {g}_{P}^{T}\end{matrix}\right) ∈ {R}_{Q}^{2 {d}_{g} \times 2}$, where *ctᵢ* ∈ *RLWE_{sk,Q}*(*0*) is an RLWE ciphertext that is randomly sampled from *R_{Q}* and has a noisy term ${e}_{i}^{′}$. The external product of the RLWE ciphertext *ct =* (***a, b***) ∈ *RLWE_{sk,Q}*(***µ***) and the RGSW ciphertext *CT* ∈ *RGSW_{sk,Q}(m)* obtained through approximate gadget decomposition is given by the following Formula (6): $\begin{matrix}ct {′}_{P} = {g}_{P}^{- 1} \left({RLWE}_{sk , Q \left(μ\right)}\right) ⊙ {RGSW}_{sk , Q \left(m\right)} \\ = \left({g}_{P}^{- 1}\left(a\right),{g}_{P}^{- 1}\left(b\right)\right) ⊙ \left({RGSW}_{sk , Q}\left(0\right)+m⋅{G}_{P}\right) \\ = \left({g}_{P}^{- 1}\left(a\right),{g}_{P}^{- 1}\left(b\right)\right) ⋅ {RGSW}_{sk , Q} \left(0\right) + {RLWE}_{sk , Q} \left(m⋅sk⋅\left(a+ε\right)+m⋅\left(b+ε\right)\right) \\ = {RLWE}_{sk , Q} \left(0+{\sum }_{i = 0}^{{d}_{g} - 1} ct {′}_{i} e {′}_{i}\right) + {RLWE}_{sk , Q} \left(\begin{matrix}m ⋅ \left(b+a⋅sk\right) + m ⋅ ε + m ⋅ ε ⋅ \\ sk\end{matrix}\right) ; \\ = {RLWE}_{sk , Q} \left(m⋅μ+m⋅{e}_{ct}+m⋅ε+m⋅ε⋅sk+{\sum }_{i = 0}^{{d}_{g} - 1} ct {′}_{i} e {′}_{i}\right)\end{matrix}$ (6)

ε represents an approximate factor satisfying ${\left‖a-\left〈{g}_{P}^{- 1}\left(a\right)⋅{g}_{P}\right〉\right‖}_{∞} \leq P / 2$, and a plaintext message m ∈ {0,1}. The term ${ct}_{i}^{′}$ is an i^{th} result, obtained through approximate decomposition, of the RLWE ciphertext ct, ${e}_{i}^{′}$ is an error term in the RGSW ciphertext, and e*_{ct}* is an error term in the RLWE ciphertext. Therefore, an error of the external product obtained through approximate gadget decomposition is $Err \left(ct{′}_{P}\right) = {\sum }_{i = 0}^{{d}_{g} - 1} ct {′}_{i} e {′}_{i} + sk ⋅ ε + ε + {e}_{ct}$*.*

### 2. Homomorphic encryption in different ciphertext forms (ciphertext types)

There are usually a plurality of forms (types) of ciphertexts, for example, a learning with errors (learning with errors, LWE) ciphertext, a torus version of the learning with errors (torus version of the learning with errors, TLWE) ciphertext, a ring learning with errors assumption (ring learning with errors assumption, RLWE) ciphertext, a torus version of RLWE (Torus version of the ring-LWE problem, TRLWE) ciphertext, a ring version of GSW (Ring version of Gentry Sahai Water's, RGSW) ciphertext, and a torus version of RGSW (TRGSW) ciphertext. In embodiments of this application, the several ciphertext forms may be mutually converted, to respond to different compute tasks. The foregoing several ciphertext forms are correspondingly described below.

### (1) LWE

An LWE sample is represented as a vector $\left(a, b\right) ∈ {Z}_{q}^{n + 1} , b = \left〈a, s\right〉 + e mod q$*,* where a secret key (secret key) **s** is an ***n*-**dimensional vector, and may be sampled from key distribution *χ* (for example, Gaussian distribution); and $a ← {Z}_{q}^{n}$ is a uniform random *n-*dimensional vector, and is uniformly sampled from ${Z}_{q}^{n}$. An error (which may be equivalent to noise) e ← *χ_{δ}* is sampled from error distribution (for example, Gaussian distribution). Positive integers n and q respectively represent a vector dimension and a ciphertext modulus.

For example, an LWE ciphertext of the message m may be represented as ${LWE}_{s , q}^{n} \left(m\right) = \left(a, b\right) = \left(a,\left〈a, s\right〉+e+Δ m\right) ∈ {Z}_{q}^{n + 1}$, where △= q/t , and t represents a plaintext modulus. *b, m,* and e are 1-dimensional.

### (2) TLWE

The TLWE ciphertext is a torus version of the LWE, and may be represented as a ciphertext $\left(a, b\right) ∈ {T}^{n + 1}$. Specifically, *b* = 〈***a, s*〉** + m + e, where the vector *a* is uniformly sampled from ${T}^{n}$, the secret key s is uniformly sampled from B*ⁿ*, $m ∈ T$ is a plaintext message, and the error e is sampled from Gaussian distribution with a mean of 0 and a standard deviation σ.

### (3) RLWE

RLWE is a ring version (ring version) of the LWE in *R_{Q}.* A valid RLWE sample may be represented as $\left(a, b\right) ∈ {R}_{Q}^{2} , b = as + e mod Q$, *b = as + e mod* Q, where a secret key (secret key) s of the RLWE sample is sampled from key distribution *χ* (for example, Gaussian distribution), *a* is uniformly random in R_{Q}, and the error $e ← {χ}_{δ}^{N}$ is sampled from error distribution. (*a, b*) is equivalent to an RLWE ciphertext of a message 0. To simplify description, a polynomial dimension N of the RLWE is generally ignored.

Similar to the LWE sample, an RLWE ciphertext of the message m may be represented as ${RLWE}_{s , Q}^{N} \left(m\right) = \left(a, b\right) = \left(a,as+Δ m+e mod Q\right) ∈ {R}_{s , Q}^{2}$*.* △*= Q*/*t*, and *t* represents a plaintext modulus.

LWE encryption and RLWE encryption correspond to the following Formula (7) and Formula (8): ${LWE}_{s , q}^{n} \left(m\right) = \left(a,b=\left〈a, s\right〉+\left⌊\frac{q}{t}⋅m\right⌋+e\right) ∈ {ℤ}_{q}^{n + 1}$ (7) ${RLWE}_{s , Q}^{N} \left(m\right) = \left(a,b=as+\left⌊\frac{Q}{t}⋅m\right⌋+e\right) ∈ {R}_{Q}^{2}$ (8)

LWE decryption and RLWE decryption correspond to the following Formula (9) and Formula (10): ${LWE}_{s , q}^{- 1} \left(a, b\right) = {\left⌊\frac{t}{q}⋅{\left[b-\left〈a, s\right〉\right]}_{q}\right⌋}_{t}$ (9) ${RLWE}_{s , Q}^{- 1} \left(a, b\right) = {\left⌊\frac{t}{Q}⋅{\left[b-\left〈a, s\right〉\right]}_{Q}\right⌋}_{t}$ (10)

### (4) TRLWE

The TRLWE ciphertext is a torus version of the RLWE, and may be represented as $\left(a, b\right) ∈ {T}_{N} {\left[X\right]}^{k + 1}$*.* Specifically, b =< ***a, s** >* +m + e, where *a* is uniformly sampled from ${T}_{N} {\left[X\right]}^{k}$, the secret key s is uniformly sampled from ${B}_{N} {\left[X\right]}^{k} , m ∈ {T}_{N} \left[X\right]$ is a plaintext message polynomial, error $e ∈ {T}_{N} \left[X\right]$ is a polynomial with a random coefficient, and a random coefficient ${e}_{i} , \left({e}_{i}∈T\right)$ is sampled from Gaussian distribution with a mean of 0 and a standard deviation σ.

### (5) RGSW (or represented as RLWE')

An RGSW sample is a vector based on d RLWE samples, and may be represented as ${RGSW}_{s , Q}^{N} \left(m\right) ∈ {R}_{Q}^{2 d \times 2}$. Given a gadget vector ***v** =* (*v*₀, *v*₁, ··· , *v*_{*d*-1}), RLWE' represents a concept of gadget RLWE, which may be defined as the following Formula (11): ${RLWE}_{sk}^{′} \left(m\right) = \left({RLWE}_{sk}\left({v}_{0}⋅m\right), {RLWE}_{sk}\left({v}_{1}⋅m\right),⋯,{RLWE}_{sk}\left({v}_{d - 1}⋅m\right)\right)$ (11)

*sk* represents a secret key, and an RGSW ciphertext of a message ***m*** ∈ *R_{q}* may be expressed as the following Formula (12): ${RGSW}_{sk} \left(m\right) = \left({RLWE}_{sk}^{′}\left(sk⋅m\right),{RLWE}_{sk}^{′}\left(m\right)\right)$ (12)

Parameters of a same dimension and a same ciphertext module are omitted herein.

### (6) TRGSW

TRGSW is a torus version of RGSW, and a plaintext message *m* ∈ 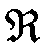 may be encrypted into a ciphertext $C = Z + m ⋅ {h}^{- 1} ∈ {M}_{\left(k+1\right) l , k + 1} \left({T}_{N}\left[X\right]\right)$*.* $Z ∈ {M}_{\left(k+1\right) l , k + 1} \left({T}_{N}\left[X\right]\right)$ is a matrix, each row of the matrix Z is a TRLWE ciphertext of a plaintext message 0 under a same secret key, and *h*⁻¹ is a gadget decomposition matrix used to control noise propagation.

Assuming that *k*=1, the TRGSW ciphertext $C ∈ {M}_{2 l , 2} \left({T}_{N}\left[X\right]\right)$ may be further expressed as the following Formula (13): $C = \left(\begin{matrix}{a}_{1} \left(x\right) & {b}_{1} \left(x\right) \\ {a}_{2} \left(x\right) & {b}_{2} \left(x\right) \\ ⋮ & ⋮ \\ {a}_{l} \left(x\right) & {b}_{l} \left(x\right) \\ {a}_{l + 1} \left(x\right) & {b}_{l + 1} \left(x\right) \\ ⋮ & ⋮ \\ {a}_{2 l} \left(x\right) & {b}_{2 l} \left(x\right)\end{matrix}\right) + m ⋅ \left(\begin{matrix}1 / {B}_{g} & 0 \\ 1 / {B}_{g}^{2} & 0 \\ ⋮ & ⋮ \\ 1 / {B}_{g}^{l} & 0 \\ 0 & 1 / {B}_{g} \\ ⋮ & ⋮ \\ 0 & 1 / {B}_{g}^{l}\end{matrix}\right)$ (13)

(*aᵢ(x), bᵢ(x)), 1* ≤ *i* ≤ 2ℓ represents the TRLWE ciphertext of the plaintext message 0 encrypted using the same secret key, B_{g} represents a gadget decomposition base, and ℓ represents a gadget decomposition length.

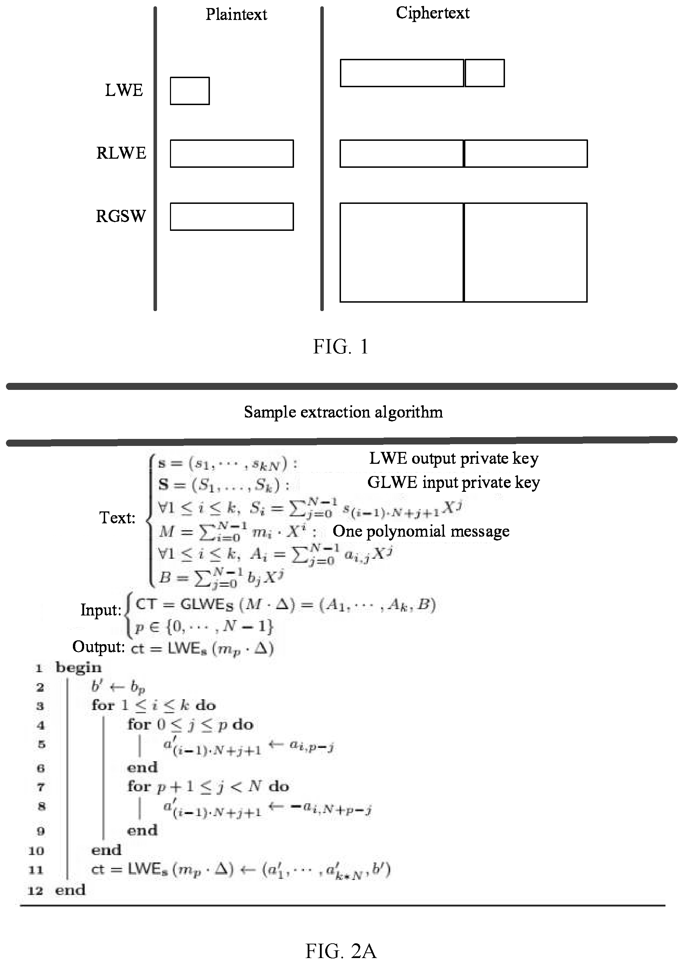

Different plaintext and ciphertext forms corresponding to the foregoing LWE, RLWE, and RGSW are shown in FIG. 1.

### 3. Product product

### (1) Gadget decomposition product (Gadget Product)

The gadget product means R × *RLWE'* → *RLWE,* defined as the following Formula (14): $\begin{matrix}t ⊙ {RLWE}_{sk}^{′} \left(m\right) = {\sum }_{i = 0}^{l - 1} {t}_{i} ⋅ {RLWE}_{sk} \left({v}_{i}⋅m\right) = {RLWE}_{sk} \left({\sum }_{i = 0}^{l - 1} {v}_{i} ⋅ {t}_{i} ⋅ m\right) \\ = {RLWE}_{sk} \left(t⋅m\right)\end{matrix}$ (14)

*t E R,* (*t*₀, *t*₁, ···, *t*_{*l*-1}) represents gadget decomposition of *t* based on a gadget decomposition vector *v*, that is, **Σ***ᵢ vᵢtᵢ = t. B* = *max*{*tᵢ*} represents a gadget decomposition base, and *l* represents a gadget decomposition length. A noise variance of a gadget product result is ${σ}_{⊙ , input}^{2} = \frac{{B}^{2}}{12} lN {σ}_{input}^{2} , {σ}_{input}^{2}$ represents a noise variance of an input RLWE' ciphertext, and *N* represents a polynomial dimension.

### (2) External product (External Product)

An input RLWE ciphertext is *RLWE**ₛₖ***(***m*₁**) *=* (***a, b***) *,* ${RGSW}_{sk} \left({m}_{2}\right) = \left({RLWE}_{sk}^{′}\left(sk⋅{m}_{2}\right),{RLWE}_{sk}^{′}\left({m}_{2}\right)\right)$ .

A result of an external product (external product, ExtProd for short) operation between the RGSW ciphertext and the RLWE ciphertext is the RLWE ciphertext, as expressed in the following Formula (15): $\begin{matrix}{RLWE}_{sk} \left({m}_{1}\right) ⊙ {RGSW}_{sk} \left({m}_{2}\right) = \left(a, b\right) ⊙ \left({RLWE}_{sk}^{′}\left(sk⋅{m}_{2}\right),{RLWE}_{sk}^{′}\left({m}_{2}\right)\right) \\ = a ⊙ {RLWE}_{sk}^{′} \left(sk⋅{m}_{2}\right) + b ⊙ {RLWE}_{sk}^{′} \left({m}_{2}\right) \\ = {RLWE}_{sk} \left(a⋅sk⋅{m}_{2}+b⋅{m}_{2}\right) \\ = {RLWE}_{sk} \left(\left(a⋅sk+b\right)⋅{m}_{2}\right) \\ = {RLWE}_{sk} \left({m}_{1}⋅{m}_{2}+{e}_{1}⋅{m}_{2}\right)\end{matrix}$ (15)

If ***m*₂** has a small norm, for example, binary, a noise term ***e*₁** · ***m*₂** will be small enough. In this way, an output of the external product is RLWE encryption of the message ***m*₁** · ***m*₂**, and an upper limit of *a* noise variance is ${σ}^{2} = 2 {σ}_{⊙ , RGSW}^{2} + {σ}_{RLWE}^{2}$*,* where ${σ}_{⊙ , RGSW}^{2}$ represents a noise variance of a gadget product result of an input RGSW ciphertext, and ${σ}_{RLWE}^{2}$ represents a noise variance of the input RLWE ciphertext.

### (3) External product in blind rotation

A homomorphic ciphertext in the RLWE form may be represented as *RLWE(µ*₁*)* ∈ ${R}_{Q}^{2}$, and *µ*₁ may be used to identify a homomorphically encrypted message. Gadget decomposition is performed on *RLWE*(*µ*₁), and a decomposed polynomial is divided into *l* parts (for example, *l* is equal to 3), which may be represented as ${g}^{- 1} \left(RLWE\left({μ}_{1}\right)\right) ∈ {R}_{Q}^{2 l}$*.*

A homomorphic ciphertext in the RGSW form may be represented as $RGSW \left({μ}_{2}\right) ∈ {R}_{Q}^{2 l \times 2}$ , that is, 2*l* ciphertexts in the RLWE form and one gadget matrix, and *µ*₂ may be identified as a homomorphic decryption key.

The external product in blind rotation may be expressed as the following Formula (16): $\begin{matrix}RLWE \left({μ}_{1}\right) ⊙ RGSW \left({μ}_{2}\right) = RLWE \left({μ}_{1}\right) ⊙ \left(\left(A,A⋅s\right)+{μ}_{2}∗\left[\begin{matrix}g & 0 \\ 0 & g\end{matrix}\right]+e\right) = \\ RLWE \left({μ}_{1}\right) ⊙ \left(\left(\left(A,A⋅s\right)+0+e\right)+{μ}_{2}∗\left[\begin{matrix}g & 0 \\ 0 & g\end{matrix}\right]\right) = RLWE \left({μ}_{1}\right) ⊙ \left(\begin{matrix}RGSW \left(0\right) + {μ}_{2} ∗ \\ \left[\begin{matrix}g & 0 \\ 0 & g\end{matrix}\right]\end{matrix}\right) = {g}^{- 1} \left(RLWE\left({μ}_{1}\right)\right) ⋅ \left(RGSW\left(0\right)+{μ}_{2}∗\left[\begin{matrix}g & 0 \\ 0 & g\end{matrix}\right]\right) = {g}^{- 1} \left(RLWE\left({μ}_{1}\right)\right) ⋅ RGSW \left(0\right) + \\ {g}^{- 1} \left(RLWE\left({μ}_{1}\right)\right) ⋅ {μ}_{2} ∗ \left[\begin{matrix}g & 0 \\ 0 & g\end{matrix}\right] = RLWE \left({μ}_{1}⋅{μ}_{2}\right) ∈ {R}_{Q}^{2}\end{matrix}$ (16)

In Formula (12), s is a part of the homomorphic decryption key of the homomorphic ciphertext in the RGSW form, (*A, A ·* s) is a homomorphic encryption key, equivalent to *pk'* in a bootstrapping process, $\left[\begin{matrix}g & 0 \\ 0 & g\end{matrix}\right]$ represents a gadget matrix, g *=* (*B*⁰, *B*¹, ..., *B*^{*l*-1}), and *B* represents a gadget decomposition base.

### 4. Sample extraction (sample extraction)

The LWE/TLWE ciphertext may be extracted from the RLWE/TRLWE ciphertext through sample extraction.

Specifically, given a ciphertext c *= (a(x), b(x))* ∈ *TRLWE(m(x))* and an index *i* E [0, *N* - 1], a TLWE ciphertext *(a, b)* of an *i*^{th} coefficient of a message *m*(*x*) can be extracted without introducing any new noise. Such an operation may be referred to as sample extraction SampleExtract*ᵢ*(*c*). According to the sample extraction algorithm, an RLWE ciphertext *c = (a, b)* ∈ *RLWE_{sk,q}(m)* and a given location *i* are input, and an LWE ciphertext *LWE_{sk,q}*(*mᵢ*) can be output or returned, where *mᵢ* is an *i*^{th} coefficient of m.

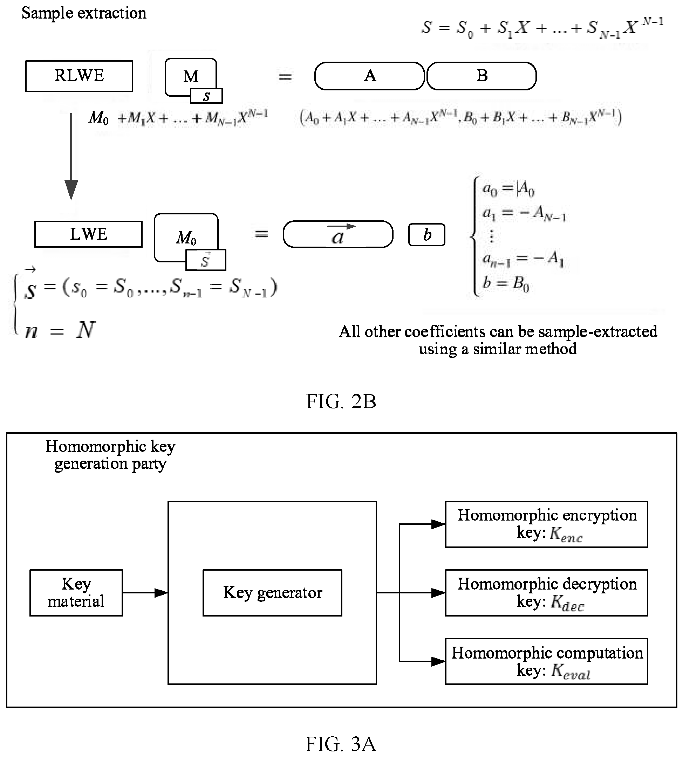

For example, SampleExtract₀(*c*) is $TLWE \left({m}_{0}\right) = \left({a}_{0},-{a}_{N - 1},{a}_{N - 2},⋯,-{a}_{1},{b}_{0}\right) ∈ {T}^{N + 1}$ , which can be simply proved by TRLWE decryption. FIG. 2A shows a process of a sample extraction algorithm. FIG. 2B is a diagram of a process of obtaining LWE by performing sample extraction based on RLWE.

### 5. Modulus switching (modulus switching)

The modulus switching technology can be used to change a modulus of a ciphertext. A ciphertext $ct = \left(a, b\right) ∈ {LWE}_{s , Q}^{n} \left(m\right)$ is used as an input, and a ciphertext output by using the modulus switching algorithm is expressed as the following Formula (17): $ModSwitch {\left(ct\right)}_{Q \to q} = \left(\frac{q}{Q}⋅a,\frac{q}{Q}⋅b\right) ∈ {LWE}_{s , q}^{n} \left(m\right)$ (17)

A noise variance satisfies: Var(e') $Var \left(e′\right) \leq {\left(\frac{q}{Q}\right)}^{2} ⋅ Var \left({e}_{c t}\right) + \frac{{\left‖s\right‖}_{2}^{2} + 1}{12}$.

### III. Related technologies in embodiments of this application

### 1. Homomorphic encryption (homomorphic encryption, HE)

Homomorphic encryption (or fully homomorphic encryption FHE) is a technology that intends to complete computational processing on data ciphertexts without exposing data plaintexts, focusing on implementing data value extraction through privacy protection-based computation under the premise of providing privacy protection. For the homomorphic encryption, a homomorphic computation function for ciphertexts is added based on basic encryption. The homomorphic encryption allows for direct computation on encrypted ciphertexts, and a computation result obtained through decryption performed on a ciphertext-based computation result is consistent with a plaintext-based computation result. The fully homomorphic encryption may be asymmetric public key encryption or symmetric encryption, provided that ciphertexts have an algebraic structure.

The homomorphic encryption can be classified into partially homomorphic encryption, somewhat homomorphic encryption, and fully homomorphic encryption. The partially homomorphic encryption supports only homomorphic addition or homomorphic multiplication. The partially homomorphic encryption supports any homomorphic operation for a limited quantity of times, where the homomorphic operation may be homomorphic addition or homomorphic multiplication. The fully homomorphic encryption supports any homomorphic operation for an unlimited quantity of times. The fully homomorphic encryption may be asymmetric public key encryption or symmetric encryption, provided that ciphertexts have an algebraic structure.

Homomorphic encryption HE=(HE.Keygen, HE.Enc, HE.Dec, HE.Eval) includes four algorithms, where HE.Keygen indicates key generation (key generation), HE.Enc represents homomorphic encryption (homomorphic encryption), HE.Dec represents homomorphic decryption (homomorphic decryption), and HE.Eval represents homomorphic evaluation (homomorphic evaluation), which may also be referred to as homomorphic computation. The following uses an asymmetric encryption scheme as an example to describe the homomorphic encryption, where n represents a security parameter.

### 1.1. Key generation: (pk, evk, sk) ← HE.Keygen(1ⁿ)

As shown in FIG. 3A, a homomorphic key generation party (HEKG for short) may input a key material (for example, 1*ⁿ*) into a key generator for outputting a public key (public key, pk) serving as a homomorphic encryption key *K_{enc},* that is, *K_{enc} = pk;* outputting a private key (secret key, sk) as a homomorphic decryption key *K_{dec},* that is, *K_{dec} = sk;* and outputting an evaluation key (evaluation key, evk) as a homomorphic evaluation key *Kₑᵥₐₗ,* that is *Kₑᵥₐₗ = evk,* where the homomorphic evaluation key may also be referred to as a homomorphic computation key.

### 1.2. Homomorphic encryption: c ← HE. Encₚₖ(m)

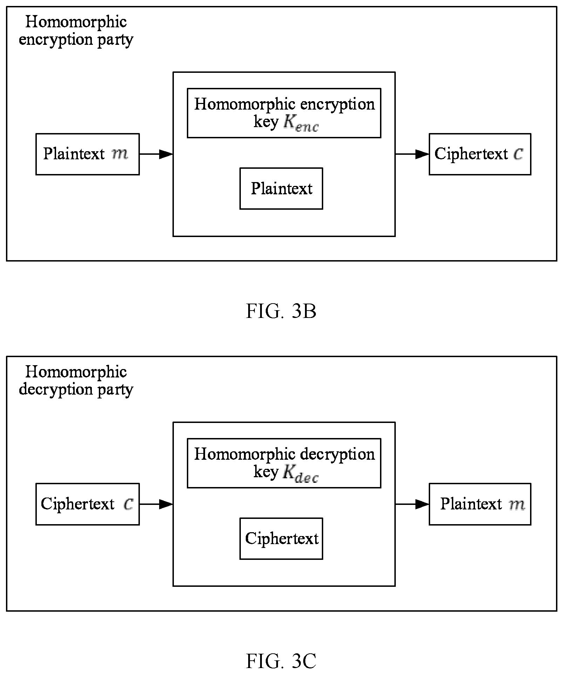

Refer to FIG. 3B. A homomorphic encryption party (HEenc for short) may use a homomorphic encryption key *K_{enc} = pk* to encrypt a single-bit plaintext (plaintext) message m ∈ {0,1} into a ciphertext (ciphertext) c.

### 1.3. Homomorphic decryption: m ← HE. Decₛₖ(c)

Refer to FIG. 3C. A homomorphic decryption party (HEdec for short) may use a homomorphic decryption key *K_{dec} = sk* to decrypt a ciphertext c to restore the ciphertext to a plaintext message m ∈ {0,1}.

### 1.4. Homomorphic evaluation (or referred to as homomorphic computation): c_{f} ← HE. Evalₑᵥₖ(f, c₁, ··· , cₗ)

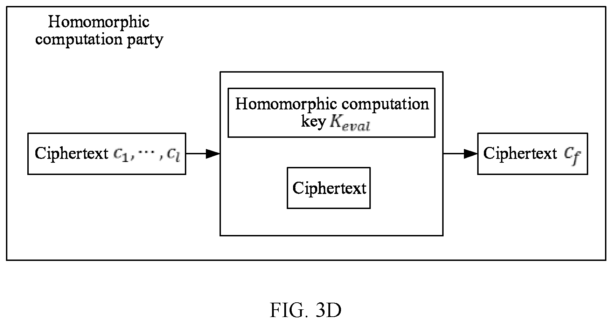

As shown in FIG. 3D, based on input ciphertexts *c*₁*, ···*, *cₗ* and a homomorphic computation key *Kₑᵥₐₗ = evk,* a homomorphic computation party (HEcalc, or HEeval for short) may execute a homomorphic computation function f: {0,1}*^{l}* → {0,1} on the ciphertexts, to obtain an output ciphertext *c_{f}* of homomorphic computation.

**In** the formula, *f* represents an arithmetic circuit with addition and multiplication gates on a GF(2) (where GF represents a finite field, and GF is short for Galois field (Galois Field)). Generally, the homomorphic computation HE.Eval may be decomposed into a plurality of basic operators, that is, homomorphic addition *c_{add}* ← *HE.Addₑᵥₖ(c*₁, *c*₂) and homomorphic multiplication *cₘᵤₗₜ* ← *HE. Multₑᵥₖ*(*c*₁, *c*₂).

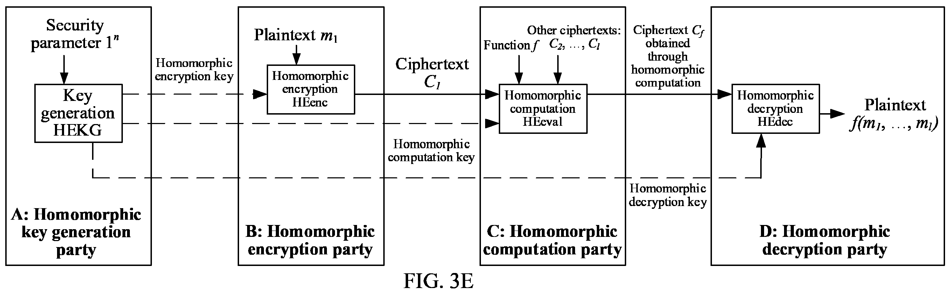

The entire homomorphic encryption scheme HE=(HE.Keygen, HE.Enc, HE.Dec, HE.Eval) is shown in FIG. 3E, and a ciphertext-based computation result obtained through decryption is consistent with a plaintext-based computation result, where *Dec_{Kdec}(f(Enc_{Kenc}(m*₁*),Enc_{Kenc}(m*₂*),*..., *Enc_{Kenc}(mₗ))) = f(m*₁, ... , *mₗ).* A homomorphic key generation party A generates a homomorphic encryption key *K_{enc},* a homomorphic computation key *Kₑᵥₐₗ,* and a homomorphic decryption key *K_{dec},* which need to be distributed to a homomorphic encryption party B, a homomorphic computation party C, and a homomorphic decryption party D respectively.

**In** a homomorphic encryption task, a plurality of homomorphic encryption parties may encrypt data from different sources, a plurality of homomorphic computation parties may execute a homomorphic computation circuit, or there is a single-hop or multi-hop homomorphic computation party. A homomorphic encryption task may have a plurality of homomorphic decryption parties. A decryption result may be sent to a plurality of data users. Based on key deployment, the homomorphic decryption party and the data user may be the same entity or different entities. Keys of a plurality of homomorphic encryption parties in a homomorphic encryption task may be the same or different. The homomorphic computation key may include a bootstrapping key (bootstrapping key, BSK) and a key switching key (key switching key, KSK). The BSK may be used for homomorphic computation on a decryption circuit in a ciphertext state to reduce noise. The KSK may be used for switching, after the ciphertext computation, a ciphertext product into a new ciphertext having a same dimension as an original ciphertext, and eliminate a cross item of a corresponding key, to reduce a problem of an increasing ciphertext size caused by ciphertext multiplication.

### 2. Ciphertext bootstrapping

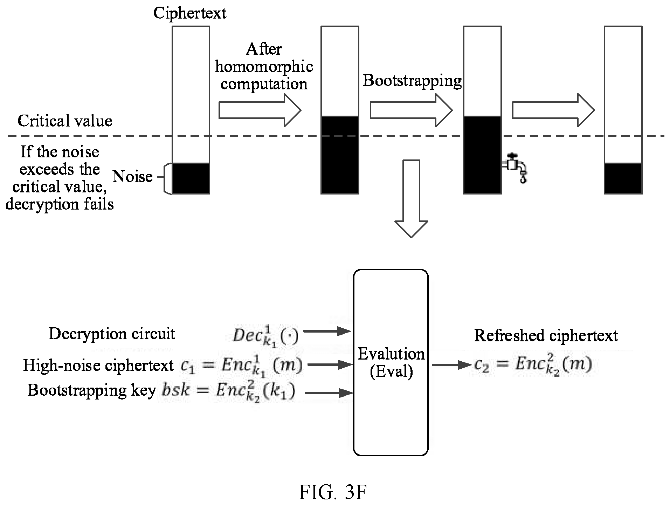

The existing fully homomorphic encryption schemes have a common feature, that is, a small random "noise" component e is added in the encryption process. Homomorphic computation on ciphertexts results in noise growth. When a plurality of ciphertexts are combined for homomorphic computation, noise in each ciphertext is accumulated and amplified, especially noise growth caused by homomorphic multiplication, which may reach an exponential level, and cross terms resulting from multiplication of noise and ciphertexts may occur. If simple calculation is performed on ciphertexts, and accumulated noise is within a controllable range (critical value), the ciphertexts can be easily restored to plaintexts by using a decryption algorithm. However, if excessively complex calculation is performed on ciphertexts, and noise exceeds a controllable range (critical value), original plaintexts are damaged or even overwritten, resulting in a failure in homomorphic decryption. To resolve this problem, a bootstrapping (bootstrapping) process is proposed in the FHE scheme. Bootstrapping is a special processing technique for ciphertexts. After processing, a ciphertext with noise close to the critical value can be "refreshed" into a new ciphertext with low noise. Refer FIG. 3F. A high-noise ciphertext ${c}_{1} = {Enc}_{{k}_{1}}^{1} \left(m\right)$ is re-encrypted into another fully homomorphic ciphertext ${Enc}_{{k}_{2}}^{2} \left({Enc}_{{k}_{1}}^{1}\left(m\right)\right)$ by using a new key *k*₂, and an old key *k*₁ is also encrypted into a ciphertext $bsk = {Enc}_{{k}_{2}}^{2} \left({k}_{1}\right)$ by using the new key *k*₂, that is, a bootstrapping key (bootstrapping key, BSK). Then, a homomorphic computation party decrypts an inner ciphertext via a homomorphic decryption circuit ${Dec}_{{k}_{1}}^{1} \left(⋅\right)$ corresponding to the homomorphic computation, to restore the ciphertext to a plaintext, so as to obtain a new low-noise FHE ciphertext ${c}_{2} = {Enc}_{{k}_{2}}^{2} \left(m\right)$ under a new key.

### 3. TFHE bootstrapping

A Boolean-type fully homomorphic encryption algorithm TFHE is one of the most practical FHE schemes, which provides a hierarchical homomorphic computation mode that can efficiently compute hierarchical circuits such as multi-input lookup table (lookup table, LUT), bit sequence representation (bit sequence representation, BSR), and weighted finite automata (weighted finite automata, WFA). An input and an output of hierarchical homomorphic computation are ciphertexts of different types (forms) and cannot be directly combined. Therefore, to implement homomorphic computation of circuits of any depth, in TFHE, two bootstrapping operations: gate bootstrapping (gate bootstrapping) and circuit bootstrapping (circuit bootstrapping) are introduced, to reduce noise of ciphertexts and convert the ciphertext forms. In addition, TFHE currently has a lowest bootstrapping delay among all fully homomorphic encryption schemes, taking only about 13 ms for gate bootstrapping.

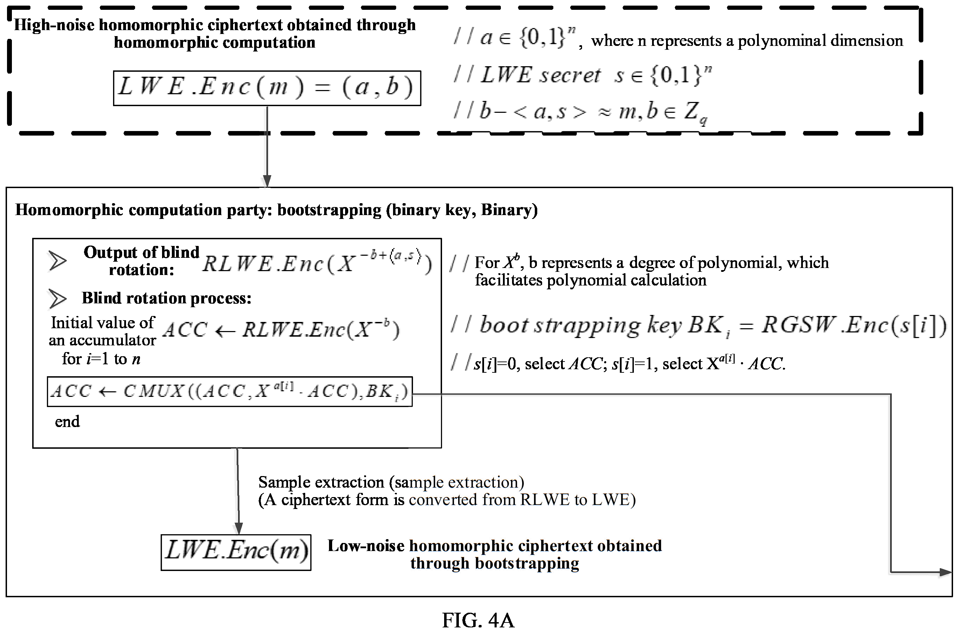

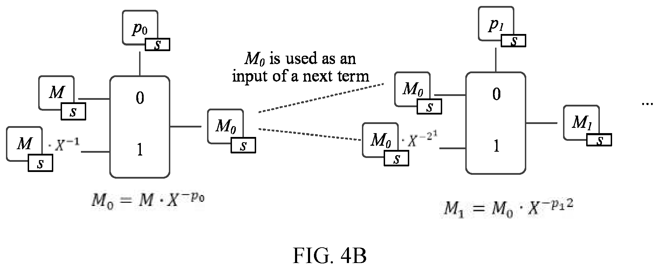

FIG. 4A shows a bootstrapping process of TFHE gate bootstrapping. FIG. 4B shows a diagram of an architecture of a TFHE hierarchical homomorphic computation mode.

The bootstrapping schemes in embodiments of this application are correspondingly described below.

### 3.1. Gate bootstrapping (gate bootstrapping, GBS)

Gate bootstrapping is typical. To be specific, during homomorphic computation, a bootstrapping operation may be performed during each binary gate computation. The core of gate bootstrapping is blind rotation, which specifically involves rotation of a polynomial using ciphertexts and can be implemented by n CMUX gates. The CMUX gates in blind rotation can be constructed using the external product of the RLWE ciphertext and the RGSW ciphertext.

Refer to a TFHE gate bootstrapping process shown in FIG. 4A. An input of gate bootstrapping is a homomorphically computed high-noise (that is, loud noise) LWE/TLWE homomorphic ciphertext c *=* (*a, b),* and corresponding homomorphic encryption and decryption keys are *(pk, sk).* An output of gate bootstrapping is a low-noise (that is, little noise) LWE (or TLWE) ciphertext, that is, the noise is reduced to a lower range. Specific steps may be as follows:
Step 1: Perform homomorphic encryption on *b* in the homomorphic ciphertext c again by using a new homomorphic encryption key *pk',* that is, *RLWE. Enc(X^{-b}),* denoted as an initial value of an accumulator *ACC* for blind rotation.
Step 2: Input the initial value of *ACC* to a 1^{st} CMUX gate, and rotate a rotation component through the 1^{st} CMUX gate to obtain *ACC* output by the 1^{st} CMUX gate, and then input *ACC* output by the 1^{st} CMUX gate to a 2^{nd} CMUX gate, forming an iteration process. By analogy, after iterative update through n CMUX gates, a result output by an n^{th} CMUX gate is *RLWE. Enc(X*^{*-b+*〈*a, s*〉}).

For ease of understanding, a calculation process of an i^{th} CMUX gate in the n CMUX gates may be expressed as the following Formula (18): $ACC = CMUX \left(\left(ACC,{X}^{a \left[i\right]}⋅ACC\right), {BK}_{i}\right) = ACC + \left({X}^{a \left[i\right]}-1\right) ⋅ ACC ⊙ {BK}_{i}$ (18)

*X*^{***a***[*i*]} represents an i^{th} rotation component of a blind rotation sub-operation, i is an integer ranging from 1 to *n,* and *n* is a polynomial dimension of *a*. *ACC*⊙*BKᵢ* represents an external product of an i^{th} *RLWE_{pk'}* and *RGSw_{pk'}(sk[i]). ACC* represents a homomorphic ciphertext in the RLWE form. *BKᵢ* represents a homomorphic ciphertext in the RGSW form, and may be specifically a ciphertext obtained through homomorphic encryption performed on an original homomorphic decryption key *sk* by using a new homomorphic encryption key *pk'.* It may be understood that, based on characteristics of homomorphic computation, a high-noise homomorphic ciphertext (*b, a*) input through bootstrapping is multiplied by a decryption key (1, *sk)* corresponding to the high-noise homomorphic ciphertext, that is, homomorphic decryption is performed on the high-noise homomorphic ciphertext, to finally obtain a low-noise homomorphic ciphertext, thereby implementing noise suppression.

After the iterative update through the n CMUX gates, a low-noise homomorphic ciphertext obtained through bootstrapping, denoted as *LWE.Enc(m),* can be obtained through sample extraction (sample extraction).

### Blind rotation (Blind Rotation):

Blind rotation is the core of bootstrapping of core components in the FHEW and TFHE schemes, which uses encrypted indexes to rotate test polynomials. The blind rotation process includes k CMUX gates. An external product operation on the RLWE and RGSW ciphertexts can be used to construct a CMUX gate. The process may specifically include the following steps.
1. Set an encrypted rotation location *p*, which may be expressed as p *= p*₀ · 2⁰ + ··· + *pⱼ* · 2*^{j}* + ··· + *pₖ ·* 2*^{k}*, where *pⱼ* is secret, 2*^{j}* is a known constant, and *j* is any integer ranging from 0 to *k.*
2. Rotate an encrypted polynomial Mbased on the encrypted rotation location *p*, which may be expressed as the following Formula (19): $M ⋅ {X}^{- p} = M ⋅ {X}^{- {p}_{0} ⋅ {2}^{0} - ⋯ - {p}_{j} ⋅ {2}^{j} - ⋯ - {p}_{k} ⋅ {2}^{k}} = M ⋅ {X}^{- {p}_{0} ⋅ {2}^{0}} ⋅ … {X}^{- {p}_{j} ⋅ {2}^{j}} ⋅ … ⋅ {X}^{- {p}_{k} ⋅ {2}^{k}}$ (19)
3. Refer to Formula (24), each term may be implemented through one CMUX gate. For example, each term may be determined according to the following Formula (20): $M ⋅ {X}^{- {p}_{j} ⋅ {2}^{j}} = \left\{\begin{matrix}M & if {p}_{j} = 0 \\ M ⋅ {X}^{- {2}^{j}} & if {p}_{j} = 1\end{matrix}\right\}$ (20)
4. FIG. 4B shows an entire blind rotation process.

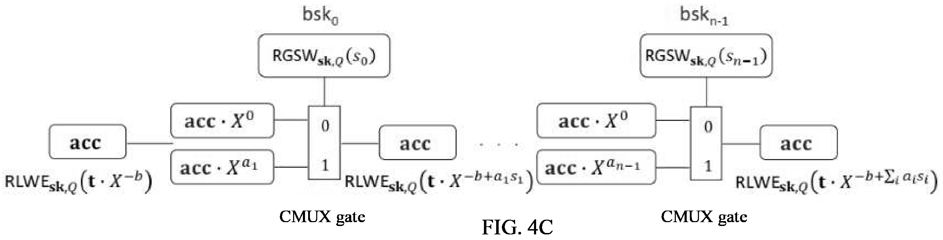

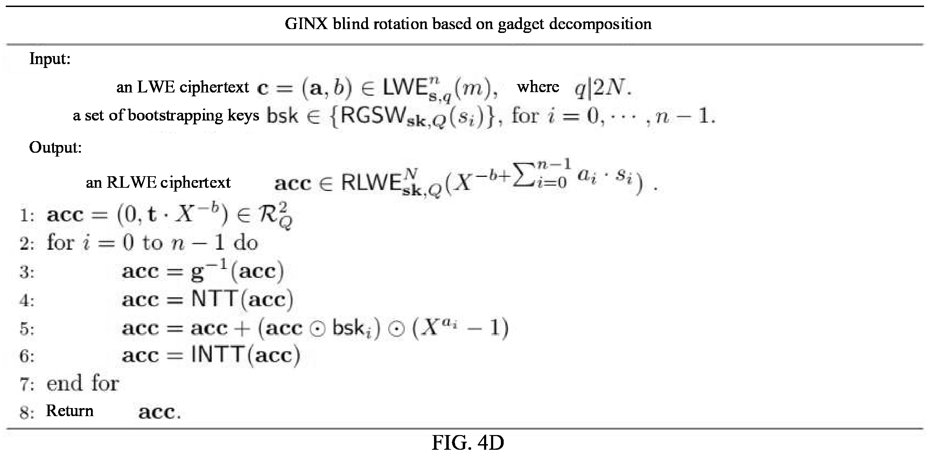

FIG. 4C is a diagram of a main process of GINX blind rotation in a CMUX gate form. An LWE ciphertext $c = \left(a, b\right) ∈ {Z}_{q}^{n + 1}$ to be homomorphically decrypted is given. A bootstrapping key is a homomorphic ciphertext obtained by re-encrypting an LWE key s = (s₀,·· ··, sₙ₋₁). The bootstrapping key is n RGSW ciphertexts *bsk =* (*bsk*₀,····, *bsk*_{*n*-1}). Blind rotation is performed to output an RLWE ciphertext for encrypting $t ⋅ {X}^{- b + {\sum }_{i = 0}^{n - 1} {a}_{i} ⋅ {s}_{i}} ∈ {R}_{Q}$*,* with a key sk and a modulus Q, where *t* represents a test polynomial. FIG. 4D shows a GINX blind rotation process algorithm based on or with gadget decomposition.

In Line 1, an initial polynomial acc is set to an RLWE ciphertext, ${RLWE}_{sk , Q} \left(t⋅{X}^{- b}\right) = \left(0,t⋅{X}^{- b}\right) ∈ {R}_{Q}^{2}$ . In Lines 3 to 6, an external product operation on the RLWE ciphertext and a bootstrapping key is performed, which is computation of a CMUX gate. In Line 3, a decomposition technique is invoked, for example, the digit decomposition or RNS decomposition described above. In Lines 4 and 6, NTT transform and INTT transform are invoked. For details, refer to the NTT transform and the INTT transform described below. The entire blind rotation includes computation and accumulation of CMUX gates, which may be expressed as the following formula: $acc ← acc + \left({X}^{{a}_{i}}-1\right) ⋅ \left(acc⊙RGS{W}_{sk , Q}\left({s}_{i}\right)\right) .$

### 3.2. Functional bootstrapping (functional bootstrapping, FBS)

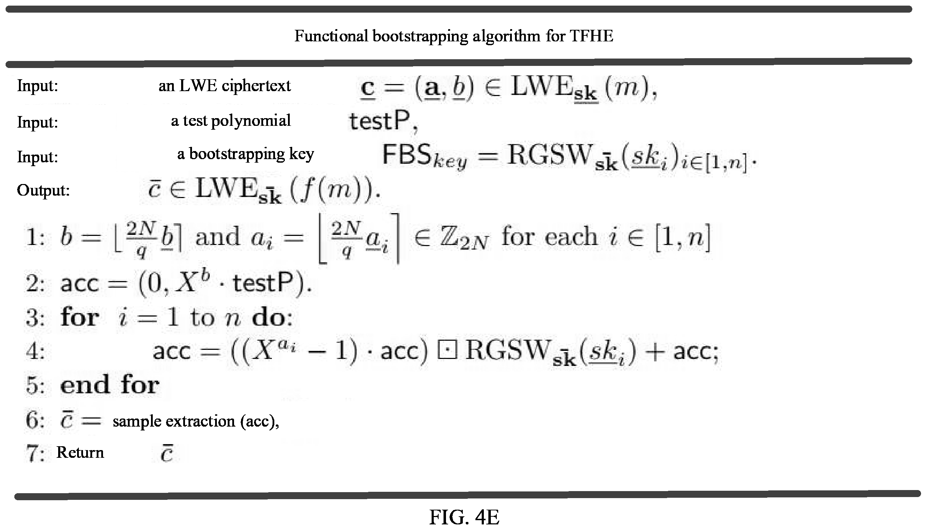

The TFHE scheme supports construction of arbitrary circuits through gate bootstrapping. This technique has further evolved into functional bootstrapping (FBS), which can compute a single-input single-output lookup table (LUT) while refreshing a ciphertext. FIG. 4E shows a process of a functional bootstrapping algorithm, which is specifically as follows:

First, a test polynomial encoded by a LUT function *f* is defined as *testP,* and a bootstrapping key is defined as *RGSW_{s̅k̅}(skᵢ).* Functional bootstrapping may be expressed as ${FBS}_{LWE \to LWE}^{testP} : {LWE}_{{sk}_{¯}} \left(m\right) \to {LWE}_{\overline{sk}} \left(f\left(m\right)\right)$*.*

For functional bootstrapping in circuit bootstrapping, *skᵢ* represents an *i*^{th} term of an LWE key (for example, a private key), that is, a level-0 key in circuit bootstrapping, and *s̅k̅* represents a level-2 key.

Specifically, a homomorphically computed high-noise homomorphic ciphertext is c = *(b, a*), and corresponding homomorphic encryption and decryption keys are (pk, sk). Alternatively, homomorphic encryption is performed on *b* in a homomorphic ciphertext c again by using a new homomorphic encryption key pk', that is, *RLWE.Enc(X^{-b}).* An initial value of an accumulator *ACC* (or acc) may be denoted as *ACC = (0, X^{-b}* · *testP).* The initial value of *ACC* is input to a 1^{st} CMUX gate, and a rotation component is rotated through the 1^{st} CMUX gate to obtain *ACC* output by the 1^{st} CMUX gate, and then *ACC* output by the 1^{st} CMUX gate is input to a 2^{nd} CMUX gate, forming an iteration process. A calculation process of an i^{th} CMUX gate may be expressed as the following Formula (21): $ACC = ACC + \left({X}^{a \left[i\right]}-1\right) ⋅ ACC ⊙ {RGSW}_{\overline{sk}} \left({{sk}_{¯}}_{i}\right)$ (21)

*X^{a[i]}* represents an i^{th} rotation component of blind rotation, i ∈ [1, *n*], and *n* represents a polynomial dimension of *a*. *ACC*⊙*RGSW_{s̅k̅}*(*skᵢ*) represents an external product of an i^{th} *RGSW_{s̅k̅}* and *RGSW_{s̅k̅}(skᵢ). ACC* represents a homomorphic ciphertext in the RLWE form. *RGSW_{s̅k̅}(skᵢ)* represents a homomorphic ciphertext in the RGSW form.

After iterative update through n CMUX gates, a low-noise homomorphic ciphertext obtained through bootstrapping, denoted as *c̅* = *(a̅, b̅*) ∈ *LWE_{s̅k̅}(f*(m)), can be obtained through sample extraction and other operations.

### 4. NTT and FFT

A polynomial may be expressed in the following manners:
1. Coefficient representation:
   *f(x)* = *a*₀ + *a*₁*x* + *a*₂*x*² + ··· + *a*_{*n*-1}*x*^{*n*-1}, where a coefficient of this polynomial may be represented as a vector (*a*₀, *a*₁, ..., *a*_{*n*-1}).
2. Point-value representation: If *n* different numbers *x*₀, ... , *x*_{*n*-1} are selected to evaluate a polynomial, *f*(*x*₀), ..., f(*x*_{*n*-1}) is obtained, and the polynomial is represented through point-value representation as (*xᵢ, f(xᵢ)),* where 0 ≤ *i* ≤ *n* - 1, *and* $i ∈ ℤ$.

An operation advantage of point-value representation lies in that for multiplication (actually convolution) of two polynomials (for example, (*xᵢ, f (xᵢ))* and (*xᵢ, g(xᵢ)))* represented through point-value representation, corresponding terms may be directly multiplied, as shown in the following Formula (22): $G \left(x\right) = \left\{\left(\left({x}_{0},f\left({x}_{0}\right)⋅g\left({x}_{0}\right)\right),\left({x}_{1},f\left({x}_{1}\right)⋅g\left({x}_{1}\right)\right),\left({x}_{2},f\left({x}_{2}\right)⋅g\left({x}_{2}\right)\right),…,\left(\begin{matrix}{x}_{n - 1} , f \left({x}_{n - 1}\right) ⋅ \\ g \left({x}_{n - 1}\right)\end{matrix}\right)\right)\right\}$ (22)

A process of converting a polynomial from coefficient representation to point-value representation may be implemented through discrete Fourier transform DFT, FFT, or NTT.

A process of converting a polynomial from point-value representation to coefficient representation may be implemented through inverse discrete Fourier transform IDFT, IFFT, or INTT.

**DFT:** A linear transformation from a given input vector *a* = (*a*₀, *a*₁, ..., *a*_{*n*-1}) to a given output vector *A = (A*₀, *A*₁, *..., A*_{*n*-1}), ${A}_{k} = {\sum }_{i = 0}^{n - 1} {a}_{i} {ω}_{n}^{k ⋅ i} = f \left({ω}_{n}^{k}\right)$*, and k* = 0,1, *..., n* - 1, where ${ω}_{n} = {e}^{j \frac{2 π}{n}}$ represents an n- unity root, and DFT is essentially substituting *n* unity roots into a coefficient expression and converting the coefficient expression into a point-value expression.

**FFT:** In FFT, a complex root *ωₙ* that meets periodicity, symmetry, and reducibility is used. A DFT expression of the polynomial *f(x)* may be recursively decomposed to obtain an expression of an FFT form, as shown in the following Formula (23): $\left\{\begin{matrix}{A}_{k} = {g}_{1} \left({ω}_{n}^{2 k}\right) + {ω}_{n}^{k} {g}_{2} \left({ω}_{n}^{2 k}\right) \\ {A}_{k + \frac{n}{2}} = {g}_{1} \left({ω}_{n}^{2 k}\right) - {ω}_{n}^{k} {g}_{2} \left({ω}_{n}^{2 k}\right)\end{matrix},k=0,1,…,\frac{n}{2}-1\right.$ (23)

### 4.1. Number theoretic transform (number theoretic transform, NTT)

NTT is an implementation of discrete Fourier transform (discrete Fourier transform, DFT) over a finite field (finite field), and NTT is more convenient for modulo operations. NTT is to decompose polynomial rings through CRT, and map an original ring (original ring) to several rings of lower orders (rings of lower orders). To ensure execution of the mapping, there is a parameter requirement to ensure existence of a root for decomposing a modulus polynomial of the polynomial ring.

For example, forward n-point NTT transform *Aₖ = NTT(a)* is defined as the following Formula (24): ${A}_{k} = {\sum }_{i = 0}^{n - 1} {a}_{i} {ω}^{ki} mod q , k = 0 , 1 , … n - 1$ (24)

Inverse n-point NTT *a = INTT(A)* is defined as the following Formula (25): ${a}_{k} = \frac{1}{n} {\sum }_{i = 0}^{n - 1} {A}_{k} {ω}^{- ki} mod q , k = 0 , 1 , … n - 1$ (25)

Specifically, for a polynomial ring *R_{Q} = Z_{Q}[X]*/*(X^{N} + 1),* where N represents a power of 2 (power of 2). If a modulus Q is a prime number that satisfies Q ≡ 1(mod 2N), there is a 2N-th primitive root of unity (a 2N-th primitive root of unity) ζ ∈ *Z_{Q}.* In addition, *ζ* meets the following three properties:

Periodicity: *ζ*⁰, *ζ*¹, ..., *ζ*^{2*N*-1} are different from each other, and when i < 2N and *k* ∈ *Z*, *ζ^{i+k*(2N)} = ζⁱ(mod Q).*

Symmetry: When i < *N, ζ^{i+N} = -ζⁱ(mod Q).*

Reducibility: When i < *N, ζ*²*ⁱ = ωⁱ(mod* Q), where ω is an N-th primitive root of unity (an N-th primitive root of unity).

Therefore, the root *ζ* may be used to decompose a polynomial *X*^{*N*+1} into a plurality of linear polynomials X *- ζⁱ*, where i = 1,3,...,*2N* - 1. More specifically, by using the property *ζ^{N}* = *-1(mod Q),* ring isomorphism (ring isomorphism) exists, namely, $ϕ : {Z}_{Q} \left[X\right] / \left({X}^{N}+1\right) ≅ {Z}_{Q} \left[X\right] / \left({X}^{\frac{N}{2}}+{ζ}^{\frac{N}{2}}\right) \times {Z}_{Q} \left[X\right] / \left({X}^{\frac{N}{2}}-{ζ}^{\frac{N}{2}}\right)$ . Subsequent calculation of *R_{Q}* may be implemented separately in rings (rings) with dimensions up to $\frac{N}{2}$. Therefore, for a polynomial *a*(*x*) ∈ *R_{Q}* , NTT transform *NTT_{Q}(**a**)* is computation of $ϕ \left(a\right) = \left(a mod \left({X}^{\frac{N}{2}}+{ζ}^{\frac{N}{2}}\right),a mod \left({X}^{\frac{N}{2}}-{ζ}^{\frac{N}{2}}\right)\right)$ *.*

Because N is an integral power of 2, decomposition of a polynomial *X*^{*N*+1} may be completed across *log*₂ N levels (levels). Specifically, fully decomposed NTT corresponds to the following ring isomorphism: $ϕ : {Z}_{Q} \left[X\right] / \left({X}^{N}+1\right) ≅ {Z}_{Q} \left[X\right] / \left(X-{ζ}^{1}\right) \times {Z}_{Q} \left[X\right] / \left(X-{ζ}^{3}\right) \times ⋅ ⋅ \times {Z}_{Q} \left[X\right] / \left(X-{ζ}^{2 N - 1}\right)$

Correspondingly, CRT is further calculated as follows: *ϕ*(a) *=* (a mod(X - *ζ*¹), a mod(X - *ζ*³),···, a mod(X - *ζ*^{2*N*-1})).

According to the symmetry of the root *ζ*, a product of a coefficient and a primitive root may be used twice at each level, for example, ${a}_{i}^{′} = {a}_{i} + {ζ}^{\frac{N}{2}} ⋅ {a}_{\frac{N}{2} + i}$ and ${a}_{i}^{"} = {a}_{i} - {ζ}^{\frac{N}{2}} ⋅ {a}_{\frac{N}{2} + i}$*.* This operation is referred to as Cooley-Tukey butterfly (Cooley-Tukey butterfly), which is referred to as CT butterfly for short. A quantity of multiplications at each level may be reduced to N/2 by performing the CT butterfly operation. Therefore, complexity of single NTT is O(N · *log*₂ N). NTT on a coefficient vector a of the polynomial a(x) is expressed as the following Formula (26): $NTT \left(a\right) = \left(a\left({ζ}^{1}\right),a\left({ζ}^{3}\right),⋯,a\left({ζ}^{2 N - 1}\right)\right) ∈ {Z}_{Q}^{N}$ (26)

Inverse isomorphism (inverse isomorphism) *ϕ*⁻¹ is naturally computed through INTT of the polynomial in a similar manner, that is, the above process is iteratively reversed using negative powers of the primitive root, which requires a same quantity of multiplications at each level. Correspondingly, a basic computing unit in INTT is a so-called Gentleman-Sande butterfly (Gentleman-Sande butterfly), GS butterfly for short. A calculation formula of an INTT vector a' satisfies the following Formula (27): $INTT \left(a′\right) = \frac{1}{N} \left(a′\left({ζ}^{- 1}\right),a′\left({ζ}^{- 3}\right),⋯,a′\left({ζ}^{- \left(2N-1\right)}\right)\right) ∈ {Z}_{Q}^{N}$ (27)

Therefore, a product *c(x) = a*(*x*) · *b(x)* in *R_{Q}* can be obtained by efficiently calculating INTT(NTT(a)⊙NTT(b)) through negative circular convolution, and computational complexity is *O(N · log₂ N).*

### 4.2. Fast Fourier Transform (fast Fourier transform, FFT)

FFT is a fast algorithm that uses complex numbers as unity roots to calculate DFT over a real number field. For a polynomial $a \left(x\right) = {\sum }_{i = 0}^{N - 1} {a}_{i} {X}^{i}$ in *R,* a 2N-th unity root (2N-th unity root) is *ζ* ∈ *R.* The 2N-th unity root *ζ* has the same properties as the unity root in NTT, and is calculated in the same manner as NTT with complex roots. In this case, FFT of the coefficient vector *a* of the polynomial *a*(*x*) satisfies the following formula: $FFT \left(a\right) = \left(a\left({ζ}^{1}\right),a\left({ζ}^{3}\right),⋯,a\left({ζ}^{2 N - 1}\right)\right) ∈ {R}^{N}$

Similarly, inverse fast Fourier transform (IFFT) of an FFT vector ***a***' is as follows: $IFFT \left(a′\right) = \frac{1}{N} \left(a′\left({ζ}^{- 1}\right),a′\left({ζ}^{- 3}\right),⋯,a′\left({ζ}^{- \left(2N-1\right)}\right)\right) ∈ {R}^{N} .$

Computational complexity of computing FFT and IFFT through butterfly transforms (butterfly transforms) is *O(N · log₂N).*

Currently, FFT and NTT are used in the FHE scheme to improve computational efficiency, but differences between FFT and NTT have different impacts on operation efficiency.

The differences between NTT and FFT are as follows:
(1) Compute field: NTT uses integers to perform exact computation over a finite field, while FFT uses floating-point numbers to perform approximate computation over a real number field.
(2) Intermediate data size: FFT can maintain an amplitude using complex roots whose size is less than 1, but the amplitude in NTT is irregular due to negacyclic convolution negacyclic convolution [GLH23].
(3) Data friendliness: NTT is more favorable for small-scale data during implementation because a smaller data size enables faster integer-based implementation. FFT is more favorable for large-scale data, using double-precision floating-point numbers to store all intermediate values.
(4) Modular reduction Modular Reduction: NTT requires frequent integer modulo operations to ensure correctness of multiplication, but Barrett and Montgomery Montgomery algorithms can be used to accelerate the operations. In FFT, programs do not require modulo operations, but when a result is mapped back to a polynomial ring polynomial ring, modulo reduction is required.

NTT-based blind rotation is useful in scenarios where only prime modulus can be used, such as in application scenarios of homomorphic trace and automorphism.

In a possible implementation, NTT and FFT are applied to a bootstrapping process (blind rotation) of homomorphic encryption. It can be learned from the difference between NTT and FFT that the NTT-based blind rotation with a prime modulus has lower computational efficiency than FFT-based blind rotation with a power-of-two modulus.

### 5. Montgomery (Montgomery) modulus reduction algorithm

The Montgomery modulus reduction algorithm mainly utilizes characteristics of a modulo operation, which can convert the modulo operation into addition and subtraction operations and a shift operation, thereby improving efficiency of the modulo operation.

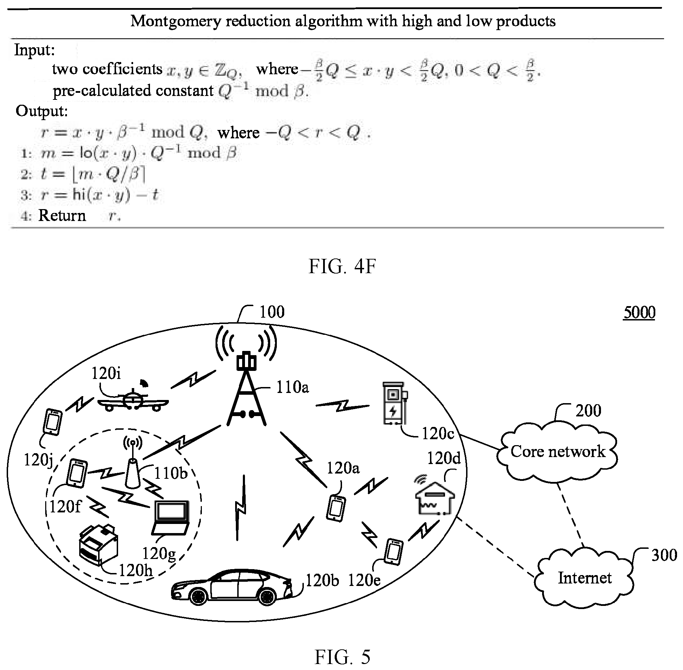

For example, referring to a Montgomery (Montgomery) modulus reduction algorithm shown in FIG. 4F, two coefficients x and y are input, and modulus reduction is performed based on the following steps to obtain a result r:
Input: two coefficients *x, y* ∈ Z*_{Q}*, where $- \frac{β}{2} Q \leq x ⋅ y < \frac{β}{2} Q$, and $0 < Q < \frac{β}{2}$; and pre-calculated constant Q⁻¹mod *β*
Output: r = *x · y · β*⁻¹mod Q, where -Q < r < Q

Specific steps are as follows:
Step 1: m = lo(x · y) · *Q*⁻¹mod*β*
Step 2: t = [*m* · Q/*β*]
Step 3: r = hi(x · y) - *t*

In the foregoing descriptions, lo (abbreviation of low) indicates that a low-order bit is used, and hi (abbreviation of high) indicates that a high-order bit is used.

It can be known from the related technologies described above that, taking the bootstrapping process of homomorphic encryption as an example, the core part of the bootstrapping process is blind rotation processing. Currently, a number theoretic transform (number theoretic transform, NTT)-based blind rotation processing method is proposed to improve the efficiency of the bootstrapping process. In the NTT processing, to improve correctness of data obtained through operation, integer modulo operations need to be performed frequently, which affects execution efficiency of the NTT-based blind rotation processing method. Similarly, some homomorphic processing (for example, homomorphic encryption, homomorphic decryption, or homomorphic computation) involving modulo operations may affect overall processing efficiency.

In view of this, this application provides a data processing method. The method can effectively improve efficiency of homomorphic processing (including homomorphic encryption, homomorphic decryption, homomorphic computation, and the like). The technical solutions provided in embodiments of this application may be applied to a 4th generation (4th generation, 4G) mobile communication technology system, for example, a long term evolution (long term evolution, LTE) system, may be applied to a 5G system, for example, an NR system, a next generation wireless local area network system, or various future communication systems. This is not specifically limited.

FIG. 5 shows a possible and non-limiting architecture of a communication system to which an embodiment of this application is applied. As shown in FIG. 5, a communication system 5000 includes a radio access network (radio access network, RAN) 100, and a core network (core network, CN) 200. Optionally, the communication system 5000 may further include an internet 300. The RAN 100 includes at least one network device (for example, 110a and 110b in FIG. 5, collectively referred to as 110) and at least one terminal device (for example, 120a to 120j in FIG. 5, collectively referred to as 120). The RAN 100 may further include another RAN node, for example, a wireless relay device and/or a wireless backhaul device (not shown in FIG. 5). The terminal device 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or an evolved system after 5G (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

It may be understood that FIG. 5 shows only a possible architecture of the communication system to which embodiments of this application may be applied. In another possible scenario, the architecture of the communication system may alternatively include another device.

The network device 110 is a node in a radio access network (radio access network, RAN), and may also be referred to as an access network device or a RAN node (or device). The network device 110 is configured to help the terminal device implement wireless access. A plurality of network devices 110 in the communication system 5000 may be nodes of a same type, or may be nodes of different types. In some scenarios, roles of the network device 110 and the terminal device 120 are relative. For example, a network element 120i in FIG. 5 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, network elements 110a and 110b in FIG. 5 may be understood as communication apparatuses having a base station function, and the network elements 120a to 120j may be understood as communication apparatuses having a terminal device function.

In a possible scenario, the network device may be a base station (base station), an evolved base station (evolved NodeB, eNodeB), a transmission reception point (transmission reception point, TRP), a transmission point (transmission point, TP), a next generation NodeB (next generation NodeB, gNB), a next generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 5), a micro base station or an indoor base station (for example, 110b in FIG. 5), a relay node or a donor node, or a radio controller in a CRAN scenario. The network device may alternatively be a device with a base station function in device to device (device to device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of network devices collaborate to assist a terminal device in implementing wireless access, and different network devices separately implement a part of functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

A form of the network device is not limited in embodiments of this application. An apparatus configured to implement a function of the network device may be the network device, or may be an apparatus that can support the network device in implementing the function, for example, a chip system. The apparatus may be mounted in the network device or used in conjunction with the network device.

The terminal device 120 may also be referred to as a terminal, user equipment (user equipment, UE), a mobile station (mobile station, MS), a mobile terminal (mobile terminal, MT), or the like, or is a device that provides a user with voice or data connectivity, or may be an internet of things device. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal device is not limited in embodiments of this application. An apparatus configured to implement a function of the terminal device may be a terminal device, or may be an apparatus, for example, a chip system, that can support the terminal device in implementing the function. The apparatus may be mounted in the terminal device or used in conjunction with terminal device. In this embodiment of this application, the chip system may include a chip, or may include the chip and another discrete component.

Each network element or device in the communication system (which may also be referred to as a communication network) shown in FIG. 5 may have at least one of a homomorphic encryption capability, a homomorphic decryption capability, and a homomorphic computation capability. Therefore, in this embodiment of this application, it may be considered that corresponding homomorphic encryption, homomorphic decryption, and homomorphic computation capabilities are supported in a communication network.

The solutions provided in embodiments of this application may be applied to, but are not limited to, a homomorphic encryption scenario, a homomorphic decryption scenario, and a homomorphic computation scenario shown in FIG. 3E.

### IV. Description of solutions of embodiments of this application

The technical solutions in this application are described below with reference to specific embodiments.

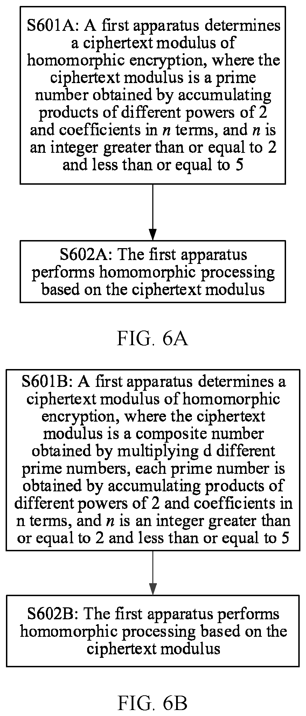

An embodiment of this application provides a data processing method. The method may be applied to but is not limited to the communication system shown in FIG. 5, and the method may be applied to but is not limited to a homomorphic encryption scenario, a homomorphic decryption scenario, and a homomorphic computation scenario shown in FIG. 3E. In a possible implementation, the method is applied to the homomorphic encryption scenario. The method may be performed by a homomorphic encryption party device, may be performed by a component (for example, a module or a chip) corresponding to the homomorphic encryption party device, or may be performed by an apparatus used in conjunction with the homomorphic encryption party device. In another possible implementation, the method is applied to the homomorphic decryption scenario. The method may be performed by a homomorphic decryption party device, may be performed by a component (for example, a module or a chip) corresponding to the homomorphic decryption party device, or may be performed by an apparatus used in conjunction with the homomorphic decryption party device. In still another possible implementation, the method is applied to the homomorphic computation scenario. The method may be performed by a homomorphic computation party device, may be performed by a component (a module, a chip, or the like) of the homomorphic computation party device, or may be performed by an apparatus used in conjunction with the homomorphic computation party. It may be understood that a specific structure of an execution entity of the method provided in embodiments of this application and a quantity of execution entities are not specifically limited in this application, provided that a program that records code of the method provided in embodiments of this application can be run, to implement communication with another apparatus. The following uses a first apparatus as an execution entity of the method for description. A sequence of steps in the following procedures is merely an example. In actual application, the sequence of steps in each procedure may be adjusted. Refer to FIG. 6A. A specific procedure of the method provided in this embodiment of this application is as follows:

S601A: A first apparatus determines a ciphertext modulus of homomorphic encryption, where the ciphertext modulus is a prime number obtained by accumulating, over n terms, products of different powers of 2 and coefficients, and n is an integer greater than or equal to 2 and less than or equal to 5.

In this embodiment of this application, the homomorphic processing may include but is not limited to at least one of homomorphic encryption, homomorphic decryption, and homomorphic computation.

In a possible implementation, the ciphertext modulus may satisfy the following form (or may be understood as that the ciphertext modulus and the different powers of 2 in the *n* terms satisfy the following relationship): $Q = {a}_{1} ∗ {2}^{{k}_{1}} + ⋯ + {a}_{i} ∗ {2}^{{k}_{i}} + {a}_{n} ∗ {2}^{{k}_{n}}$

*Q* represents the ciphertext modulus, exponents *kᵢ* of different powers of 2 in first *n-*1 terms are integers greater than 0 and less than or equal to *m* (*m* ≥ *k*₁ *>* ··· *kᵢ* > *k*_{*n*-1} > 0), an exponent *kₙ* of a power of 2 in an n^{th} term is equal to 0 (*kₙ* = 0), *m* represents a bit width of the ciphertext modulus *Q*, the coefficient *aᵢ* is +1 or -1, and i is an integer greater than or equal to 1 and less than or equal to *n.*

For example, when *n* is 2, the ciphertext modulus satisfies the following form: 2^{*k*1} ± 2⁰, and *k*₁ is an integer greater than 0 and less than or equal to *m;* or when *n* is 3, the ciphertext modulus satisfies the following form: 2^{*k*1} ± 2^{*k*2} ± 2⁰, and both *k*₁ and k₂ are integers greater than 0 and less than or equal to *m.*

S602A: The first apparatus performs homomorphic processing based on the ciphertext modulus.

In a possible implementation, the homomorphic encryption, the homomorphic decryption, and the homomorphic computation each include modulo processing; and that the first apparatus performs homomorphic processing based on the ciphertext modulus may include: performing modulo processing based on the ciphertext modulus, where the modulo processing includes shift processing and/or logical operation processing, a quantity of bits in the shift processing is related to exponents of *n* powers of 2 in the ciphertext modulus, and a quantity of times of the logical operation processing is related to a value of n.

In a possible implementation, the method may further include: The first apparatus performs at least one number theoretic transform NTT based on the modulo processing.

For a principle of the number theoretic transform NTT, refer to the foregoing descriptions of the NTT in the related technologies in embodiments of this application. Details are not described herein again.

In a possible implementation, one NTT includes M butterfly operations (or referred to as butterfly computation), and M is an integer greater than or equal to 3; and that the first apparatus performs number theoretic transform NTT based on the modulo processing may specifically include: performing the modulo processing once after every three butterfly operations; and performing a modulo operation on each multiplication result in each butterfly operation by using a modular exponentiation algorithm.

For example, the modular exponentiation algorithm may be a Montgomery (Montgomery) algorithm.

In conclusion, this embodiment of this application provides a data processing method. The method includes: A first apparatus determines a ciphertext modulus of homomorphic encryption, where the ciphertext modulus is a prime number obtained by accumulating, over *n* terms, products of different powers of 2 and coefficients, and *n* is an integer greater than or equal to 2 and less than or equal to 5; and then performs homomorphic processing based on the ciphertext modulus, where the homomorphic processing may include at least one of homomorphic encryption, homomorphic decryption, and homomorphic computation. Generally, operations such as the homomorphic encryption, the homomorphic decryption, and the homomorphic computation each involve modulo processing or a modulo operation. Common modulo processing or a common modulo operation may be directly performing long division to obtain a result. However, when a divisor and a dividend of a modulo operation are large, it is obviously difficult to obtain a result through long calculation. In view of this, a modulus is designed in this embodiment of this application. The modulus is a prime number obtained by accumulating, over *n* terms, products of different powers of 2 and coefficients. Based on such the modulus, the modulo processing or the modulo operation becomes more convenient and efficient, improving processing efficiency of the homomorphic encryption, the homomorphic decryption, the homomorphic computation, and the like that include the modulo processing/modulo operation.

An embodiment of this application further provides a data processing method. The method may also be applied to but is not limited to the communication system shown in FIG. 5, and the method may be applied to but is not limited to a homomorphic encryption scenario, a homomorphic decryption scenario, and a homomorphic computation scenario shown in FIG. 3E. For an execution entity of the method in FIG. 6B, refer to the descriptions of the execution entity of the method in FIG. 6A. Details are not described herein again. A sequence of steps in the following procedures is merely an example. In actual application, the sequence of steps in each procedure may be adjusted. Refer to FIG. 6B. A specific procedure of the method provided in this embodiment of this application is as follows:
S601B: A first apparatus determines a ciphertext modulus of homomorphic encryption, where the ciphertext modulus is a composite number obtained as a product of *d* different prime numbers, each prime number is obtained by accumulating, over *n* terms, products of different powers of 2 and coefficients, *n* is an integer greater than or equal to 2 and less than or equal to 5, and *d* is an integer greater than 1.

In a possible implementation, the ciphertext modulus may satisfy the following form (or may be understood as that the ciphertext modulus and the d different prime numbers satisfy the following relationship): $Q = {\prod }_{j = 1}^{d} {Q}_{j}$

*Q* represents the ciphertext modulus, d represents a quantity of prime numbers *Qⱼ* multiplied to obtain the ciphertext modulus, and the prime number *Qⱼ* may satisfy the following form: ${Q}_{j} = {a}_{j 1} ∗ {2}^{{k}_{j 1}} + ⋯ + {a}_{ji} ∗ {2}^{{k}_{ji}} + {a}_{jn} ∗ {2}^{{k}_{jn}}$

An exponent *kⱼᵢ* of a power of 2 in the prime number *Qⱼ* is an integer greater than 0 and less than or equal to *mⱼ* (*mⱼ* ≥ *k*_{*j*1} *>* ··· *kⱼᵢ > k*_{*j*(*n*-1)} *> kⱼₙ =* 0), *mⱼ* represents a bit width of *Qⱼ,* a coefficient *aᵢ* is +1 or -1, and * represents a multiplication sign.

S602B: The first apparatus performs homomorphic processing based on the ciphertext modulus.

In this embodiment of this application, the homomorphic processing may include but is not limited to at least one of homomorphic encryption, homomorphic decryption, and homomorphic computation.

In this embodiment of this application, if the first apparatus performs homomorphic encryption based on the ciphertext modulus, the first apparatus may be a homomorphic encryption party device, the first apparatus may be a component (for example, a module or a chip) corresponding to the homomorphic encryption party device, or the first apparatus may be an apparatus used in conjunction with the homomorphic encryption party device. If the first apparatus performs homomorphic decryption based on the ciphertext modulus, the first apparatus may be a homomorphic decryption party device, the first apparatus may be a component (for example, a module or a chip) corresponding to the homomorphic decryption party device, or the first apparatus may be an apparatus used in conjunction with the homomorphic decryption party device. If the first apparatus performs homomorphic computation (or homomorphic evaluation) based on the ciphertext modulus, the first apparatus may be a homomorphic computation party device, the first apparatus may be a component (a module, a chip, or the like) corresponding to the homomorphic computation party device, or the first apparatus may be an apparatus used in conjunction with the homomorphic computation party. A form and a quantity of execution entities are not specifically limited in this application. In this specification, the solution is described by using the first apparatus as an execution entity.

In a possible implementation, when the first apparatus performs homomorphic encryption based on a ciphertext modulus, the method may include: performing homomorphic encryption on to-be-processed information based on the ciphertext modulus, to obtain a first ciphertext; and performing blind rotation processing on the first ciphertext based on optimized number theoretic transform NTT processing and a decomposition method, to obtain a second ciphertext.

In this embodiment of this application, the solution shown in FIG. 6B is applied to the homomorphic encryption scenario. In this case, the first apparatus may be a homomorphic encryption party device, may be a component (for example, a module or a chip) corresponding to the encryption party device, or may be an apparatus used in conjunction with the homomorphic encryption party device.

In a possible implementation, when the first apparatus performs homomorphic encryption based on a ciphertext modulus, the method includes: performing homomorphic encryption on a 2^{nd} ciphertext component of an initial input ciphertext based on the ciphertext modulus, to obtain a first ciphertext, where the first ciphertext is an RLWE ciphertext, the initial input ciphertext includes a first ciphertext component and the second ciphertext component, the first ciphertext component includes N items, and N is an integer greater than 1; and performing blind rotation processing on the first ciphertext based on optimized number theoretic transform NTT processing and a decomposition method, to obtain a second ciphertext.

For example, the initial input ciphertext is represented as $c = \left(a, b\right) ∈ {LWE}_{s , q}^{n + 1} \left(m\right)$, and the 2^{nd} ciphertext component of the initial input ciphertext is represented as -*b*. The first ciphertext is represented as ${RLWE}_{sk , Q}^{N} \left({X}^{- b}\right)$, and the second ciphertext is represented as ${RLWE}_{sk , Q}^{N} \left({X}^{- b + {\sum }_{i = 0}^{n - 1} {a}_{i} ⋅ {s}_{i}}\right)$*.*

In this embodiment of this application, that the first apparatus performs blind rotation processing on the first ciphertext based on the optimized number theoretic transform NTT processing and the decomposition algorithm, to obtain the second ciphertext may include but is not limited to the following implementations:
**Implementation 1:** The first apparatus iteratively performs N blind rotation sub-operations based on the optimized number theoretic transform NTT processing, the decomposition method, and the first ciphertext, to obtain the second ciphertext, where N is an integer greater than 1, and each blind rotation sub-operation is performed based on a result or an output ciphertext of a previous blind rotation sub-operation.

An i^{th} blind rotation sub-operation is performed, where *i* ∈ [1, N], and that the i^{th} blind rotation sub-operation is associated with or corresponds to an i^{th} item *aᵢ* of the first ciphertext component of the initial input ciphertext and an i^{th} key component *sᵢ* of the initial input ciphertext may include the following:
First, a current ciphertext is decomposed based on the decomposition method to obtain *d* third ciphertexts, where moduli of the d third ciphertexts are in one-to-one correspondence with the *d* different prime numbers, a *j*^{th} third ciphertext includes a ciphertext component obtained through decomposition based on a modulus *Qⱼ* and a ciphertext component obtained through decomposition based on another modulus *Qₖ, Qₖ* ≠ *Qⱼ, j, k ∈* [1, *d*], and the current ciphertext is the initial input ciphertext (namely, the first ciphertext) or an output ciphertext of a previous blind rotation sub-operation.

Then, the *d* third ciphertexts are used as initial values of *d* accumulators; and optimized number theoretic transform NTT processing is separately performed on the initial values of the *d* accumulators to obtain transfer values of the *d* accumulators, where the optimized number theoretic transform NTT includes modulo processing, and the modulo processing may include shift processing and/or logical operation processing, where for the modulo processing included in the NTT processing on an initial value of a *j*^{th} accumulator, a quantity of bits shifted in the shift processing is related to exponents of *n* powers of 2 in a corresponding *j*^{th} prime modulus *Qⱼ,* and a quantity of times of the logical operation processing is related to a value of the terms n of the powers of 2 in the *j*^{th} prime modulus *Qⱼ.*

Corresponding external product and accumulation processing are separately performed based on the transfer values of the *d* accumulators, to obtain external product values of the d accumulators.

Further, INTT processing is separately performed on the external product values of the *d* accumulators, to obtain updated values of the *d* accumulators.

The updated values of the *d* accumulators are processed through inverse transform in the decomposition method, to obtain an output ciphertext, where the output ciphertext is used for a next blind rotation sub-operation.

After the N blind rotation sub-operations are performed, an output ciphertext of a last blind rotation sub-operation is used as the second ciphertext.

For example, for Implementation 1, that the first apparatus iteratively performs the N blind rotation sub-operations based on the optimized number theoretic transform NTT processing, the decomposition method, and the first ciphertext, to obtain the second ciphertext may include the following steps:
**Step 1:** Decompose the first ciphertext based on the decomposition method, to obtain the *d* third ciphertexts, where the moduli of the *d* third ciphertexts are in one-to-one correspondence with the d prime numbers. The *j*^{th} third ciphertext includes the ciphertext component obtained through decomposition based on the modulus *Qⱼ* and the ciphertext component obtained through decomposition based on the another modulus *Qₖ* . *Qₖ ≠ Qⱼ,* and *j, k∈*[1*, d*] (where *j and k* are integers, and *j and k* range from 1 to *d,* including 1 and *d*).
   For example, the decomposition method may be residue number system RNS decomposition, digit decomposition, gadget decomposition, or the like.
**Step 2:** Separately perform optimized number theoretic transform NTT processing on the *d* third ciphertexts, to obtain *d* transformed fourth ciphertexts.
   In this embodiment of this application, the optimized number theoretic transform NTT processing includes modulo processing, and the modulo processing may include shift processing and/or logical operation processing, where for the modulo processing included in the NTT processing on the j^{th} third ciphertext, a quantity of bits shifted in the shift processing is related to exponents of *n* powers of 2 in a corresponding *j*^{th} prime modulus *Qⱼ,* and a quantity of times of the logical operation processing is related to a value of the terms *n* of the powers of 2 in the *j*^{th} prime modulus Qⱼ.
**Step 3:** Separately perform corresponding processing such as external product and accumulation based on the *d* transformed fourth ciphertexts, to obtain *d* fifth ciphertexts.
   **In** a possible implementation, the first apparatus obtains *d* first bootstrapping keys, where the *d* first bootstrapping keys each meet an RGSW ciphertext form; the *d* first bootstrapping keys are key components corresponding to *d* bootstrapping keys; and moduli of the *d* bootstrapping ciphertexts are in one-to-one correspondence with the *d* different prime numbers. When step 3 is performed, the method may include: performing external product and accumulation processing based on the *d* transformed fourth ciphertexts and the *d* first bootstrapping keys, to obtain the *d* fifth ciphertexts.
**Step 4:** Separately perform inverse number theoretic transform INTT processing on the *d* fifth ciphertexts, to obtain *d* sixth ciphertexts.
**Step 5:** Process the *d* sixth ciphertexts through inverse transform (for example, ICRT) in the decomposition method, to obtain a seventh ciphertext.
   Step 1 to step 5 may be used as a procedure of one blind rotation sub-operation (which may be referred to as an *i*^{th} blind rotation sub-operation, where i=1). If the initial input ciphertext is represented as $c , c = \left(a, b\right) ∈ {LWE}_{s , q}^{n + 1} \left(m\right)$, the *i*^{th} blind rotation sub-operation is associated with or corresponds to the i^{th} item *aᵢ* of the first ciphertext component ***a*** of the initial input ciphertext and the i^{th} key component *sᵢ* of the initial input ciphertext.
**Step 6**: Use the seventh ciphertext as a new input ciphertext (equivalent to the first ciphertext) of step 1 in a next blind rotation sub-operation; and iteratively perform steps 1 to 5 N-1 times, where N is an integer greater than 1. A seventh ciphertext obtained in step 5 of a last blind rotation sub-operation (or referred to as an *i*^{th} blind rotation sub-operation, where i=N) is used as the second ciphertext.

**Implementation** 2: The first apparatus decomposes the current first ciphertext based on the decomposition method, to obtain *d* third ciphertexts, where moduli of the *d* third ciphertexts are in one-to-one correspondence with *d* different prime numbers, a *j* ^{th} third ciphertext includes a ciphertext component obtained through decomposition based on a modulus *Qⱼ* and a ciphertext component obtained through decomposition based on another modulus *Qₖ, Qₖ* # *Qⱼ,* and *j, k* ∈ [1, *d*] ; separately perform optimized NTT processing on the *d* third ciphertexts, to obtain *d* fourth ciphertexts; use the *d* fourth ciphertexts as initial values of *d* accumulators; perform N-1 times of CMUX gate processing and ciphertext combination processing based on the initial values of the *d* accumulators, to obtain updated values of the *d* accumulators, where N is an integer greater than 1, and each time of CMUX gate processing and ciphertext combination processing is performed based on a result or an output ciphertext of a previous time of CMUX gate processing and ciphertext combination processing; perform both CMUX gate processing and inverse number theoretic transform INTT processing once on each of the updated values of the *d* accumulators, to obtain *d* target ciphertexts; and finally, obtain the second ciphertext based on the *d* target ciphertexts according to an inverse method of the decomposition method.

In a possible implementation, that the first apparatus performs N-1 times of CMUX gate processing and ciphertext combination processing based on the initial values of the *d* accumulators, to obtain the updated values of the *d* accumulators includes:
performing an i^{th} time of CMUX gate processing and ciphertext combination processing, where the i^{th} time of CMUX gate processing and ciphertext combination processing is associated with or corresponds to an i^{th} item *aᵢ* of the first ciphertext component of the initial input ciphertext and an i^{th} key component *sᵢ* of the initial input ciphertext, where *i* ∈ [1, N - 1], and may include the following:
separately performing corresponding external product and accumulation processing based on the current initial values of the *d* accumulators, to obtain external product values of the *d* accumulators; and
determining *d* combination ciphertexts based on the current external product values of the *d* accumulators, where determining a j^{th} combination ciphertext based on an external product value of a j^{th} accumulator (any one of the *d* accumulators) includes: re-permuting and combining the external product value of the j^{th} accumulator and a ciphertext component of a k^{th} accumulator to obtain the j^{th} combination ciphertext, where the ciphertext component of the k^{th} accumulator is obtained by performing INTT processing under a modulus *Qₖ* and NTT processing under a modulus *Qⱼ* based on an external product value of the *k*^{th} accumulator, *k* ≠ *j*, and the *d* combination ciphertexts are used for a next time of CMUX gate processing and ciphertext combination processing.

For example, for Implementation 2, that the first apparatus performs blind rotation processing on the first ciphertext based on the optimized NTT processing and the decomposition algorithm, to obtain the second ciphertext may include the following steps:
**Step 1:** The first apparatus decomposes the first ciphertext based on the decomposition method, to obtain the *d* third ciphertexts, where the moduli of the *d* third ciphertexts are in one-to-one correspondence with the *d* different prime numbers. The *j*^{th} third ciphertext includes the ciphertext component obtained through decomposition based on the modulus *Qⱼ* and the ciphertext component obtained through decomposition based on the another modulus *Qₖ* ≠ *Qⱼ* other than *Qⱼ,* and *j, k∈*[1, *d]* (where *j and k* are integers, and *j and k* range from 1 to *d,* including 1 and *d*).
**Step 2:** The first apparatus separately performs optimized number theoretic transform NTT processing on the *d* third ciphertexts, to obtain *d* transformed fourth ciphertexts.
   In this embodiment of this application, the optimized number theoretic transform NTT processing includes modulo processing, and the modulo processing may include shift processing and/or logical operation processing, where for the modulo processing included in the NTT processing on the *j*^{th} third ciphertext, a quantity of bits shifted in the shift processing is related to exponents of *n* powers of 2 in a corresponding j^{th} prime modulus *Qⱼ,* and a quantity of times of the logical operation processing is related to a value of the terms *n* of the powers of 2 in the *j*^{th} prime modulus *Qⱼ.*
**Step 3:** The first apparatus separately performs corresponding processing such as external product and accumulation based on the *d* transformed fourth ciphertexts, to obtain *d* fifth ciphertexts (equivalent to the external product values of the *d* accumulators).
   In a possible implementation, the first apparatus obtains *d* first bootstrapping keys, where the *d* first bootstrapping keys each meet an RGSW ciphertext form; the *d* first bootstrapping keys are key components corresponding to *d* bootstrapping keys; and moduli of the *d* bootstrapping ciphertexts are in one-to-one correspondence with the *d* different prime numbers. When step 3 is performed, the method may include: performing external product and accumulation processing based on the *d* transformed fourth ciphertexts and the *d* first bootstrapping keys, to obtain the *d* fifth ciphertexts.
Step 4: The first apparatus obtains *d* corresponding sixth ciphertexts (equivalent to the *d* combination ciphertexts) based on the *d* fifth ciphertexts (equivalent to the external product values of the *d* accumulators).

In a possible implementation, in step 4, obtaining a corresponding *j*^{th} sixth ciphertext for a *j*^{th} fifth ciphertext may include: performing, based on the k^{th} (*k* ≠ *j*) fifth ciphertext, INTT under the modulus *Qₖ* and NTT under the modulus *Qⱼ,* to obtain a corresponding first ciphertext component; and re-permuting and combining the *j*^{th} fifth ciphertext and the first ciphertext component, to obtain the *j*^{th} sixth ciphertext.

Further, the *d* sixth ciphertexts are used as new input ciphertexts (equivalent to the fourth ciphertexts in step 3), and steps 3 and 4 above are iteratively performed N-2 times, to obtain the updated values of the *d* accumulators, where N is an integer greater than 1.

**Step 5:** Perform both CMUX gate processing and inverse number theoretic transform INTT processing once on each of the updated values of the *d* accumulators, to obtain the *d* target ciphertexts.

**Step 6:** The first apparatus obtains the second ciphertext based on the d target ciphertexts through inverse transform (for example, ICRT) in the decomposition method.

Compared with Implementation 1, in Implementation 2, the sixth ciphertexts are obtained without performing a complete decomposition operation, but the fifth ciphertexts with the modulus *Qⱼ* in step 3 are directly stored, and a first ciphertext component corresponding to the another modulus and the fifth ciphertexts are re-permuted and combined, to obtain the corresponding sixth ciphertexts. Therefore, for the *d* sixth ciphertexts, *d* * 2 times of NTT or INTT computation may be reduced in total. In a process of obtaining the first ciphertext component, two or more consecutive NTT or INTT transforms may alternatively be implemented by using a combined single function.

In conclusion, this embodiment of this application provides a data processing method. The method includes: A first apparatus determines a ciphertext modulus of homomorphic encryption, where the ciphertext modulus is a composite number obtained as a product of *d* different prime numbers, each prime number is obtained by accumulating, over *n* terms, products of different powers of 2 and coefficients, n is an integer greater than or equal to 2 and less than or equal to 5, and *d* is an integer greater than 1; and performs homomorphic processing based on the ciphertext modulus, where the homomorphic processing includes at least one of homomorphic encryption, homomorphic decryption, and homomorphic computation. Generally, operations such as the homomorphic encryption, the homomorphic decryption, and the homomorphic computation each involve modulo processing or a modulo operation. Common modulo processing or a common modulo operation may be directly performing long division to obtain a result. However, when a divisor and a dividend of the modulo operation are large, it is obviously difficult to obtain a result through long division. In view of this, a modulus is designed in embodiments of this application. The modulus is a composite number obtained as a product of the *d* different prime numbers, and each prime number is obtained by accumulating products of powers of 2 and coefficients in n terms, where *n* is an integer greater than or equal to 2 and less than or equal to 5. In application, a modulus of the composite number may be first decomposed to obtain moduli of the *d* different prime numbers, and then the modulo processing/modulo operation is performed based on the moduli of the *d* different prime numbers. Similar to the foregoing method, modular efficiency is higher, thereby improving processing efficiency of the homomorphic encryption, the homomorphic decryption, the homomorphic computation, and the like that include the modulo processing/modulo operation.

### 5. Description of specific embodiments:

Based on the data processing methods described in FIG. 6A and FIG. 6B, the following provides detailed descriptions by using several specific embodiments.

### Embodiment 1

In Embodiment 1, based on the solution in FIG. 6A, in homomorphic encryption, encryption and other processing are implemented by using a prime modulus, and modulo processing/a modulo operation is designed. Details are as follows:

In a possible implementation, a ciphertext modulus Q is set to a Solinas prime number form: Q = *2*^{*k*1} ± 2^{k2} ± 1. *k*₁>*k*₂>0, and *k*₁ and *k*₂ are integers.

In another possible implementation, a ciphertext modulus Q is set to a Mersenne prime number form: Q = 2^{*k*1} ± 1. *k*₁>0, and *k*₁ is an integer.

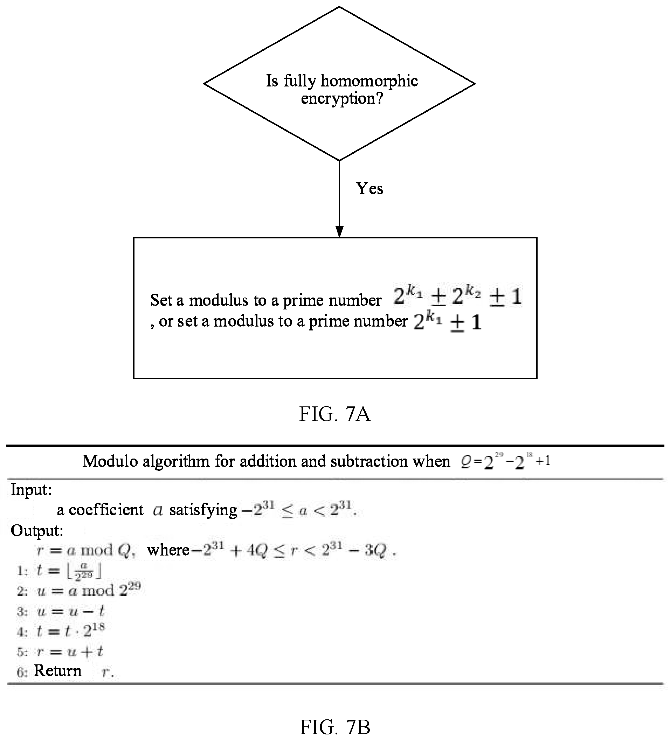

For example, refer to FIG. 7A. If the process is fully homomorphic encryption processing, the modulus Q is set to a Solinas prime number 2^{*k*1} ± 2^{*k*2} ± 1 or is set to 2^{*k*1} ± 1; and homomorphic encryption processing is performed on to-be-encrypted information based on the modulus Q in this form of 2^{*k*1} ± 2^{*k*2} ± 1 or 2^{*k*1} ± 1, to obtain a ciphertext.

In Embodiment 1, the modulus Q *=* 2^{*k*1} - 2^{*k*2} + 1 is used as an example to calculate a modulo operation *r = a mod Q.* In this application, modulo processing/a modulo operation is designed. The modulo processing/modulo operation may be implemented by performing simple shift and logical operations.

Example 1: For the modulus *Q =* 2^{*k*1} + 2^{*k*2} + 1, modulo processing/a modulo operation is designed, including the following steps:
1: $t = \left⌊\frac{a}{{2}^{{k}_{1}}}\right⌋$, where *t* is an integer, to be specific, after right shift by *k*₁ bits, rounding down is performed, to obtain a first quotient of *a* relative to 2^{*k*1}*.*
2: *u* = *a mod* 2^{*k*1}*,* where u is an integer, to be specific, a first remainder of *a* relative to 2^{*k*1} is determined.
3: *u = u - t,* to be specific, a subtraction operation is performed on the first remainder in step 2 and the first quotient in step 1.
4: *r = u - t ·* 2^{*k*2}*,* to be specific, t is shifted left by *k*₂ bits, and then undergoes a subtraction operation with *u*.

For example, Q=37=100101= 2⁵ + 2² + 1 , *a* = 40, and *r* = *a mod* Q = 40 *mod* 37 = 3, and the modulo operation designed in this embodiment of this application is as follows:
1: $t = \left⌊\frac{40}{{2}^{5}}\right⌋ = 1 ;$
2: $u = 40 mod {2}^{5} = 8 ;$
3: $u = u - t = 8 - 1 = 7 ;$ and
4: $r = 7 - 1 ⋅ {2}^{2} = 3 .$

Example 2: For the modulus *Q =* 2^{*k*1} *-* 2^{*k*2} + 1, modulo processing/a modulo operation is designed, including the following steps:
Step 1: $t = \left⌊\frac{a}{{2}^{{k}_{1}}}\right⌋$, where t is an integer, to be specific, after right shift by *k*₁ bits, rounding down is performed, to obtain a first quotient of *a* relative to 2^{*k*1}*.*
Step 2: *u* = *a mod* 2^{*k*1}*,* where *u* is an integer, to be specific, a first remainder of *a* relative to 2^{*k*1} is determined.
Step 3: *u = u - t,* to be specific, a subtraction operation is performed on the first remainder in step 2 and the first quotient in step 1.
Step 4: *r = u* + *t ·* 2^{*k*2}, to be specific, *t* is shifted left by *k*₂ bits, and then undergoes an addition operation with *u*.

For example, FIG. 7B shows an algorithm of modulo processing for the ciphertext modulus *Q* = 2²⁹ - 2¹⁸ + 1 = 536608769. Refer to FIG. 7B. A coefficient *a* is input, and -2³¹ ≤ *a* ≤ 2³¹. Refer to the modulo operation in Example 2. A modulo result *r* is output, where r satisfies -2³¹ + 4Q ≤ *r* ≤ 2³¹ - 3*Q.*

In Embodiment 1, the ciphertext modulus Q is set to the form 2^{*k*1} ± 2^{*k*2} ± 1 or the form 2^{*k*1} ± 1. Based on such a special form of modulus, efficient modulo processing/an efficient modulo operation may be designed, that is, a modulo result is obtained by performing simple shift and logical operations.

### Embodiment 2

In Embodiment 2, to improve efficiency of NTT processing in blind rotation, the ciphertext modulus and the modulo processing/modulo operation designed in Embodiment 1 are applied to the NTT. To be specific, in blind rotation, the RLWE ciphertext modulus Q is set to a Solinas prime number in the form of 2^{*k*1} ± 2^{*k*2} ± 1, and the modulo processing/modulo operation designed in this embodiment of this application is used.

For example, when a 29-bit prime number is used as the ciphertext modulus to perform NTT-based blind rotation processing, the following is included:
For example, the ciphertext modulus is a prime number 536608769, and the prime number may be written into a form of 2²⁹ - 2¹⁸ + 1.

In a possible implementation, the NTT-based blind rotation processing includes NTT computation, where the NTT computation includes M butterfly operations, where M is an integer greater than or equal to 3. In this embodiment of this application, performing NTT computation includes:
1. After every three butterfly operations, the modulo processing/modulo operation shown in Embodiment 1 is performed, to perform a modulo operation on a result of the butterfly operations once.
   Each butterfly operation includes one time of addition and subtraction, in means that after three addition and subtraction operations, the algorithm shown in FIG. 7B is executed once for a calculation result of the three times of addition and subtraction. That is, modulo reduction of addition and subtraction is performed by using the modulo algorithm shown in FIG. 7B, and the calculation result of the three addition and subtraction operations performs a modulo operation on the prime number in the form of 2^{*k*1} ± 2^{*k*2} ± 1. For example, *r* = *a* mod Q, where *a* represents the calculation result of the addition and subtraction operations, and the modulus Q is a prime number in the form of 2^{*k*1} ± 2^{*k*2} ± 1.
2. In each butterfly operation, a modulo operation is performed, by using a Montgomery (Montgomery) algorithm, on a result obtained through each multiplication operation, that is, after each multiplication of unity root*x[n], a modulo operation is performed by using the Montgomery (Montgomery) algorithm. For details of the Montgomery (Montgomery) algorithm, refer to the process of the Montgomery (Montgomery) algorithm shown in the conventional technology 5.

Based on an output range of the algorithm described in FIG. 7B, it is clear that before modulo reduction is performed on a sum or difference of addition and subtraction results, an output of the algorithm may continue to undergo an addition operation or a subtraction operation with an output of the Montgomery algorithm of the three butterfly operations.

In this embodiment of this application, for a signed integer *a* within 32 bits, modulo processing (*a* mod Q) is performed on *a* by using the algorithm shown in FIG. 7B, and an output modulo result r satisfies -2³¹ + 4*Q* ≤ *r* < 2³¹ - *3Q.*

The following verifies that the result r of the modulo operation designed in this embodiment of this application satisfies: -2³¹ + 4Q ≤ *r* < 2³¹ - *3Q.*

For a 32-bit signed integer a, the integer *t* is a quotient of $\frac{a}{{2}^{29}}$, the integer *u* is a remainder of $\frac{a}{{2}^{29}}$, *t* ∈ [-4,3] ∩ *Z*, and *u* ∈ [0, 2²⁹ - 1] ∩ *Z*. Therefore, *a* may be represented by *t* and *u,* that is, *a = t ·* 2²⁹ + *u.* Since Q = 2²⁹ - 2¹⁸ + 1, 2²⁹ ≡ 2¹⁸ - 1 *mod* Q. Therefore, the modulus Q satisfies the following relationship:
*a = t* · 2²⁹ *+ u* = *t ·* (2¹⁸ - 1) *+ u = r mod Q;*

According to *t* ∈ [-4,3], *u* ∈ [0, 2²⁹ - 1], and the foregoing formula, a range of *r* output by using the algorithm shown in FIG. 7B may be obtained as follows: $- 4 ⋅ \left({2}^{18}-1\right) + 0 \leq r \leq 3 ⋅ \left({2}^{18}-1\right) + {2}^{29} - 1 ;$ and further: $- {2}^{31} + 4 Q = - 4 ⋅ \left({2}^{18}-1\right) + 0 \leq r \leq 3 ⋅ \left({2}^{18}-1\right) + {2}^{29} - 1 < {2}^{31} - 3 Q .$

For 3 · (2¹⁸ - 1) + 2²⁹ - 1 < 2³¹ - *3Q,* the proof is as follows:
Since *Q* = 2²⁹ - 2¹⁸ + 1, 2¹⁸ - 1 = 2²⁹ - *Q*; and further: $\begin{matrix}3 \left({2}^{18}-1\right) + {2}^{29} - 1 = 3 \left({2}^{29}-Q\right) + {2}^{29} - 1 \\ = 3 ∗ {2}^{29} - 3 Q + {2}^{29} - 1 \\ = \left({2}^{2}-1\right) ∗ {2}^{29} - 3 Q + {2}^{29} - 1 \\ = {2}^{31} - 3 Q - 1 ;\end{matrix}$

Therefore, 3(2¹⁸ - 1) + 2²⁹ - 1 < 2³¹ - 3*Q.*

In Embodiment 2, in the NTT, the NTT processing in the blind rotation is optimized by using a special reduction method (simple shift and logical operations) shown in FIG. 7B and Montgomery reduction with lazy reduction idea (Montgomery reduction with lazy reduction idea) in the NTT (that is, after three times of butterfly calculation/three butterfly operations, a modulo operation is performed once by using the method shown in FIG. 7B in this embodiment of this application). In this way, execution time of external product in the blind rotation can be effectively shortened, and overall processing efficiency of the blind rotation or bootstrapping can be improved.

### Embodiment 3

In Embodiment 3, based on the solution described in FIG. 6B, in a bootstrapping process of homomorphic encryption, a composite number is used as the ciphertext modulus Q, that is, $Q = {\prod }_{j = 1}^{{d}_{R}} {Q}_{j}$*,* where *Qⱼ* may be a Solinas prime number in a form of 2^{*k*1} ± 2^{*k*2} ± 1 or a different prime number in a form of 2^{k1} ± 1 , every two *Qⱼ* are coprime; and j is an integer in a range of 1 ≤ *j* ≤ *d_{R}*.

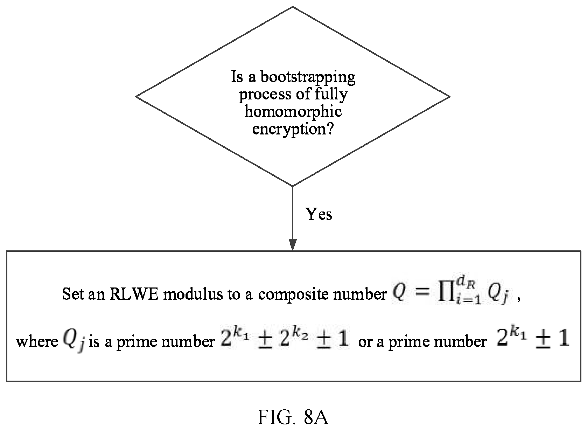

In a possible implementation, referring to a procedure shown in FIG. 8A, if the process is a bootstrapping process of fully homomorphic encryption, a modulus Q of a to-be-bootstrapped ciphertext RLWE is set to a composite number $Q = {\prod }_{j = 1}^{{d}_{R}} {Q}_{j}$, where *Qⱼ* is a prime number in the form of *2^{k1}* ± 2^{k2} ± 1 or a prime number in the form of 2^{k1} ± 1.

In a possible implementation, in the bootstrapping process of homomorphic encryption, an RNS decomposition technique and NTT may be used to control noise growth, so that processing efficiency of blind rotation in the bootstrapping process can be improved. For example, for a modulus directly represented within 64 bits, the modulus is first decomposed into several prime numbers not exceeding 32 bits by using the RNS decomposition technique, and then parallel NTT-based external product calculation is performed under the modulus that undergoes RNS decomposition.

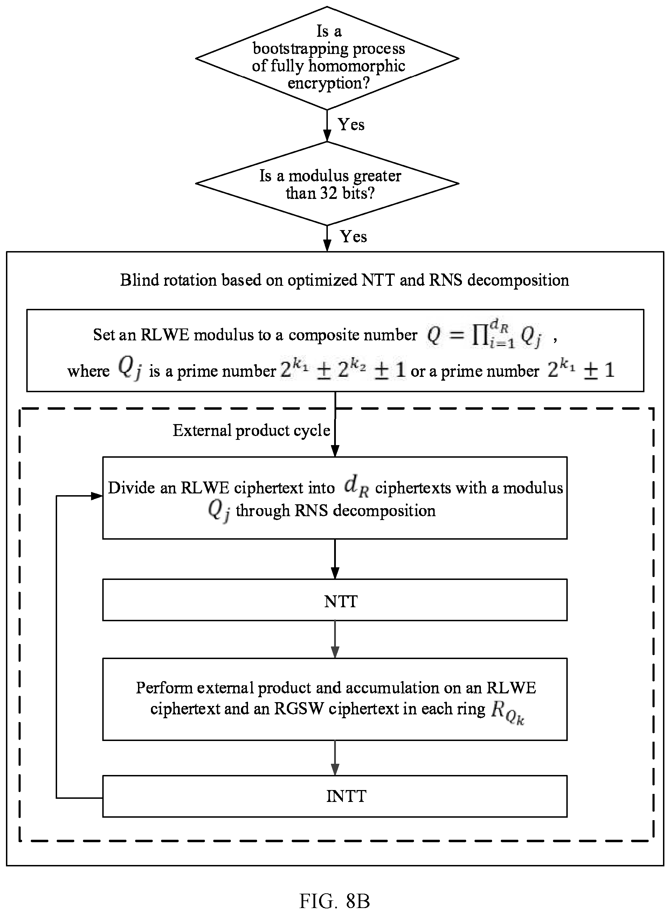

For example, in homomorphic encryption processing, a composite number that satisfies $Q = {\prod }_{j = 1}^{{d}_{R}} {Q}_{i}$ is selected as a modulus (for example, a modulus represented within 64 bits) for performing encryption processing on to-be-encrypted information, where *Qⱼ* is a Solinas prime number within 32 bits in the form of 2^{*k*1} ± 2^{*k*2} ± 1 or a prime number within 32 bits in the form of 2^{k1} ± 1. Further, refer to a procedure shown in FIG. 8B. Whether the bootstrapping process of fully homomorphic encryption is currently performed is determined. If the bootstrapping process is currently performed, whether the ciphertext modulus is greater than 32 bits is further determined. If the ciphertext modulus is a prime number greater than 32 bits, blind rotation processing based on optimized NTT and the RNS decomposition technique is performed.

The blind rotation processing based on the optimized NTT and the RNS decomposition technique is correspondingly described below.

The blind rotation processing based on the optimized NTT and the RNS decomposition technique includes the following steps:
**Step 1:** Decompose an RLWE ciphertext in a ring *R_{Q}* into *d_{R}* ciphertexts in ${R}_{{Q}_{1}} , … , {R}_{{Q}_{{d}_{R}}}$ using the RNS decomposition technique.
   That is, in step 1, the RLWE ciphertext with the modulus Q is decomposed into d_{R} ciphertexts using the RNS decomposition technique. Moduli of the *d_{R}* ciphertexts are *Q*₁, *Q₂,* ..., and *Q_{dR}.* The moduli of the *d_{R}* ciphertexts are prime numbers within 32 bits.
**Step 2:** Separately perform NTT processing on the *d_{R}* ciphertexts.

Optimized NTT is used in external product. Therefore, NTT transform needs to be performed on the *d_{R}* ciphertexts.

In addition, in the optimized NTT processing, the modulo processing/modulo operation described in Embodiment 1 is performed, that is, for a signed integer *a* **within 32 bits,** a modulo operation may be completed through simple shift and logical operations.

**Step 3**: Perform external product and accumulation on the RLWE ciphertext and a bootstrapping key (in a form of the RGSW ciphertext) in each ring.

**Step 4:** Perform INTT processing on a result of external product and accumulation.

For example, if *d_{R}*=2, in each external product calculation process, according to a principle of canceling consecutive NTT and INTT transforms, and using a combined single function to implement two consecutive NTT or INTT transforms, four times of NTT computation can be reduced.

For the external product operation involved in step 3, the following uses *d_{R}*=2 as an example to describe an external product operation in blind rotation based on RNS decomposition.

For an RLWE ciphertext ***ct** =* (***a**, **b***) ∈ *RLWE_{sk,Q}*(*µ*), two RLWE ciphertexts obtained by decomposing the RLWE ciphertext ***ct*** through RNS decomposition are defined as *ct*_{*Q*1} ∈ *RLWE*_{*sk,Q*1}(*µ*) and *ct*_{*Q*2} ∈ *RLWE*_{*sk,Q*2} (*µ*). Results of RNS decomposition and complement (complement) respectively corresponding to *ct*_{*Q*1} and *ct*_{*Q*2} may be expressed as follows: $c {t}_{{Q}_{1}} = \left({\left[a\right]}_{{Q}_{1}}, {\left[{\left[a\right]}_{{Q}_{2}}\right]}_{{Q}_{1}}, {\left[b\right]}_{{Q}_{1}}, {\left[{\left[b\right]}_{{Q}_{2}}\right]}_{{Q}_{1}}\right) ∈ {R}_{{Q}_{1}}^{4} ;$ and $c {t}_{{Q}_{2}} = \left({\left[{\left[a\right]}_{{Q}_{1}}\right]}_{{Q}_{2}}, {\left[a\right]}_{{Q}_{2}}, {\left[{\left[b\right]}_{{Q}_{1}}\right]}_{{Q}_{2}}, {\left[b\right]}_{{Q}_{2}}\right) ∈ {R}_{{Q}_{2}}^{4} .$

For an RLWE ciphertext ***ct***_{*Q*1} based on a modulus *Q*₁, ${\left[{\left[a\right]}_{{Q}_{2}}\right]}_{{Q}_{1}}$ and ${\left[{\left[b\right]}_{{Q}_{2}}\right]}_{{Q}_{1}}$ are results of complements under other moduli, and [*a*]_{*Q*1} and [*b*]_{*Q*1} are results of RNS decomposition under the modulus *Q*₁. For an RLWE ciphertext ***ct**_{Q2}* based on a modulus *Q*₂, ${\left[{\left[a\right]}_{{Q}_{1}}\right]}_{{Q}_{2}}$ and ${\left[{\left[b\right]}_{{Q}_{1}}\right]}_{{Q}_{2}}$ are results of complements under other moduli, and [***a***]_{*Q*2} and [***b***]*_{Q2}* are results of RNS decomposition under the modulus *Q*₂.

The bootstrapping key used in blind rotation is usually in the form of the RGSW ciphertext. The RGSW ciphertext is stored as *CT*_{*Q*1} ∈ *RGSW*_{*sk,Q*1}([*m*]_{*Q*1}) and *CT*_{*Q*2} ∈ *RGSW*_{*sk,Q*2}([*m*]_{*Q*2}) based on the moduli *Q*₁ and *Q*₂. ***G**_{Qk}* represents a gadget matrix. The RGSW ciphertext may be expressed as: $c {t}_{{Q}_{k}} = \left[\left(\begin{matrix}c {t}_{0} \\ c {t}_{1} \\ c {t}_{2} \\ c {t}_{3}\end{matrix}\right)\right] + {\left[m\right]}_{{Q}_{k}} ⋅ {\left[G\right]}_{{Q}_{k}} ∈ {R}_{{Q}_{k}}^{4 \times 2} ,$ where k=1, 2 ${G}_{{Q}_{k}} = {\left[\left(\begin{matrix}{Q}_{1}^{′} ⋅ {\hat{Q}}_{1} 0 \\ {Q}_{2}^{′} ⋅ {\hat{Q}}_{2} 0 \\ 0 {Q}_{1}^{′} ⋅ {\hat{Q}}_{1} \\ 0 {Q}_{2}^{′} ⋅ {\hat{Q}}_{2}\end{matrix}\right)\right]}_{{Q}_{k}} ∈ {R}_{{Q}_{k}}^{4 \times 2}$

An RNS-based external product of an RLWE ciphertext ***ct** =* (***a***, ***b***) ∈ *RLWE_{sk,Q}*(*µ*) and an RGSW ciphertext CTE *RGSW_{sk,Q}*(*m*) in each ring *R_{Qk}* is defined as: $c {t}_{k}^{′} = \left(c{t}_{{Q}_{k}}⊙C{T}_{{Q}_{k}}\right)$ mod *Qₖ.*

Further, ICRT processing may be performed on an external product result ${ct}_{{Q}_{1}}^{′}$*,* so that an external product result under the original modulus Q may be restored:
$ct ′ = \left(c{t}_{{Q}_{1}}^{′}⋅{Q}_{1}^{′}⋅{\hat{Q}}_{1}+c{t}_{{Q}_{2}}^{′}⋅{Q}_{2}^{′}⋅{\hat{Q}}_{2}\left(modQ\right)={RLWE}_{sk , {Q}_{1}}\left({\left[m\right]}_{{Q}_{1}}⋅{\left[μ\right]}_{{Q}_{1}}\right)⋅{Q}_{1}^{′}⋅\right.$ ${\hat{Q}}_{1} + {RLWE}_{sk , {Q}_{2}} \left({\left[m\right]}_{{Q}_{2}}⋅{\left[μ\right]}_{{Q}_{2}}\right) ⋅ {Q}_{2}^{′} ⋅ {\hat{Q}}_{2} \left(modQ\right) = {RLWE}_{sk , Q} \left(m⋅μ\right)$*.*

Based on the foregoing proposed blind rotation processing solution based on the optimized NTT and the RNS decomposition technique, GINX blind rotation based on RNS decomposition is used as an example for detailed description below.

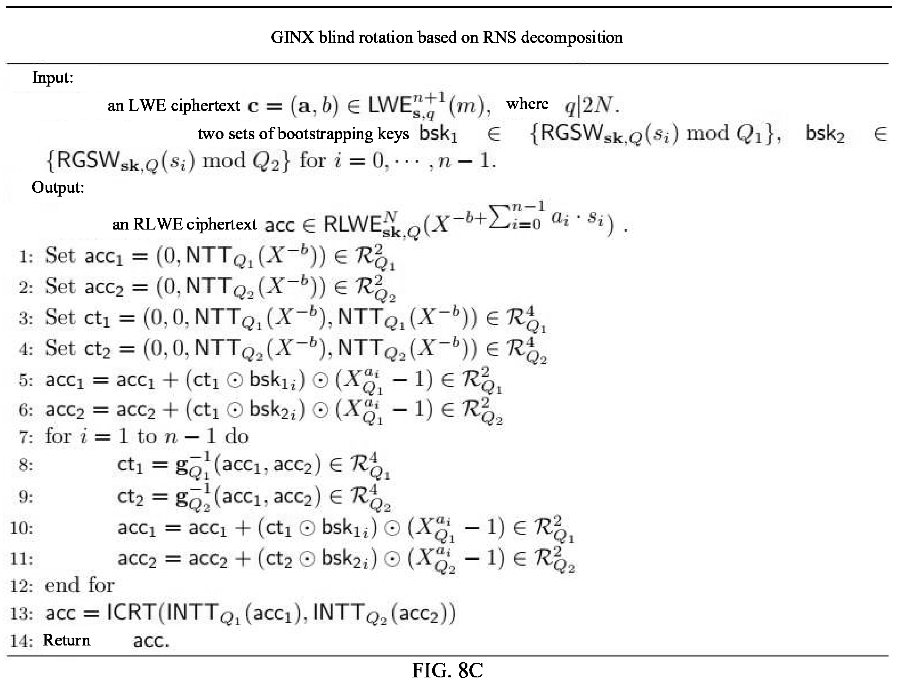

Refer to an algorithm shown in FIG. 8C. Bootstrapping keys used for blind rotation are *bsk*₁ ∈ {*RGSW_{sk,Q}*(*sᵢ*)*mod Q*₁} and *bsk*₂ ∈ {*RGSW_{sk,Q}*(*sᵢ*)*mod Q*₂}, where i = 0,····,*n* - 1, and blind rotation is performed using RNS decomposition.

Input an LWE ciphertext c=(a, b) and two bootstrapping key sets *bsk*₁ and *bsk₂,* where $c = \left(a, b\right) ∈ {LWE}_{s , q}^{n + 1} \left(m\right)$ ; and output an RLWE ciphertext $acc ∈ {RLWE}_{sk , Q}^{N} \left({X}^{- b + {\sum }_{i = 0}^{n - 1} {a}_{i} ⋅ {s}_{i}}\right)$ *.*

Refer to FIG. 8C. Parsing of the algorithm shown in FIG. 8C is as follows:
Lines 1 and 2: Set two accumulators *acc*₁ and *acc*₂.

Forms of *acc*₁ and *acc*₂ are as follows: ${acc}_{1} = \left(0,{NTT}_{{Q}_{1}}\left({X}^{- b}\right)\right) ∈ {R}_{{Q}_{1}}^{2} ;$ and ${acc}_{2} = \left(0,{NTT}_{{Q}_{2}}\left({X}^{- b}\right)\right) ∈ {R}_{{Q}_{2}}^{2}$

Lines 3 and 4: Set two input ciphertexts ct₁ and ct₂ during external product.

Forms of ct₁ and ct₂ are as follows: ${ct}_{1} = \left(0,0,{NTT}_{{Q}_{1}}\left({X}^{- b}\right),{NTT}_{{Q}_{1}}\left({X}^{- b}\right)\right) {R}_{{Q}_{1}}^{4} ;$ and ${ct}_{2} = \left(0,0,{NTT}_{{Q}_{2}}\left({X}^{- b}\right),{NTT}_{{Q}_{2}}\left({X}^{- b}\right)\right) {R}_{{Q}_{2}}^{4}$

Because the ciphertext includes n(N) components *aᵢ*, n(N) times of external product operation and accumulator value update need to be performed.

Lines 5 and 6: For the accumulators *acc*₁ and *acc*₂, a 1^{st} time of external product operation and update of values of *acc*₁ and *acc*₂ is performed.

External product operation and accumulator value update performed by *acc*₁ and *acc*₂ satisfy the following formulas: $update {acc}_{1} = {acc}_{1} + \left({ct}_{1}⊙{bsk}_{1 i}\right) ⊙ \left({X}_{{Q}_{1}}^{{a}_{i}}-1\right) ∈ {R}_{{Q}_{1}}^{2}$ Formula 1 $update {acc}_{2} = {acc}_{2} + \left({ct}_{2}⊙{bsk}_{2 i}\right) ⊙ \left({X}_{{Q}_{2}}^{{a}_{i}}-1\right) ∈ {R}_{{Q}_{2}}^{2}$ Formula 2

Lines 7 to 11: Continue to perform remaining n-1 times of external product operation and accumulator value update based on an external product and updated values of the accumulators *acc*₁ and *acc*₂ in the 1^{st} time of processing.

Specifically, for the accumulators *acc*₁ and *acc*₂*,* the following steps are cyclically performed n-1 times:
**Step 1:** The accumulator *acc*₁ obtains a value of ct₁ (used as an input value of an external product ct₁ in Formula 1 in the following step 2) through the decomposition operation shown in Formula 3, and the accumulator *acc*₂ obtains a value of ct₂ (used as an input value of an external product ct₂ in Formula 2 in the following step 2) through the decomposition operation shown in Formula 4: $update {ct}_{1} = {g}_{{Q}_{1}}^{- 1} \left(acc1,acc2\right) ∈ {R}_{{Q}_{1}}^{4}$ Formula 3 $update {ct}_{2} = {g}_{{Q}_{2}}^{- 1} \left(acc1,acc2\right) ∈ {R}_{{Q}_{2}}^{4}$ Formula 4
**Step 2**: *acc*₁ performs an external product operation and updates the value of *acc*₁ according to Formula 1, and *acc*₂ performs an external product operation and updates the value of *acc*₂ according to Formula 2. $update {acc}_{1} = {acc}_{1} + \left({ct}_{1}⊙{bsk}_{1 i}\right) ⊙ \left({X}_{{Q}_{1}}^{{a}_{i}}-1\right) ∈ {R}_{{Q}_{1}}^{2}$ Formula 1 $update {acc}_{2} = {acc}_{2} + \left({ct}_{2}⊙{bsk}_{2 i}\right) ⊙ \left({X}_{{Q}_{2}}^{{a}_{i}}-1\right) ∈ {R}_{{Q}_{2}}^{2}$ Formula 2

A value of an external product operation and updated values *acc*₁ and *acc*₂ in each time of processing are used for a next time of external product operation and accumulator value update. For example, updated values of *acc*₁ and *acc*₂ in the current step 2 are used as values of *acc*₁ and *acc₂* in a next external product operation in step 1.

For example, *acc₁* and *acc*₂ that are obtained by performing external product and update in step 1 are actually two RLWE ciphertexts ${ct}_{{Q}_{1}}^{′}$ and ${ct}_{{Q}_{2}}^{′}$ that are stored in an NTT form, and ${ct}_{{Q}_{1}}^{′}$ and ${ct}_{{Q}_{2}}^{′}$ are input into next external product processing. Generally, in the next external product processing, the two ${ct}_{{Q}_{1}}^{′}$ and ${ct}_{{Q}_{2}}^{′}$ in the NTT form are first transformed into a coefficient representation form through INTT transform. Then, ct₁ ( ${ct}_{{Q}_{1}} ∈ {R}_{{Q}_{1}}^{4}$) and ct₂ ( ${ct}_{{Q}_{2}} ∈ {R}_{{Q}_{2}}^{4}$ ) are obtained according to Formula 3 and Formula 4. Further, external product results ${ct}_{{Q}_{1}}^{"}$ and ${ct}_{{Q}_{2}}^{"}$ are obtained according to Formula 1 and Formula 2 in step 2. In the external product operations of Formula 1 and Formula 2, and both acc and ct are executed in the NTT form.

Corresponding descriptions are provided for the decomposition function ( ${g}_{{Q}_{k}}^{- 1}$*,* where *k* = 1,2) in step 1.

This embodiment of this application defines a new decomposition function, for obtaining a ciphertext input in an external product operation. The new decomposition function includes NTT, INTT, and RNS decomposition.

For example, step 1 is used as an example. Decomposition functions for obtaining ct₁ and ct₂ are represented as ${g}_{{Q}_{1}}^{- 1}$ and ${g}_{{Q}_{2}}^{- 1}$*,* to perform a decomposition operation on a ciphertext ${ct}_{{Q}_{1}}^{′}$ (for example, acc1 in Formula 3 and Formula 4) and a ciphertext ${ct}_{{Q}_{2}}^{′}$(for example, *acc*₂ in Formula 3 and Formula 4). The decomposition function includes NTT, INTT, and RNS decomposition. For the ciphertexts ${ct}_{{Q}_{1}}^{′} = \left({\left[a\right]}_{{Q}_{1}}, {\left[b\right]}_{{Q}_{1}}\right) ∈ {R}_{{Q}_{1}}^{2}$ and ${ct}_{{Q}_{2}}^{′} = \left({\left[a\right]}_{{Q}_{2}}, {\left[b\right]}_{{Q}_{2}}\right) ∈ {R}_{{Q}_{2}}^{2}$ in the NTT form, decomposition functions of the ciphertexts may be specifically expressed as the following formulas: ${g}_{{Q}_{1}}^{- 1} \left(ct{′}_{{Q}_{1}},ct{′}_{{Q}_{2}}\right) = \left({\left[a\right]}_{{Q}_{1}},{NTT}_{{Q}_{1}}\left({INTT}_{{Q}_{2}}\left({\left[a\right]}_{{Q}_{2}}\right)\right),{\left[b\right]}_{{Q}_{1}},{NTT}_{{Q}_{1}}\left({INTT}_{{Q}_{2}}\left({\left[b\right]}_{{Q}_{2}}\right)\right)\right) ∈ {R}_{{Q}_{1}}^{4} ;$ and ${g}_{{Q}_{2}}^{- 1} \left(ct{′}_{{Q}_{1}},ct{′}_{{Q}_{2}}\right) = \left({NTT}_{{Q}_{2}}\left({INTT}_{{Q}_{1}}\left({\left[a\right]}_{{Q}_{1}}\right)\right),{\left[a\right]}_{{Q}_{2}},{NTT}_{{Q}_{2}}\left({INTT}_{{Q}_{1}}\left({\left[b\right]}_{{Q}_{1}}\right)\right),{\left[b\right]}_{{Q}_{2}}\right) ∈ {R}_{{Q}_{2}}^{4} ;$

For the foregoing decomposition operation ( ${g}_{{Q}_{k}}^{- 1}$*,* where *k* = 1,2), when RNS decomposition and a complement of the ciphertext modulus *Qₖ* are calculated, NTT and INTT need to be performed only on a ciphertext of another modulus other than *Qₖ,* and ciphertexts with the modulus *Qₖ* are directly stored. Therefore, compared with directly calculating an external product in each RNS ring, this manner can reduce a total quantity of NTT or INTT operations. In addition, a new decomposition function is designed in this application. The decomposition function is essentially a combination function that includes NTT and INTT processing. Therefore, for two ciphertexts, two consecutive INTT transforms and NTT transforms can be implemented. This is equivalent to that in algorithm implementation or program implementation, INTT and INTT can be implemented at one time by invoking the new decomposition function in embodiments of this application, and there is no need to invoke two functions (that is, a function for implementing INTT and a function for implementing NTT). In this way, time for invoking a function can be shortened.

The following describes in detail and compares two implementations based on RNN decomposition and blind rotation in the solution shown in FIG. 6B in this embodiment of this application.

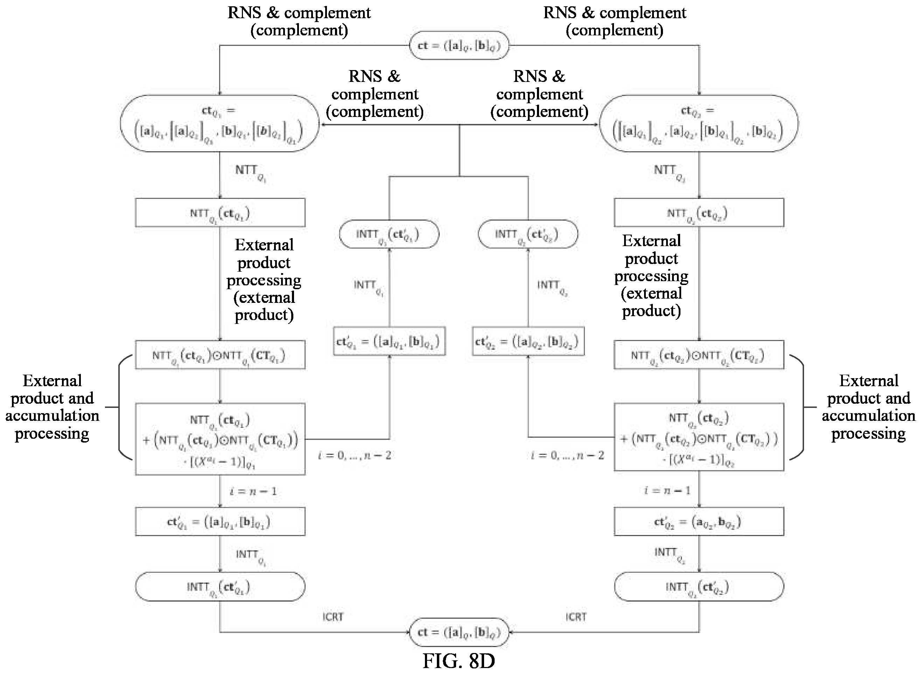

**Implementation 1**: Using an example in which a first ciphertext is an RLWE ciphertext, FIG. 8D shows a process of direct RNS decomposition and blind rotation processing. As shown in FIG. 8D, the process includes the following steps:
**Step 1**: For an RLWE ciphertext ***ct** =* (***a**, **b***), a modulus of the RLWE ciphertext is *Q = Q*₁ * *Q*₂; and RNS decomposition processing is performed on the RLWE ciphertext to obtain an RNS decomposition result and a complement (RNS & complement), that is, *ct_{Q1}* and *ct_{Q2}* in FIG. 8D.
$c {t}_{{Q}_{1}} = \left({\left[a\right]}_{{Q}_{1}}, {\left[{\left[a\right]}_{{Q}_{2}}\right]}_{{Q}_{1}}, {\left[b\right]}_{{Q}_{1}}, {\left[{\left[b\right]}_{{Q}_{2}}\right]}_{{Q}_{1}}\right) ∈ {R}_{{Q}_{1}}^{4}$*.* It can be learned that *ct_{Q1}* includes a ciphertext component whose modulus is Q₁ and a ciphertext component related to a complementary modulus Q₂ of *Q*₁.$c {t}_{{Q}_{2}} = \left({\left[{\left[a\right]}_{{Q}_{1}}\right]}_{{Q}_{2}}, {\left[a\right]}_{{Q}_{2}}, {\left[{\left[b\right]}_{{Q}_{1}}\right]}_{{Q}_{2}}, {\left[b\right]}_{{Q}_{2}}\right) ∈ {R}_{{Q}_{2}}^{4}$*.* It can be learnedthat *ct_{Q2}* includes a ciphertext component whose modulus is *Q*₂ and a ciphertext component related to a complementary modulus *Q*₁ of *Q*₂.

Step 2: Separately perform NTT processing on *ct_{Q1}* and *ct_{Q2},* to obtain NTT_{*Q*1}(*ct*_{*Q*1}) and *NTT_{Q2}*(*ct*_{*Q*2})*.*

The NTT processing includes modulo processing (including shift processing and a logical operation) in embodiments of this application. To be specific, in modulo processing included in NTT processing on *ct_{Q1},* a quantity of bits shifted in shift processing is related to exponents of *n* powers of 2 in a corresponding modulus *Q*₁, and a quantity of times of the logical operation processing is related to a value of the terms *n* of the powers of 2 in *Q*₁. In modulo processing included in NTT processing on *ct_{Q2},* a quantity of bits shifted in shift processing is related to exponents of *n* powers of 2 in a corresponding modulus *Q*₂, and a quantity of times of the logical operation processing is related to a value of the terms *n* of the powers of 2 in *Q*₂.

**Step 3**: Separately perform processing such as corresponding external product and accumulation based on NTT_{*Q*1}(ct_{*Q*1}) and NTT_{*Q*2} (*ct_{Q2}*)*,* to obtain corresponding processing results, that is, *ct'*_{*Q*1} and *ct'*_{*Q*2}*.*

**Step 4**: Separately perform INTT processing on processing results (*ct'*_{*Q*1} and *ct*'_{*Q*2})*,* to obtain INTT_{*Q*1}(ct'_{*Q*1}) and INTT_{*Q*2} (ct'_{*Q*2}).

**Step 5:** Use INTT_{*Q*1}(ct'_{*Q*1}) and INTT_{*Q*2} (*ct*'_{*Q*2}) as new inputs, and repeat step 1 to step 4 N-1 iterations.

After INTT processing is performed on results obtained by performing a last time (i=n-1) of external product and accumulation processing, INTT_{*Q*1}(ct'_{*Q*1}) and INTT_{*Q*2}(*ct'*_{*Q*2}) are obtained. The following step 6 is performed based on INTT_{*Q*1}(ct'_{*Q*1}) and INTT_{*Q*2}(*ct'*_{*Q*2}).

**Step 6:** Based on INTT_{*Q*1}(*ct*'_{*Q*1}) and INTT_{*Q*2}(*ct'*_{*Q*2}), obtain a final result ***ct** =* ([***a***]*_{Q}*, [***b***]*_{Q}*)according to an ICRT method.

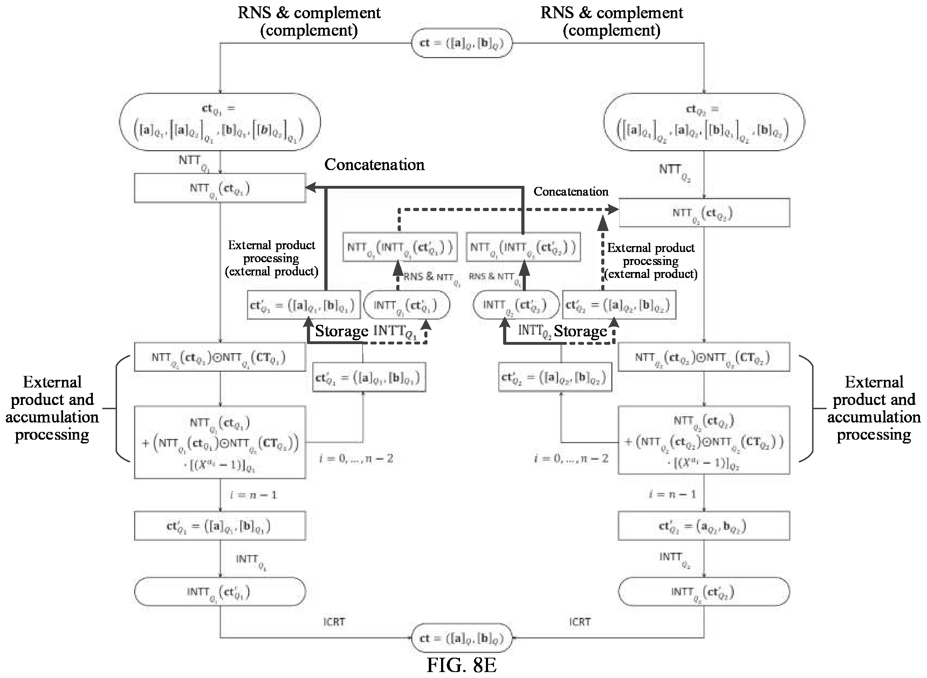

**Implementation 2:** Using an example in which a first ciphertext is an RLWE ciphertext, FIG. 8E shows an RNS decomposition and blind rotation processing process without NTT and INTT. As shown in FIG. 8E, the process includes the following steps:
**Step** 1: For an RLWE ciphertext ***ct** =* (***a**, **b***), a modulus of the RLWE ciphertext is *Q = Q*₁ ** Q*₂; and RNS decomposition processing is performed on the RLWE ciphertext to obtain an RNS decomposition result and a complement (RNS & complement), that is, *ct_{Q1}* and *ct_{Q2}* in FIG. 8D.
$c {t}_{{Q}_{1}} = \left({\left[a\right]}_{{Q}_{1}}, {\left[{\left[a\right]}_{{Q}_{2}}\right]}_{{Q}_{1}}, {\left[b\right]}_{{Q}_{1}}, {\left[{\left[b\right]}_{{Q}_{2}}\right]}_{{Q}_{1}}\right) ∈ {R}_{{Q}_{1}}^{4}$. It can be learned that *ct*_{*Q*1} includes a ciphertext component whose modulus is *Q*₁ and a ciphertext component related to a complementary modulus *Q*₂ of *Q*₁.$c {t}_{{Q}_{2}} = \left({\left[{\left[a\right]}_{{Q}_{1}}\right]}_{{Q}_{2}}, {\left[a\right]}_{{Q}_{2}}, {\left[{\left[b\right]}_{{Q}_{1}}\right]}_{{Q}_{2}}, {\left[b\right]}_{{Q}_{2}}\right) ∈ {R}_{{Q}_{2}}^{4}$*.* It can be learned that *ct_{Q2}* includes a ciphertext component whose modulus is *Q*₂ and a ciphertext component related to a complementary modulus *Q*₁ of *Q*₂.

**Step 2:** Separately perform NTT processing on *ct_{Q1}* and *ct*_{*Q*2}, to obtain NTT_{*Q*1}(*ct*_{*Q*1}) and NTT_{*Q*2}(*ct*_{*Q*2}).

The NTT processing includes modulo processing (including shift processing and a logical operation) in embodiments of this application. To be specific, in modulo processing included in NTT processing on *ct_{Q1},* a quantity of bits shifted in shift processing is related to exponents of *n* powers of 2 in a corresponding modulus *Q*₁, and a quantity of times of the logical operation processing is related to a value of the terms *n* of the powers of 2 in *Q*₁. In modulo processing included in NTT processing on *ct_{Q2},* a quantity of bits shifted in shift processing is related to exponents of *n* powers of 2 in a corresponding modulus *Q*₂, and a quantity of times of the logical operation processing is related to a value of the terms *n* of the powers of 2 in *Q*₂.

**Step 3:** Separately perform corresponding external product and accumulation processing based on NTT_{*Q*1}(*ct_{Q1}*) and NTT_{*Q*2}(*ct*_{*Q*2})*,* to obtain corresponding processing results, that is, *ct'*_{*Q*1} and *ct'*_{*Q*2}*.* $ct {′}_{{Q}_{1}} = \left({\left[a\right]}_{{Q}_{1}}, {\left[b\right]}_{{Q}_{1}}\right) ;$ and $ct {′}_{{Q}_{2}} = \left({\left[a\right]}_{{Q}_{2}}, {\left[b\right]}_{{Q}_{2}}\right) .$

**Step 4:** Concatenate *ct'_{Q1}* and NTT_{*Q*1}(INTT_{*Q*2}(ct'_{*Q*2})) to obtain NTT_{*Q*1}(ct_{*Q*1}) (which may also be implemented by using a combined single function ${g}_{{Q}_{1}}^{- 1} \left(ct{′}_{{Q}_{1}},ct{′}_{{Q}_{2}}\right)$ (refer to a process indicated by a bold black line in the upper left part of FIG. 8E)); and concatenate ***ct**'*_{*Q*2} and NTT_{*Q*2}(INTT_{*Q*1} (*ct'*_{*Q*1})) to obtain NTT_{*Q*2} (*ct*_{*Q*2}) (which may also be implemented by using a combined single function ${g}_{{Q}_{2}}^{- 1} \left(ct{′}_{{Q}_{1}},ct{′}_{{Q}_{2}}\right)$, referring to a process indicated by a bold dashed line in the upper right part of FIG. 8E)).

NTT_{*Q*1}(INTT_{*Q*2}(*ct'*_{*Q*2})) is obtained by performing INTT_{*Q*2} processing and NTT_{*Q*1} processing on *ct'*_{*Q*2}. NTT_{*Q*2}(INTT_{*Q*1}(*ct'*_{*Q*1})) is obtained by performing INTT_{*Q*1} processing and NTT_{*Q*2} processing on *ct'*_{*Q*1}.

NTT_{*Q*1}(ct_{*Q*1}) and NTT_{*Q*2} (ct_{*Q*2}) obtained in step 4 are used as new inputs, and step 3 and step 4 are repeated N-2 times. That is, a result obtained in step 4 in each iteration is used as an input of step 3 in a next iteration. An i^{th} iteration is associated with or corresponds to the i^{th} item of the first ciphertext component of the initial input ciphertext and the i^{th} key component of the initial input ciphertext.

**Step 5:** After N-2 iterations, separately perform corresponding external product and accumulation processing based on NTT_{*Q*1}(ct_{*Q*1}) and NTT_{*Q*2}(*ct*_{*Q*2}) obtained through concatenation in step 4, to obtain corresponding processing results ***ct**'_{Q}* and ***ct**'_{Q2}*. That is, a last time of external product and accumulation processing is performed.

**Step 6:** Separately perform INTT processing on the results ***ct**'*_{*Q*1} and ***ct**'_{Q2}* obtained through the last time of external product and accumulation processing, to obtain INTT_{*Q*1}(***ct**'*_{*Q*1}) and INTT_{*Q*2}(ct'_{*Q*2}).

**Step 7:** Based on INTT_{*Q*1}(ct'_{*Q*1}) and INTT_{*Q*2} (*ct'*_{*Q*2})*,* obtain a final result ***ct** =* ([***a***]*_{Q},* [***b***]*_{Q}*) according to an ICRT method.

Compared with Implementation 1 shown in FIG. 8D, in Implementation 2, an input of the external product and accumulation processing is obtained without performing a complete decomposition operation, but a ciphertext *ct'*_{*Q*1} whose modulus is *Q*₁ is directly stored, and is concatenated with NTT_{*Q*1}(INTT_{*Q*2}(*ct'*_{*Q*2})) (that is, the example of the first ciphertext component in the solution in FIG. 6B), to obtain NTT_{*Q*1}(ct_{*Q*1}). Therefore, two consecutive times of NTT or INTT computation can be saved. Similarly, a ciphertext *ct'_{Q2}* whose modulus is *Q*₂ is directly stored, and is concatenated with NTT_{*Q*2}(INTT_{*Q*1}(ct'_{*Q*1})), to obtain NTT_{*Q*2} (*ct*_{*Q*2})*.* Therefore, two consecutive NTTs or INTTs can also be saved. Compared with the procedure shown in FIG. 8D, it can be learned that four NTTs or INTTs can be saved in total in Implementation 2 shown in FIG. 8E.

Therefore, if *d* ciphertexts (the d sixth ciphertexts in the solution in FIG. 6B) obtained by decomposing the RLWE ciphertext are performed in Implementation 2, *d* * 2 times of NTT or INTT computation can be saved in total.

In Embodiment 3, in the RNS decomposition phase, a quantity of NTTs is not reduced. However, compared with blind rotation using digit decomposition, in this embodiment of this application, a smaller data amount (a smaller modulus) is used, so that a parallel execution degree is improved, and operation efficiency can also be improved. In addition, a combination processing method or a new decomposition function ${g}_{{Q}_{k}}^{- 1}$ is designed to save an NTT result, which can avoid performing INTT and NTT operations on all polynomials in each external product loop.

### Embodiment 4

In Embodiment 4, a key, a parameter, and performance analysis in this embodiment of this application are described in detail.

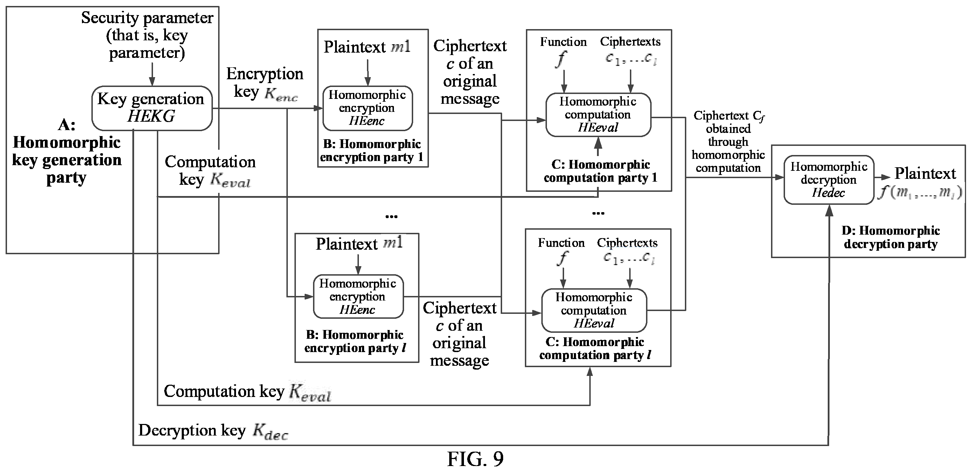

FIG. 9 is a diagram of a homomorphic computation scenario to which a method according to an embodiment of this application may be applied, and a key and a parameter interaction process in the homomorphic computation scenario. A specific procedure may include the following steps:
Step 1: A homomorphic key generator generates a homomorphic key and a homomorphic scheme parameter of a homomorphic task.

The homomorphic scheme parameter may include: a dimension of LWE of each level level, a ciphertext modulus Q, a base of gadget decomposition during bootstrapping external product operation, a length of gadget decomposition during external product operation, a base of gadget decomposition during key switching, a length of gadget decomposition during key switching, and the like.

The ciphertext modulus Q may be a prime modulus obtained by accumulating, over n terms, products of different powers of 2 and coefficients, or a composite modulus obtained by multiplying d different prime numbers, where each prime number is obtained by accumulating, over n terms, products of different powers of 2 and coefficient.

The homomorphic key may include: a homomorphic encryption key, a homomorphic decryption key, a homomorphic computation key (including but not limited to a scheme switching key, a key switching key, a bootstrapping key, an automorphism key, an auxiliary key), and the like.

Step 2: The homomorphic key generation party A broadcasts the homomorphic scheme parameter to a homomorphic encryption party B, a homomorphic computation party C, and a homomorphic decryption party D, and the homomorphic key generator A further delivers the homomorphic encryption key to the homomorphic encryption party B, delivers the homomorphic computation key to the homomorphic computation party C, and delivers the homomorphic decryption key to the homomorphic decryption party D.

Step 3: The homomorphic encryption party B performs homomorphic encryption on plaintext data based on the homomorphic scheme parameter and the homomorphic encryption key to obtain a homomorphic ciphertext, and then sends the homomorphic ciphertext to the homomorphic computation party C.

Step 4: The homomorphic computation party C performs homomorphic computation on the homomorphic ciphertext based on the homomorphic scheme parameter, the homomorphic computation key, and the homomorphic ciphertext, and sends a ciphertext of a homomorphic computation result to the homomorphic decryption party D.

Step 5: The homomorphic decryption party D performs a homomorphic decryption algorithm on the ciphertext of the homomorphic computation result based on the homomorphic scheme parameter and the homomorphic decryption key, to obtain a plaintext result.

Optionally, the homomorphic decryption party D may further directly obtain a homomorphic ciphertext from the homomorphic encryption party B, and then perform a homomorphic decryption algorithm on the homomorphic ciphertext based on the homomorphic decryption key, to obtain a plaintext result.

The method provided in this embodiment of this application may be applied to the homomorphic computation party. It can be learned from the procedure in the homomorphic computation scenario shown in FIG. 9 that, before the homomorphic computation party performs homomorphic computation, the homomorphic key generation party should send a homomorphic computation key to the homomorphic computation party. In addition, because the homomorphic computation key is generated by the homomorphic key generation party based on corresponding parameters, the homomorphic key generation party further needs to transmit the parameters of the homomorphic computation key to the homomorphic computation party, so that the homomorphic computation party sets the parameters of the homomorphic computation key to be consistent with values on the key generation party side.

In this application, the solutions in the foregoing several embodiments may be separately performed, and all or some of the solutions in the foregoing several embodiments may be used in combination. This is not limited herein.

In the foregoing embodiments provided in this application, the methods provided in embodiments of this application are separately described from a perspective of interaction between devices. To implement functions in the methods provided in embodiments of this application, a first apparatus may include a hardware structure and/or a software module, and implement the foregoing functions in a form of the hardware structure, the software module, or a combination of the hardware structure and the software module. For the functions, whether a function is performed by using the hardware structure, the software module, or the combination of the hardware structure and the software module depends on particular application and design constraints of the technical solutions.

In this embodiment of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

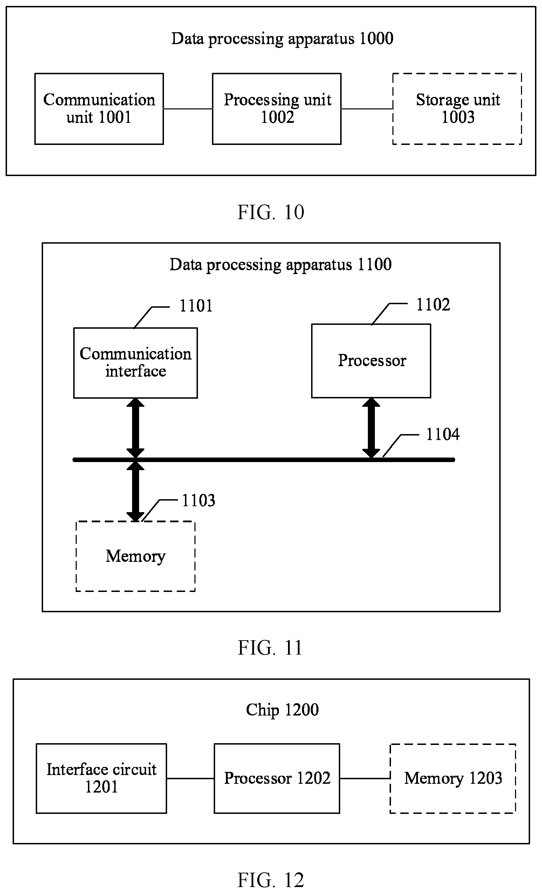

Same as the foregoing concept, as shown in FIG. 10, an embodiment of this application further provides a data processing apparatus 1000, configured to implement a function of a homomorphic computation device (a homomorphic computation party) in the foregoing method. For example, the data processing apparatus 1000 may be a software module or a chip system. In this embodiment of this application, the chip system may include a chip, or may include the chip and another discrete component. The data processing apparatus 1000 may include a communication unit 1001 and a processing unit 1002.

In this embodiment of this application, the communication unit 1001 may also be referred to as a transceiver unit, and may include a sending unit and/or a receiving unit, which are respectively configured to perform sending and receiving steps of the network device or the terminal device in the foregoing method embodiments. The processing unit 1002 may be configured to read instructions and/or data in a storage module, to enable the data processing apparatus 1000 to implement the foregoing method embodiments.

Optionally, the data processing apparatus 1000 may further include a storage unit 1003. The storage unit 1003 is equivalent to a storage module, and may be configured to store the instructions and/or the data.

Data processing apparatuses provided in embodiments of this application are described below in detail with reference to FIG. 10 and FIG. 11. It should be understood that descriptions of apparatus embodiments correspond to descriptions of method embodiments. Therefore, for content that is not described in detail, refer to the foregoing method embodiments in FIG. 6A and FIG. 6B. For brevity, details are not described herein again.

The communication unit 1001 may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1001 and that is configured to implement a receiving function may be considered as a receiving unit, and a component that is in the communication unit 1001 and that is configured to implement a sending function may be considered as a sending unit. That is, the communication unit 1001 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receiver circuit, or the like. The sending unit may also be sometimes referred to as a transmitter machine, a transmitter, a transmit circuit, or the like.

When the data processing apparatus 1000 executes the first apparatus in the procedure shown in FIG. 6A in the foregoing embodiment, the communication unit 1001 is configured to communicate with another apparatus. The processing unit 1002 is configured to determine a ciphertext modulus of homomorphic encryption, where the ciphertext modulus is a prime number obtained by accumulating, over *n* terms, products of different powers of 2 and coefficients, and *n* is an integer greater than or equal to 2 and less than or equal to 5. The processing unit 1002 is further configured to perform homomorphic processing based on the ciphertext modulus, where the homomorphic processing includes at least one of homomorphic encryption, homomorphic decryption, and homomorphic computation.

When the data processing apparatus 1000 executes the first apparatus in the procedure shown in FIG. 6B in the foregoing embodiment, the communication unit 1001 is configured to communicate with another apparatus. The processing unit 1002 is configured to determine a ciphertext modulus of homomorphic encryption, where the ciphertext modulus is a composite number obtained as a product of d different prime numbers, each prime number is obtained by accumulating, over *n* terms, products of different powers of 2 and coefficients, *n* is an integer greater than or equal to 2 and less than or equal to 5, and *d* is an integer greater than 1. The processing unit 1002 is further configured to perform homomorphic processing based on the ciphertext modulus, where the homomorphic processing includes at least one of homomorphic encryption, homomorphic decryption, and homomorphic computation.

The foregoing is merely an example. The processing unit 1002 and the communication unit 1001 may further perform other functions. For more detailed descriptions, refer to the related descriptions in the method embodiments shown in FIG. 6A and FIG. 6B. Details are not described herein.

FIG. 11 shows a data processing apparatus 1100 according to an embodiment of this application. The data processing apparatus shown in FIG. 11 may be an implementation of a hardware circuit of the data processing apparatus shown in FIG. 11. The data processing apparatus 1100 may be applicable to the flowchart shown above, and execute a function of a homomorphic computation device (a homomorphic computation party) in the foregoing method embodiment. For ease of description, FIG. 11 shows only main components of the data processing apparatus.

As shown in FIG. 11, a data processing apparatus 1100 includes a communication interface 1101 and a processor 1102. The communication interface 1101 and the processor 1102 are coupled to each other. It may be understood that the communication interface 1101 may be a transceiver or an input/output interface, or may be an interface circuit like a transceiver circuit. Optionally, the data processing apparatus 1100 may further include a memory 1103, configured to store instructions executed by the processor 1102, input data needed by the processor 1102 to run instructions, or data generated after the processor 1102 runs instructions.

When the data processing apparatus 1100 is configured to implement the methods shown in FIG. 6A and FIG. 6B, the processor 1102 is configured to implement a function of the processing unit 1002, and the communication interface 1101 is configured to implement a function of the receiving unit and/or the sending unit.

This embodiment of this application does not limit a specific connection medium between the communication interface 1101, the processor 1102, and the memory 1103. In this embodiment of this application, the memory 1103, the processor 1102, and the communication interface 1101 are connected to each other through a communication bus 1104 in FIG. 11. The communication bus 1104 is represented by a bold line in FIG. 11. A connection manner between other components is merely an example for description, and is not limited thereto. The communication bus 1104 may be classified into an address bus, a data bus, a control bus, and the like. For ease of representation, only one bold line is used to represent the bus in FIG. 11, but this does not mean that there is only one bus or only one type of bus.

When the data processing apparatus is a chip, FIG. 12 is a diagram of a simplified apparatus structure of the chip. The chip 1200 includes an interface circuit 1201 and one or more processors 1202. Optionally, the chip 1200 may further include a bus.

The processor 1202 may be an integrated circuit chip and has a signal processing capability. In an implementation process, the steps in the foregoing methods may be completed by using an integrated logic circuit of hardware in the processor 1202 or by using instructions in a form of software. The processor 1202 may be a general-purpose processor, a digital signal processor (DSP), an application-specific integrated circuit (ASIC), a field programmable gate array (FPGA) or another programmable logic device, a discrete gate or transistor logic device, or a discrete hardware component, and the processor 1202 may implement or perform the methods and steps that are disclosed in embodiments of this application. The general-purpose processor may be a microprocessor, or the processor may be any conventional processor or the like.

The interface circuit 1201 may be configured to send or receive data, instructions, or information. The processor 1202 may process the data, the instructions, or other information received through the interface circuit 1201, and may send processed information through the interface circuit 1201.

Optionally, the chip further includes a memory 1203. The memory 1203 may include a read-only memory and a random access memory, and provide operation instructions and data for the processor. A part of the memory 1203 may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the chip may be used in the homomorphic computation device in embodiments of this application. Optionally, the interface circuit 1201 may be configured to output an execution result of the processor 1202. For the data processing method provided in one or more embodiments of this application, refer to the foregoing embodiments. Details are not described herein again.

It should be noted that functions respectively corresponding to the interface circuit 1201 and the processor 1202 may be implemented by using a hardware design, may be implemented by using a software design, or may be implemented by using a combination of software and hardware. This is not limited herein.

An embodiment of this application further provides a computer-readable storage medium. The computer-readable storage medium stores computer instructions used to implement the method performed by the first apparatus in the foregoing method embodiments.

For example, when the computer program is executed by a computer, the computer is caused to implement the method performed by the first apparatus in the foregoing method embodiments.

An embodiment of this application further provides a computer program product including instructions. When the instructions are executed by a computer, the computer is caused to implement the method performed by the first apparatus in the foregoing method embodiments.

An embodiment of this application further provides a chip including a processor. The processor is configured to invoke a computer program or computer instructions stored in a memory, so that the processor performs the data processing methods in the embodiment shown in FIG. 6A and FIG. 6B.

In a possible implementation, an input of the chip corresponds to a receiving operation in the embodiments shown in FIG. 6A and FIG. 6B, and an output of the chip corresponds to a sending operation in the embodiments shown in FIG. 6A and FIG. 6B.

Optionally, the processor is coupled to the memory through an interface.

Optionally, the chip further includes the memory, and the memory stores the computer program or the computer instructions.

The processor mentioned above at any location may be a general central processing unit, a microprocessor, an application-specific integrated circuit (application-specific integrated circuit, ASIC), or one or more integrated circuits configured to control program execution of the data processing methods in the embodiments shown in FIG. 6A and FIG. 6B. The memory mentioned above at any location may be a read-only memory (read-only memory, ROM), another type of static storage device that can store static information and instructions, a random access memory (random access memory, RAM), or the like.

It should be noted that for ease and brevity of description, for explanations and beneficial effect of related content of any one of the data processing apparatuses provided above, refer to the corresponding data processing method embodiments provided above. Details are not described herein again.

In this application, a hardware layer, an operating system layer running above the hardware layer, and an application layer running above the operating system layer may be further included between data processing apparatuses. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware or a combination thereof. When this application is implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital versatile disc (digital video disc, DVD), a floppy disk, and a Blu-ray disc. The disk usually copies data through a magnetic means, and the disc copies data optically through a laser means. The foregoing combination shall also be included in the protection scope of the computer-readable medium.

In conclusion, the foregoing descriptions are merely embodiments of this application and are not intended to limit the protection scope of this application. Any modification, equivalent substitution, and improvement made based on the disclosure of this application shall fall within the protection scope of this application.

## Claims

1. A data processing method, wherein the method comprises:
determining a ciphertext modulus of homomorphic encryption, wherein the ciphertext modulus is a prime number obtained by accumulating, over n terms, products of different powers of 2 and coefficients, and n is an integer greater than or equal to 2 and less than or equal to 5; and
performing homomorphic processing based on the ciphertext modulus, wherein the homomorphic processing comprises at least one of homomorphic encryption, homomorphic decryption, and homomorphic computation.

2. The method according to claim 1, wherein the ciphertext modulus satisfies the following form: $Q = {a}_{1} ∗ {2}^{{k}_{1}} + ⋯ + {a}_{i} ∗ {2}^{{k}_{i}} + {a}_{n} ∗ {2}^{{k}_{n}}$ Q represents the ciphertext modulus, exponents *kᵢ* of different powers of 2 in first n-1 terms are integers greater than 0 and less than or equal to *m* (*m* ≥ *k*₁ *>* ··· *kᵢ > k*_{*n*-1} > 0), an exponent *kₙ* of a power of 2 in an n^{th} term is 0 (*kₙ* = 0), *m* represents a bit width of the ciphertext modulus *Q*, the coefficient *aᵢ* is +1 or -1, and *i* is an integer greater than or equal to 1 and less than or equal to *n.*

3. The method according to claim 2, wherein when n is 3, the ciphertext modulus satisfies the following form: *2*^{*k*1} ± 2^{*k*2} ± 2⁰, and both *k*₁ and *k*₂ are integers greater than 0 and less than or equal to *m.*

4. The method according to claim 2, wherein when *n* is 2, the ciphertext modulus satisfies the following form: *2*^{*k*1} ± 2⁰, and *k*₁ is an integer greater than 0 and less than or equal to *m.*

5. The method according to any one of claims 1 to 4, wherein the homomorphic encryption, the homomorphic decryption, and the homomorphic computation each comprise modulo processing; and
the performing homomorphic processing based on the ciphertext modulus comprises: performing modulo processing based on the ciphertext modulus, wherein the modulo processing comprises shift processing and/or logical operation processing, a quantity of bits shifted in the shift processing is related to exponents of *n* powers of 2 in the ciphertext modulus, and a quantity of times of the logical operation processing is related to a value of *n.*

6. The method according to claim 5, wherein the method further comprises:
performing at least one number theoretic transform NTT based on the modulo processing.

7. The method according to claim 6, wherein one NTT comprises M butterfly operations, and M is an integer greater than or equal to 3; and the performing the number theoretic transform NTT based on the modulo processing comprises: performing the modulo processing once after every three butterfly operations; and performing a modulo operation on each multiplication result in each butterfly operation by using a modular exponentiation algorithm.

8. A data processing method, wherein the method comprises:
determining a ciphertext modulus of homomorphic encryption, wherein the ciphertext modulus is a composite number obtained as a product of *d* different prime numbers, each prime number is obtained by accumulating, over *n* terms, products of different powers of 2 and coefficients, *n* is an integer greater than or equal to 2 and less than or equal to 5, and *d* is an integer greater than 1; and
performing homomorphic processing based on the ciphertext modulus, wherein the homomorphic processing comprises at least one of homomorphic encryption, homomorphic decryption, and homomorphic computation.

9. The method according to claim 8, wherein the ciphertext modulus satisfies the following form: $Q = {\prod }_{j = 1}^{d} {Q}_{j}$
*Q* represents the ciphertext modulus, *d* represents a quantity of prime numbers *Qⱼ* multiplied to obtain the ciphertext modulus, and the prime number *Qⱼ* satisfies the following form: ${Q}_{j} = {a}_{j 1} ∗ {2}^{{k}_{j 1}} + ⋯ + {a}_{ji} ∗ {2}^{{k}_{ji}} + {a}_{jn} ∗ {2}^{{k}_{jn}}$
an exponent *kⱼᵢ* of a power of 2 in the prime number *Qⱼ* is an integer greater than 0 and less than or equal to *mⱼ (mⱼ* ≥ *kⱼ₁ >* ··· *kⱼᵢ > k*_{*j*(*n*-1)} *> kⱼₙ =* 0), *mⱼ* represents a bit width of *Qⱼ,* and a coefficient *aᵢ* is +1 or -1.

10. The method according to claim 8 or 9, wherein when homomorphic encryption is performed based on the ciphertext modulus, the method comprises:
performing homomorphic encryption on a 2^{nd} ciphertext component of an initial input ciphertext based on the ciphertext modulus, to obtain a first ciphertext, wherein the first ciphertext is an RLWE ciphertext, the initial input ciphertext comprises a first ciphertext component and the second ciphertext component, the first ciphertext component comprises N items, and N is a positive integer; and
performing blind rotation processing on the first ciphertext based on optimized number theoretic transform NTT processing and a decomposition method, to obtain a second ciphertext.

11. The method according to claim 10, wherein the performing blind rotation processing on the first ciphertext based on the optimized number theoretic transform NTT processing and the decomposition method, to obtain the second ciphertext comprises:
iteratively performing N blind rotation sub-operations based on the optimized number theoretic transform NTT processing, the decomposition method, and the first ciphertext, to obtain the second ciphertext, wherein N is an integer greater than 1, and each blind rotation sub-operation is performed based on an output ciphertext of a previous blind rotation sub-operation, wherein
for an i^{th} blind rotation sub-operation, *i* ∈ [1, N], and that the i^{th} blind rotation sub-operation is associated with an i^{th} item of the first ciphertext component of the initial input ciphertext and an i^{th} key component of the initial input ciphertext comprises the following:
decomposing a current ciphertext based on the decomposition method to obtain *d* third ciphertexts, wherein moduli of the *d* third ciphertexts are in one-to-one correspondence with the *d* different prime numbers, a *j*^{th} third ciphertext comprises a ciphertext component obtained through decomposition based on a modulus *Qⱼ* and a ciphertext component obtained through decomposition based on another modulus *Qₖ, Qₖ* ≠ *Qⱼ, j, k* ∈ [1, *d*], and the current ciphertext is the first ciphertext or an output ciphertext of a previous blind rotation sub-operation;
using the *d* third ciphertexts as initial values of *d* accumulators;
performing optimized number theoretic transform NTT processing on the initial values of the *d* accumulators to obtain transfer values of the *d* accumulators, wherein the optimized number theoretic transform NTT comprises modulo processing, and the modulo processing comprises shift processing and/or logical operation processing, wherein for the modulo processing comprised in the NTT processing on an initial value of a *j*^{th} accumulator, a quantity of bits shifted in the shift processing is related to exponents of *n* powers of 2 in a corresponding *j*^{th} prime modulus *Qⱼ,* and a quantity of times of the logical operation processing is related to a value of the terms n of the powers of 2 in the *j*^{th} prime modulus *Qⱼ;*
separately performing corresponding external product and accumulation processing based on the transfer values of the *d* accumulators, to obtain external product values of the *d* accumulators;
separately performing INTT processing on the external product values of the *d* accumulators, to obtain updated values of the *d* accumulators; and
processing the updated values of the *d* accumulators through inverse transform in the decomposition method, to obtain an output ciphertext, wherein the output ciphertext is used for a next blind rotation sub-operation.

12. The method according to claim 10, wherein the performing blind rotation processing on the first ciphertext based on the optimized number theoretic transform NTT processing and the decomposition method, to obtain the second ciphertext comprises:
decomposing the current first ciphertext based on the decomposition method to obtain *d* third ciphertexts, wherein moduli of the *d* third ciphertexts are in one-to-one correspondence with the *d* different prime numbers, a *j*^{th} third ciphertext comprises a ciphertext component obtained through decomposition based on a modulus *Qⱼ* and a ciphertext component obtained through decomposition based on another modulus *Qₖ, Qₖ* ≠ *Qⱼ,* and *j, k* ∈ [1,*d*];
separately performing optimized NTT processing on the *d* third ciphertexts to obtain *d* fourth ciphertexts, wherein the optimized number theoretic transform NTT processing comprises modulo processing, and the modulo processing comprises shift processing and/or logical operation processing, wherein for the modulo processing comprised in the NTT processing on the j^{th} third ciphertext, a quantity of bits shifted in the shift processing is related to exponents of *n* powers of 2 in a corresponding j^{th} prime modulus *Qⱼ,* and a quantity of times of the logical operation processing is related to a value of the terms *n* of the powers of 2 in the j^{th} prime modulus *Qⱼ;*
using the *d* fourth ciphertexts as initial values of *d* accumulators;
performing N-1 times of CMUX gate processing and ciphertext combination processing based on the initial values of the *d* accumulators, to obtain updated values of the *d* accumulators, wherein N is an integer greater than 1, and each time of CMUX gate processing and ciphertext combination processing is performed based on an output ciphertext of a previous time of CMUX gate processing and ciphertext combination processing;
performing both CMUX gate processing and inverse number theoretic transform INTT processing once on each of the updated values of the *d* accumulators, to obtain *d* target ciphertexts; and
obtaining the second ciphertext based on the *d* target ciphertexts according to an inverse method of the decomposition method.

13. The method according to claim 12, wherein the performing N-1 times of CMUX gate processing and ciphertext combination processing based on the initial values of the *d* accumulators, to obtain the updated values of the *d* accumulators comprises:
performing an i^{th} time of CMUX gate processing and ciphertext combination processing, wherein the i^{th} time of CMUX gate processing and ciphertext combination processing is associated with or corresponds to an i^{th} item of the first ciphertext component of the initial input ciphertext and an i^{th} key component of the initial input ciphertext, *i* ∈ [1, N - 1], and comprises:
separately performing corresponding external product and accumulation processing based on the current values of the *d* accumulators, to obtain external product values of the *d* accumulators; and
determining *d* combination ciphertexts based on the current external product values of the *d* accumulators, wherein the *d* combination ciphertexts are used for a next time of CMUX gate processing and ciphertext combination processing; and determining a *j*^{th} combination ciphertext based on an external product value of a *j*^{th} accumulator comprises: re-permuting and combining the external product value of the *j*^{th} accumulator and a ciphertext component of a *k*^{th} accumulator to obtain the *j*^{th} combination ciphertext, wherein *k* ≠ *j*, and the ciphertext component of the k^{th} accumulator is obtained by performing INTT processing under a modulus *Qₖ* and NTT processing under a modulus *Qⱼ* based on an external product value of the *k*^{th} accumulator.

14. The method according to any one of claims 10 to 13, wherein the decomposition method is any one of the following:
residue number system RNS decomposition, digit decomposition, and gadget decomposition.

15. A data processing apparatus, comprising a module or a unit configured to perform the method according to any one of claims 1 to 7 or a module or a unit configured to perform the method according to any one of claims 8 to 14.

16. A data processing apparatus, comprising a processor, wherein the processor is coupled to a memory, the memory stores a computer program, and the processor is configured to invoke the computer program in the memory, to cause the apparatus to perform the method according to any one of claims 1 to 7, or cause the apparatus to perform the method according to any one of claims 8 to 14.

17. A data processing apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 7 via a logic circuit or by executing code instructions, or the processor is configured to implement the method according to any one of claims 8 to 14 via a logic circuit or by executing code instructions.

18. A computer-readable storage medium, wherein the storage medium stores a computer program or instructions; and when the computer program or the instructions are executed by a computer, the method according to any one of claims 1 to 14 is implemented.

19. A computer program product, wherein when a computer reads and executes the computer program product, the computer is caused to perform the method according to any one of claims 1 to 14.

20. A communication system, comprising at least one of a homomorphic encryption party, a homomorphic computation party, and a homomorphic decryption party, wherein any one of the homomorphic encryption party, the homomorphic computation party, and the homomorphic decryption party is configured to perform the method according to any one of claims 1 to 14.
